# EUROPÄISCHE PATENTSCHRIFT

(11) **EP 1 115 469 B1**
(45) Veröffentlichungstag und Bekanntmachung des Hinweises auf die Patenterteilung: **15.10.2003**
(21) Anmeldenummer: 99947327.5
(22) Anmeldetag: 13.09.1999
(51) Int. Cl.: B01D 39/00, D21H 27/08, D21H 21/14, A23L 2/52, A23L 2/70, C02F 1/00, D21H 23/04

(54) **WIRKSTOFFHALTIGE FASERGEBILDE, VERFAHREN ZU DEREN HERSTELLUNG UND DEREN VERWENDUNG**
FIBROUS PRODUCTS CONTAINING ACTIVE SUBSTANCES, A METHOD FOR THE PRODUCTION THEREOF, AND USE OF THE SAME
STRUCTURES FIBREUSES CONTENANT DES SUBSTANCES ACTIVES, PROCEDE PERMETTANT DE LES PRODUIRE ET LEURES UTILISATION

(30) Priorität: 18.09.1998 DE 19842528; 18.11.1998 DE 19853158; 02.12.1998 DE 19855646; 04.02.1999 DE 19904670; 03.04.1999 DE 19915177; 16.04.1999 DE 19917399; 31.05.1999 DE 19924742; 09.06.1999 DE 19926180; 24.06.1999 DE 19928460; 05.07.1999 DE 19930764; 13.08.1999 DE 19937853; 22.08.1999 DE 19939901
(43) Veröffentlichungstag der Anmeldung: 18.07.2001
(73) Patentinhaber: Oeste, Franz-Dietrich, 35274 Kirchhain-Schönbach (DE); Haas, Rainer, Dr., 35037 Marburg (DE)
(72) Erfinder: Oeste, Franz-Dietrich, 35274 Kirchhain-Schönbach (DE); Haas, Rainer, Dr., 35037 Marburg (DE)
(74) Vertreter: Olbricht, Karl Heinrich, Dipl.-Phys.
(86) Internationale Anmeldenummer: EP9906755
(87) Internationale Veröffentlichungsnummer: WO00016877

(56) Entgegenhaltungen:
- EP-A- 0 380 228
- EP-A- 0 393 825
- DE-A- 2 403 971
- DE-A- 2 916 032
- DE-A- 4 005 794
- DE-A- 19 623 900
- DE-A- 19 652 697
- JP-A- 6 025 540
- US-A- 3 266 973
- US-A- 4 938 958
- US-A- 4 940 512
- US-A- 5 482 773
- US-A- 5 526 607
- US-A- 5 554 288

## Beschreibung

Die vorliegende Erfindung betrifft wirkstoffhaltige Fasergebilde, die sich insbesondere zur Behandlung von Wasser oder Nahrungsmitteln einsetzen lassen Verfahren zu deren Herstellung und deren Verwendung.

Die Behandlung von Wasser mit wirkstoffhaltigen Fasergebilden ist bekannt. In der DE-A-198 34 916 wird wirkstoffbeladenes Filterpapier fiir die Wasserreinigung und die Blattform vorgestellt. Dieses Material weist viele Vorteile auf, die durch die Faserstruktur des Papiers hervorgerufen werden. Es hat sich allerdings gezeigt, daß die Gebrauchseigenschaften der in dieser Schrift offenbarten Papiere noch verbessert werden sollten.

Nach der in dieser Schrift mitgeteilten Lehre zur Anwendung von Huminstoff als Wirkstoffbeladung soll dieser unter bestimmten Voraussetzungen nicht ausbluten, nämlich dann, wenn das Papier mit dem Vorimprägniermittel Säure oder Erdalkalisalz behandelt wird und als Fixiermittel Alkalihuminat eingesetzt wird. Versuche haben ergeben, daß die derart aufgebrachten Huminstoffschichten sehr ungleichförmig auf dem Papier verteilt sind. Die äußere Papierschicht wird dabei sehr dicht von dem ausgefällten Huminstoff bedeckt, das Innere des Papiers bleibt dabei praktisch frei von Huminstoff. Das führt dazu, daß die hydraulische Durchdringung des Papiers mit Fluiden erschwert wird und der Stoffaustausch behindert wird.

Ferner hat sich herausgestellt, daß unter Einsatz von Calciumsalz- oder Säure-Vorimprägnierlösungen hergestellte huminstoffbeladene Papiere teilweise ausbluten. So tritt zwar keine Braunfärbung der damit behandelten Lösung ein, aber in einer etwa 20 cm hohen Schichtdicke zeigt 1 l Wasser, der mit 1 g eines derart hergestellten Papiers in Schnitzelform etwa eine halbe Stunde behandelt worden ist, noch eine deutliche gelbliche Verfärbung.

In der Tendenz ganz ähnliche nachteilige Ergebnisse hinsichtlich der Verteilung der Wirkstoffe in den hergestellten Papieren werden auch bei anderen Papieren gefunden, die nach dem in der DE-A-198 34 916 beschriebenen Verfahren hergestellt worden sind, beispielsweise bei Papieren, die die Wirkstoflbeschichtung mit Eisenhydroxid betreffen. Das Innere der Papiere zeigt in allen Fällen wesentlich geringere Wirkstoffgehalte als die Oberfläche.

In der gleichen Offenlegungsschrift wird auch die Beschichtung der Papiere mit Aluminiumhydroxid durch Fällung aus Aluminiumsalzlösungen beschrieben. Die Untersuchung derart beschichteter Papiere hat gezeigt, daß bei ihrem Einsatz erhebliche Mengen Aluminium in das behandelte Wasser emittiert werden. Die Toxizität des Aluminiums könnte den Einsatz derart beschichteter Filter für die Behandlung von Wasser, das für den menschlichen Gebrauch vorgesehen ist, zumindest erschweren oder zusätzliche Maßnahmen notwendig machen.

Eine weitere in der genannten Offenlegungsschrift vorgeschlagene Papierimprägnation betrifft den Einsatz langkettiger Carboxylate und Carboxylsäuren. Es hat sich allerdings gezeigt, daß - obgleich zumindest die freien Carboxylsäuren eine geringe Wasserlöslichkeit haben - diese aber hinreichend genug ist, um dem Wasser einen befremdlichen Geschmack zu vermitteln. Offensichtlich sind auch diese Substanzen nicht vollständig unlöslich und daher in dieser Form für die Trinkwasser-Behandlung wenig geeignet.

Die in der genannten Offenlegungsschrift beschriebenen Papiere sind als Wirkstoffträger bzw. als Filtermaterial auf Grund ihrer eingeschränkten Beladbarkeit mit Wirkstoffen für eine Reihe von Aufgaben nur bedingt geeignet. Überschreitet zum Beispiel ihre Beladung mit Huminstoff einen Wert von etwa 20 Gew. %, werden die Papiere im allgemeinen derart undurchlässig, daß die Sorption von Stoffen aus dem Wasser nur noch mit Mühe, z.B. unter Inkaufnahme von unwirtschaftlich langen Sorptionszeiten, durchgeführt werden kann.

Ziel einer Reihe von industriellen Aufgabenstellungen, insbesondere bei der Abwasserreinigung ist es, die Filtermaterialien möglichst hoch mit Schadstoff zu beladen, um die Abfallmenge zu minimieren oder um den Stoffrecyclingweg zu eröffnen. Das ist aber mit den in der vorstehend genannten Offenlegungsschrift beschriebenen Papieren nur bedingt möglich.

Für die oben genannten Zwecke sind Wirkstoffbeladungen von mindestens 30 Gew. %, vorzugsweise von über 50 Gew. %, bezogen auf das Wirkstoffträgergewicht, erstrebenswert.

Ein weiterer Nachteil vorbekannter wirstoffbeladener Papiere ist die auf Grund ihrer Form gegebene beschränkte Einsetzbarkeit. Besonders im industriellen Milieu werden in der Wasserreinigung in Festbettfiltern hohe spezifische Durchsatzraten bei möglichst niedrigem Druckverlust pro Filtereinheit gefordert. Die in der vorgenannten Offenlegungsschrift offenbarten Papiere ergeben dagegen bei ihrem Einsatz als Festbettfilter einen sehr hohen Druckverlust und neigen darüber hinaus zur Bildung sehr ungleichförmiger Durchströmung des damit hergestellten Festbettfilters. Damit ist ein wirtschaftlicher Betrieb derartiger Filter für derartige Zwecke ohne zusätzliche Maßnahmen nur eingeschränkt möglich.

Innerhalb kurzer Zeit beginnt beim Einsatz von vorbekannten Papieren in Festbettfiltern der Aufbau einer Verkeimung. Dieser Prozeß führt in den meisten Fällen zur Verstopfung und anaeroben Zersetzung von Wirkstoff und Trägermaterial und von Freisetzung der vorher gespeicherten Schadstofffracht, wenn Eisen- oder Manganoxide als Wirkstoffkomponenten eingesetzt werden oder wenn reduzierbare Komponenten, wie z.B. Arsen, Selen und Schwefel, zu den Bestandteilen der Schadstofffracht gehören. Zwar kann das Problem durch den empfohlenen Einsatz der anorganischen Fasern als Papiergrundlage beseitigt werden, diese sind aber sehr teuer und haben Nachteile gegenüber den biegsamen und geeignet strukturierten Zellulosefasern mit großer und chemisch reaktiver Oberfläche. Die Beladung der Papiere mit silberhaltigen Wirkstoffen oder andersartigen Bioziden hilft zwar gegen den biologischen Abbau, führt aber gleichzeitig zur Belastung des Reinwassers mit diesen Stoffen.

Die Aufgabenstellung in der Wasserreinigung lautet vielfach, mehrere Stoffe unterschiedlicher Natur aus dem Wasser zu entfernen. In Deutschland gibt es die Forderung, Wasserhärte, Nitratgehalt und Schwermetalle im Trinkwasser zu reduzieren. In Japan liegt der Schwerpunkt bei dem Abbau von Chlor und Schwermetallen. In Asien gibt es Probleme mit Arsen und Huminsäuren. In Regionen Amerikas sollen Aluminium, Selen, Arsen und Chlor im Trinkwasser reduziert werden. Die in der genannten Offenlegungsschrift genannten Papiere vermögen Arsen, Selen und Schwermetalle mit gutem Effekt zu entfernen, sie sind aber häufig ohne zusätzliche Maßnahmen nicht hinreichend effektiv, um z.B. gleichzeitig Chlor oder Nitrat zu entfernen. Zwar lassen sich gemäß der genannten Offenlegungsschrift in zusätzlichen Verfahrensschritten unterschiedliche Wirkstoffe in getrennten Bezirken auf dem Papier nebeneinander auftragen und zwar durch Tränk- und Fixierschritte. Auch die dort vorgeschlagene zusätzliche Verwendung reiner Wirkstoffpartikel, wie Aktivkohlezuschläge im Papier, um z.B. zusätzlich Chlor zu entfernen führt nicht immer zum gewünschten Ergebnis, weil diese bei den vorgeschlagenen Imprägnierverfahren des Faserbreis oder des fertigen Papiers selbst mit den anderen Wirkstoffkomponenten zumindest teilweise überdeckt werden können und dadurch ihre wesentliche Aktivität einbüßen.

Aus der JP-A-60-25540 sind Papiere mit den Wirkstoffkombinationen, Aktivkohle / Huminsäure / Eisenhuminat / Eisenhydroxid bekannt. Diese haben den Nachteil, daß die Wirkstoffe übereinanderliegen und somit praktisch nur die außen liegende Beschichtung hinreichend zur Wirksamkeit gelangt.

Für die Anwendung von wirkstoffhaltigen Fasergebilden zur Wasserbehandlung ist die Forderung zu erheben, daß für die sichere Anwendung zur Wasserreinigung durch den technisch ungeschulten Endverbraucher die wirkstoffhaltigen Fasergebilde so einfach wie möglich, also unter weitest möglicher Vermeidung von Geräte- und Manipulationsbedarf, auszubilden sind.

Hier bieten die in der vorgenannten deutschen Offenlegungsschrift mitgeteilten wirkstoffhaltigen Papiere und Verfahren zu ihrer Anwendung einen einfachen Ansatz, der allerdings noch verbesserungsbedürftig erscheint. Der in dieser Schrift vorgeschlagene Einsatz wirkstoffhaltiger Papiere als Papierschnipsel zum Einstreuen in das zu behandelnde Wasser führt im allgemeinen ohne weitere Maßnahmen zu einer Sedimentation der Schnipsel am Gefäßboden. Deshalb ist es erforderlich, die Schnipsel durch Bewegung an der Sedimentation zu hindern. Unter diesen Voraussetzungen kann nach einem Tag Schüttelzeit z.B. über 90 % Schadstoffentfernung erreicht werden. Nun besitzt der Verbraucher in der Regel keine Schüttel- oder Rührgeräte, mittels derer Schnipsel an der Sedimentation gehindert werden könnten. Es besteht also Bedarf nach einem einfacher zu handhabenden Papier, das ohne weitere Maßnahmen zu guten Behandlungsergebnissen führt.

Aus der US-A-5,482,773 sind Fasermaterialien bekannt, die in inhomogener Form angeordnete aktivkohlehaltige Fibrillen aufweisen. Diese Fibrillen enthalten die Aktivkohlepartikel zumindest teilweise eingeschlossen in einer erstarrten Kunststoff-Phase. Die Sorptionskapazität der teilweise in den Fibrillen eingeschlossenen Aktivkohlepartikel ist durch die vom Einschluß betroffene und damit blockierte Aktivkohleoberfläche wesentlich vermindert.

Die US-A-5,554,288 beschreibt naßfeste Papierfilter mit schichtförmigem Aufbau aus wirkstoffhaltigen Fasern. Als Naßfestmittel werden synthetische organische Polymere eingesetzt. Besondere Vorteile dieser schichtförmig aufgebauten Papiere sind multifunktionale Sorption durch Aufbau der einzelnen Schichten aus wirkstoffhaltigen Fasermaterialien mit unterschiedlichen Sorptionseigenschaften sowie die Überwindung von Nachteilen, die sich durch sich gegenseitig überdeckende Wirkstoffschichten ergeben, wenn die Fasern mit sich gegenseitig überdeckenden Wirkstoffen beschichtet sind, z.B. in Fasermaterialien, die nacheinander mit unterschiedlichen Wirkstoffen beschichtet wurden.

Ein wesentlicher Nachteil der schichtförmig aufgebauten Papiere ist jedoch deren komplizierter Herstellungsprozess, beim dem die schichtförmige Zusammenführung unterschiedlicher Pulpen (Papierbreie) in der Papiermaschine geschehen muss.

Außerdem sind einschichtig aufgebaute Papiere einfacher einzusetzen.

Die DE-A-2,403,971 beschreibt wirkstoffhaltige Papiere, bei denen keine Bindemittel zur Anwendung kommen und partikuläre Feststoffe, wie Kieselgel, Bleicherden, Kieselgur, Aktivkohle, Aluminiumoxid und Zeolithe, nur durch mechanische Kräfte im Papier festgehalten werden.

In der US-A-5,526,607 werden mit Wirkstoffen beladene faserhaltige Materialien beschrieben, die einen geringen Zusammenhalt aufweisen und im Kontakt mit Feuchtigkeit zerfallen. In der DE-A-196 23 900 werden ungeformte, mit Wirkstoffen beladene faserhaltige Materialen beschrieben.

Aus der DE-A-196 52 697 sind pulverförmige Zubereitungen enthaltend Cellulosefasem, Alkalicaseinat, Vinyllactampolymer, Vinylheterocyclen und Vernetzer bekannt, die zur Flüssigkeitsbehandlung eingesetzt werden können.

Die EP-A-380,228 offenbart die Anwendung von Erdalkalialginat in der Form von Fasern, Perlen und beschichteten Fasern zur Bindung von Schwermetallen und Aluminium in der Wasserbehandlung.

Aus der DE-A4,005,794 ist die Herstellung einer (Wurst-)Verpackungsfolie bekannt, die mit Alginat als Bindemittel verstärkt ist, das als Bindemittel im Fertigungsschritt auf die Papierbahn appliziert wird.

In der DE-A-198 34 916 werden als Wirkstoffe für die Imprägnation von Wasserreinigungs-Papieren unter anderem auch die langkettigen Carboxylsäuren und ihre Salze sowie das Aluminiumhydroxid empfohlen. Aluminiumhydroxid ist ein sehr wirkungsvolles Sorbens für Arsenat- und für Fluorid-Ionen. Wegen seiner Löslichkeit ist es allerdings nicht empfehlenswert fiir den Einsatz in der Trink vasserreinigung. Carboxylsäuren sind effektive Erdalkalien-, Aluminium- und Schwermetallfänger. Wegen ihrer Löslichkeit können sie geschmackliche Beeinträchtigung des Wassers verursachen und eignen sich deshalb nur eingeschränkt für die Trinkwasserreinigung. Ähnliches gilt auch fiir Huminsäuren und die. schwerlösliche Huminate, effektive Schadstoffsorbentien, die je nach Herkunft mehr oder weniger zur Absonderung farbgebender Substanz neigen und daher ebenfalls nicht zu den bevorzugten Wirkstoffen zur Wasserreinigung gehören. Kationische Ionenaustauscherharze, zwar effektive Nitratabsorber, gehören aber wegen ihres toxischen Potentials ebenfalls nicht zu den bevorzugten Mitteln zur Trinkwasserreinigung. Selbst Aktivkohle, vielfach eingesetzter Stoff in der Trinkwasserreinigung neigt dazu, polycyclische Aromaten in das Trinkwasser abzugeben.

Mit den erfindungsgemäßen Herstellungsverfahren und den daraus resultierenden neuen Fasermaterialien können diese Probleme elegant gelöst werden und eröffnen damit auch mit diesen effektiven Wirkstoffen neue Wege zur Trinkwasserreinigung. Nach dem erfindungsgemäßen Verfahren lassen sich diese Wirkstoffe - unabhängig davon, ob es sich um Partikel oder Fasern aus Wirkstoff oder Beschichtungen mit Wirkstoff handelt - effektiv in eine Wirkstoffumgebung einbetten, ohne daß der hydraulische Zugang an ihre Wirkstoffoberfläche gestört, abgedeckt oder neutralisiert wird. Die Wirkstoffümgebung reagiert mit den ausgewaschenen unerwünschten Wirkstoffkomponenten unter Bildung fester Sorbate. Damit ist die Gefahr der Freisetzung der unerwünschten Stoffe nicht mehr gegeben.

Es wurden jetzt neue Fasergebilde, beispielsweise Papiere, gefunden, die eine Reihe von vorteilhaften und neuartigen Eigenschaften aufweisen, die die bisher bekanntgewordenen Fasergebilde zur Wasser- oder Nahrungsmittelbehandlung nicht haben, und die auch die Nachteile vorbekannter Fasergebilde nicht aufweisen.

Die erfindungsgemäßen Fasergebilde zeichnen sich gegenüber bekannten Fasergebilden dadurch aus, daß z.B. diese nicht Sedimentieren oder Flotieren sowie daß eine optimierte Verteilung der Fasergebilde in dem zu behandelnden Medium durch selbsttätige Verteilung ohne weiteren Energieeintrag möglich wird.

Durch eine spezielle Anordnung der Wirkstoffe in den erfindungsgemäßen Fasergebilden wird die hydraulische Durchdringbarkeit der wirkstoffhaltigen Fasergebilde auch bei hohen Wirkstoffgehalten verbessert und das Ausbluten unerwünschter, gefärbter und toxischer Stoffe verhindert. So ist z.B. damit die Defluoridisierung und Dearsenierung mit Aluminiumhydroxid ohne Schadstoffabgabe möglich. Die wirkstoffhaltigen Fasergebilde lassen sich dadurch sogar verkeimungsresistent konditionieren, ohne daß als Folge davon Verkeimungsresistenz-Wirkstoffe in das Wasser abgegeben werden. Dadurch wird ein beliebig multipies Wirkungsspektrum auch für Einmalgebrauchsfilter möglich, das z.B. die Enthärtung, Entchlorung und Denitrifizierung des Wassers bei gleichzeitiger Metalloid- und Schwermetallentfernung ermöglicht. Auch bei hoher Wirkungsvielfalt tritt keine oder nur eine unwesentliche Einbuße der Einzelwirkung ein.

Infolge der Wirkstoffverteilung in den erfindungsgemäßen Fasergebilden wird die Gefahr des Wirkstoffverlustes durch mechanischen oder anderweitigen Wirkstoffabrieb von der Oberfläche, wie sie z.B. besonders bei der maschinellen Kreppung der Papierbahn vorkommt, minimiert.

Durch die beliebige Formgebungsmöglichkeit der erfindungsgemäßen Fasergebilde ist deren Einsatz nicht auf flache Anwendungsformen begrenzt, sondern kann auf beliebige, an die jeweilige Aufgabe angepaßte Formenvielfalt ausgedehnt werden.

Die erfindungsgemäßen Fasergebilde lassen sich zur gezielten Abgabe von Wirkstoffen in das Wasser oder ihre Übertragung an die darin enthaltenen Zielobjekte einsetzen.

Mit den erfindungsgemäßen wirkstoffhaltigen Fasergebilden läßt sich der Geschmack- und die Bekömmlichkeit von Genußmitteln, wie Kaffee und Tee, verbessern.

Die erfindungsgemäßen wirkstoflhaltigen Fasergebilde lassen sich mit angepaßten Applikationsvorrichtungen ohne zusätzliche Maßnahmen mit hohem Wirkungsgrad an beliebigen Orten einsetzen.

Die vorliegende Erfindung betrifft ferner ein Verfahren zur Verbesserung von Geschmack und Bekömmlichkeit von Nahrungs- und Genußmitteln, insbesondere von Kaffee und Tee, durch Bindung von Säuren, Oxidationsprodukten und Reizstoffen an schwerlösliche Oxide und Mischoxide, die als Wirkstoffe in den erfindungsgemäßen Fasermaterialien enthalten sind. Dabei handelt es sich bevorzugt um die Wirkstoffgruppen der Oxide oder Hydroxide des Zirkons, Titans, Hafniums, Niobs, Tantals, Zinns, Cers, Siliciums, Aluminiums, Eisens, Mangans, Molybdäns, Wolframs und Germaniums.

Die erfindungsgemäßen wirkstoffhaltigen Fasergebilde können direkt zur Behandlung von Trinkwasser und Getränken eingesetzt werden. Sie lassen sich derart konditionieren, daß sie auch den Geschmack oder die Bekömmlichkeit von Getränken positiv beeinflussen oder daß sie Geschmacks- oder Aromastoffe emittieren. Derartige Fasergebilde sind bisher nicht bekannt geworden.

Darüberhinaus werden die erfindungsgemäßen Fasergebilde der Forderung gerecht, daß sie für den Verbraucher an beliebigem Ort, also nicht nur zu Hause, verfügbar und unkompliziert anwendbar sind.

Die Erfindung betrifft ein geformtes und massfestes Fasermaterial enthaltend einen Faseranteil und gegebenenfalls einen Partikelanteil und enthaltend
- einen Anteil von einem oder mehreren Wirkstoffen zur Flüssigkeitsbehandlung, und gegebenenfalls enthaltend
- einen Anteil von einem oder mehreren in der Flüssigkeit feldaktivierbaren Hälfsstoffen,
wobei mindestens ein Wirkstoff in Form einer Beschichtung und/oder Imprägnierung zumindest eines Teils der das Fasermaterial bildenden Fasern und/oder Partikeln vorliegt und wobei der Wirkstoffinhalt mindestens das Merkmal a) aufweist und wobei der oder die gegebenenfalls vorliegende(n) Hilfsstoff(e) mindestens eines der Merkmale c) und/oder d) aufweist
a) daß mindestens ein Wirkstoff in der Form einer Beschichtung und/oder Imprägnierung in definiert inhomogener Verteilung in dem Fasermaterial derart angeordnet ist, daß der Wirkstoff in einem vorbestimmten Anteil der das Fasermaterial bildenden Fasern und/oder Partikeln in einer vorbestimmten Menge vorliegt und daß der Wirkstoff in einem weiteren vorbestimmten Anteil der das Fasermaterial bildenden Fasern und/oder Partikeln nicht oder in einer vom ersten vorbestimmten Anteil der das Fasermaterial bildenden Fasern und/oder Partikeln abweichenden Menge vorhanden ist;
c) daß feldaktivierbare Hilfsstoffe mittels adhäsiv wirkender Hilfsstoffe in und/oder an dem Fasermaterial gebunden sind und zusätzlich das Fasermaterial mindestens einen Wirkstoff zur Flüssigkeitsbehandlung enthält; und
d) daß feldaktivierbare Hilfsstoffe durch mindestens eine der Feldwirkungen Graviationsfeld, Fliehkraftfeld, Magnetfeld und elektrisches Feld in der Flüssigkeit aktivierbar sind,
unter dem Vorbehalt, dass wenn das Fasermaterial ein Papier ist, nur einlagige Papiere gemeint sind.

Die Erfindung betrifft auch ein gemäß Anspruch 2 geformtes Fasermaterial.

Das erfindungsgemäße Fasermaterial kann in beliebiger Form vorliegen. Als Fasermaterialien werden hier ein-, zwei- oder dreidimensionale Gebilde verstanden, die aus Fasern und gegebenenfalls Partikeln geformt werden. Die gegebenenfalls Partikel enthaltenden erfindungsgemäßen Fasermaterialien, beispielsweise Papiere und faserhaltigen Formkörper, werden bevorzugt aus einem überwiegend faserhaltigen wäßrigen Brei hergestellt, der durch Mischung aus mindestens zwei verschiedenen Faserkomponenten hergestellt wurde, von denen mindestens eine bereits eine Beschichtung und/oder Imprägnation mit Wirkstoffen enthält oder im Laufe des weiteren Herstellungsprozesses und/oder auch Einsatzes des Papiers bzw. faserhaltigen Formkörpers noch bekommt. Es ist aber auch ohne Weiteres möglich, das erfindungsgemäße Fasermaterial durch Mischung aus nur einer Faserkomponente und einer Partikelkomponente herzustellen.

Anstelle eines Faserbreies als eine Quelle des erfindungsgemäßen Fasermaterials können auch Endlosfasern oder Lang- bzw. Kurzfasern zur Textilherstellung eingesetzt werden, wobei zur Herstellung des erfindungsgemäßen Fasermaterials auf der Basis von Fäden oder von Textilien wie z.B. von Filzen, Vliesen, Gestricken oder Geweben unterschiedliche Fasern angewendet werden, von denen mindestens eine bereits eine Beschichtung und/oder Imprägnation mit Wirkstoffen enthält oder im Laufe des weiteren Herstellungsprozesses und/oder auch Einsatzes des Papiers bzw. faserhaltigen Formkörpers noch bekommt.

Es ist aber auch ohne weiteres möglich, das erfindungsgemäße nicht-textile flächenförmige oder zu Partikeln geformte bzw. das textile oder fadenförmige Fasermaterial durch die Mischung aus nur einer Faserkomponente und einer Partikelkomponente herzustellen.

Als Komponenten des erfindungsgemäßen Fasermaterials kommen auch solche Bestandteile in Frage, die nicht die Form von Fasern haben und die hier unter dem Begriff "Partikel" zusammengefaßt sind. Dies können z.B. gemahlene und gebrochene Partkel, geformte Partikel, sphärische Partikel, Hohlkörper, schaumförmige Partikel, Faserhäcksel, flächige Teilchen, wie z.B. Blattgold, Glimmer, Graphit, Molybdänsulfid und Glasflakes sein.

Als Faserkomponenten werden vorzugsweise Fasern auf der Basis von Naturstoffen, wie Cellulose oder Alginat, von Kunststoffen, von Metallen und Metallegierungen, von Keramik, darunter auch der Hartstoffe aus den Gruppen der Nitride, Oxide, Boride, Carbide und Silicide, von Glas, von Kohlenstoff und von Bor eingesetzt.

Bei den erfindungsgemäßen Fasermaterialien, wie Papieren oder faserhaltigen Formkörpern, ist mindestens ein Anteil der Fasern und/oder Partikel mit mindestens einem Wirkstoff beschichtet und/oder mit mindestens einem Wirkstoff imprägniert.

Bei den erfindungsgemäßen Fasermaterialien kann mindestens der als Beschichtung und/oder Imprägnation der Fasern und/oder Partikel vorhandene Wirkstoffgehalt in der Folge mindestens einer chemischen und/oder mindestens einer physikalischen Reaktion in der Gegenwart eines diese Fasern und/oder Partikel umgebenden Fluids erzeugt worden sein.

Die erfindungsgemäßen Fasermaterialien sind dadurch gekennzeichnet, daß jeweils von dem gesamten Faser- und/oder Partikelbestandteil dieser Fasermaterialien mindestens ein Anteil der als wirkstoffbeschichteten und/oder wirkstoffimprägnierte Fasern und/oder wirkstoffbeschichtete und/oder wirkstoffimprägnierte Partikel vorliegenden Anteile seine Wirkstoffbeschichtung und/oder Wirkstoffimprägnation in der Folge mindestens einer chemischen und/oder physikalischen Reaktion in der Gegenwart eines sie umgebenden Fluids erhalten hat, von der die anderen als Fasern und/oder Partikel vorhandenen Anteile nicht oder nicht in gleicher Weise betroffen werden.

Dieses kann dadurch erreicht werden, indem A) eine Separation der mit Wirkstoff zu beschichtenden Fasern und/oder mit Wirkstoff zu beschichtenden Partikeln während der chemischen und/oder physikalischen Reaktion von den nicht derart mit Wirkstoff zu beschichtenden Fasern und/oder mit Wirkstoff zu beschichtenden Partikeln und/oder B) eine unterschiedliche Stoffwahl für die Substanz, aus der die Fasern und/oder Partikel zusammengesetzt sind und Auswahl geeigneter reaktiver Stoffe für die Zusammensetzung der mit Wirkstoff zu beschichtenden Fasern und/oder mit Wirkstoff zu beschichtenden Partikeln während der chemischen und/oder physikalischen Reaktion herbeigeführt wird.

Bevorzugt werden Fasern und/oder Partikel eingesetzt, die ganz oder teilweise aus Wirkstoffen bestehen, insbesondere solche Fasern und/oder Partikel, die eine oder mehrere der Komponenten ausgewählt aus der Gruppe bestehend aus Aktivkohle, Metall und Metallegierung, Kunstharze, Aktivkohle mit ionenaustauscherfähigen Gruppen und/oder zur Komplexbildung fähigen Gruppen, wie Calciumalginat, sowie mit Wirkstoffen beladenen und/oder beladbaren porösen Polyolefinen.

Bevorzugt werden Fasermaterialien, bei denen ein Wirkstoff zur Flüssigkeitsbehandlung in Form einer Beschichtung und/oder Imprägnierung zumindestens eines Teils der das Fasermaterial bildenden Fasern und zusätzlich in Form von Partikeln vorliegt, die auf einem Teil der Fasern aufgebracht sind. Die Wirkstoff-Beschichtungen und -Imprägnierungen sind mit den Fasern und ggf. Partikeln durch physikalische und/oder chemische Bindung verknüpft. Hierunter werden auch solche Wirkstoffe verstanden, die ausschließlich unter chemischer Substitution ursprünglich vorhandener chemischer Funktionen durch Substituenten mit der gewünschten Wirkstoffeigenschaft entstehen.

Besonders bevorzugt werden Fasermaterialien, worin der Wirkstoff zur Flüssigkeitsbehandlung ausgewählt wird aus der Gruppe bestehend aus den zur Ionenaufnahme fähigen Fest-Harzen, zur Ionenaufnahme fähigen Flüssig-Harzen (zu den zur Ionenaufnahme fähigen Fest- und Flüssigharzen werden hier auch gezählt die synthetischen und natürlichen kationischen und anionischen Wirkstoffe wie z.B. kationische Polymere aus den Gruppen der Polyacrylamide und Polyamine, Polyacrylsäuren, Polysaccharide, Chitosan, Polyacrylate, Alginsäuren, Alginate), Huminstoffen, zur Ionenaufnahme fähigen anorganischen Stoffen, zur Aufnahme von Metallen und Metalloiden und ihren Verbindungen fähigen anorganischen Stoffen, zur Havarieölaufnahme aus Wasser fähigen lipophilen Stoffen, Aktivkohle, zur Amalgambildung fähigen Metallen, zur Disulfidbildung fähigen Stoffen, zur Mercaptidbildung fähigen Stoffen, zur Bildung von Komplexen mit anorganischen Stoffen fähigen organischen Stoffen, schwerlöslichen Hydroxiden, Aktiv-Kohlenstoff-Partikeln, Aktiv-Kohlenstoff-Fasern, mit Stickstoff angereicherten Aktivkohlenstoffen, mit Stickstoff und Schwermetallen angereicherten Aktivkohlenstoffen, mit Carboxylatgruppen angereicherten Aktivkohlenstoffen, mit Carboxylsäuregruppen angereicherten Aktivkohlenstoffen, mit Sulfonatgruppen angereicherten Aktivkohlenstoffen, mit Sulfonsäuregruppen angereicherten Aktivkohlenstoffen, Fulleren-Kohlenstoffen und ihren Derivaten, Zeolithen, Metallhydriden mit legierungsartig gebundenem Wasserstoff, metallischem Zink, Hydriden aus der Gruppe der Platinmetalle, mit Carboxylatgruppen angereicherten Ölen, Wachsen oder Harzen, mit Carboxylsäuregruppen angereicherten Ölen, Wachsen oder Harzen, überwiegend aliphatischen hochsiedenden Ölen, immobilisierten Enzymen und löslichen bzw. solubilisierbaren Enzymen, Schichtsilikaten oder deren Kombinationen, und zur Bindung dispergierter Schwebstoffe fähiger Flockungsmittel, sowie Leicht- und Schwerfaser-Partikel.

Die in Kombination mit den erfindungsgemäßen Fasermaterialien eingesetzten Wirkstoffe können das Fasermaterial verlassen und in die zu behandelnde Flüssigkeit abgegeben werden. Beispiele für derartige Wirkstoffe sind Lebensmittel, Lebensmittelzusatzstoffe, Aromen, Anregungsmittel, essentielle Mineralstoffe, Gewürze, organische Säuren, Vitamine, Liposomen, Medikamente, Glukose, Enzyme, Hydrogencarbonat, Carbonat, biotechnologische Produkte, monomere oder oligomere Kohlehydrate und deren Derivate, Proteine, Wasserglas, wasserlösliche Silikate, Biozide, darunter bevorzugt Algizide, Fungizide, Bakterizide, Crustacide und Nematodizide, Düngemittel, lösliche Huminsäuren, Tiernahrungsmittel, Fischfutter oder Kombinationen dieser Wirkstoffe.

Die in Kombination mit den erfindungsgemäßen Fasermaterialien eingesetzten Wirkstoffe können auf dem Fasermaterial verbleiben und Stoffe aus der zu behandelnden Flüssigkeit binden. Beispiele für derartige Wirkstoffe sind gelartige Naturstoffe, gelartige künstliche Stoffe, Alginsäuren und ihre Salze, Chitosane und ihre Salze, polymere Kohlehydrate und deren Derivate, Polyacrylsäuren, polymere Amine und deren Salze, organische Flockungsmittel, Huminstoffe, insbesondere der Huminstoffe, aus denen durch eines oder mehrere Verfahren der Fällung, Flockung, Filtration die wasserlösliche Huminstofffraktion abgetrennt wurde, schwerlösliche Oxide und Hydroxide der Metalle und Metalloide, darunter diejenigen des Aluminiums, Siliciums, Eisens, Mangans, Hafniums, Niobs, Cers, Wolframs, Molybdäns und Germaniums, Enzyme, Proteine, Zeolithe, Agar, Gelatine, anionische Gelier- und Verdickungsmittel, kationische Gelier- und Verdickungsmittel, Proteine, Wasserglas, Hydrogencarbonate, Carbonate oder Kombinationen dieser Wirkstoffe.

Besonders bevorzugt werden Fasermaterialien, worin der Wirkstoff eine oder mehrere der Substanzen ausgewählt aus der Gruppe bestehend aus Kunststoff, Metall, Keramik, Kohlenstoff, Cellulose, Glas, Bor, Siliciumcarbid, der schwerlöslichen oder unlöslichen Nitride, Oxide und/oder Mischoxide oder deren Kombinationen enthält.

Ganz besonders bevorzugt werden Fasermaterialien, worin der Wirkstoff als Bestandteil mindestens ein Element enthält, das a) eine hohe Neigung zur Bildung von Komplexen hat und/oder b) dessen Oxide und/oder Mischoxide sich einfach durch Hydrolyse und/oder Oxidation in der Form hochporöser Substanz mit ausgedehnter innerer und äußerer Fest-Fluid-Phasengrenzfläche bilden lassen.

Ebenfalls besonders bevorzugt werden Fasermaterialien, worin der Wirkstoff eine oder mehrere der Substanzen ausgewählt aus der Gruppe bestehend aus Oxiden und Hydroxiden des Zirkons, Titans, Hafniums, Niobs, Tantals, Zinns, Cers, Siliciums, Aluminiums, Eisens, Mangans, Molybdäns, Wolframs, Germaniums, oder deren Kombinationen enthält.

Die erfindungsgemäßen Fasermaterialien können mindestens eines der Metalle und/oder Metalloide aus einer oder mehreren der Element-Gruppen 1, 2, 3, 4, 5, 6, 7, 8, 9, 10, 11, 12, 13, 14, 15 und 16 des Periodensystems zumindest zeitweise in metallischer Form enthalten, dessen Zweck beispielsweise essentielles Spurenelement, Photokatalysator, z.B. Titandioxid oder Eisenoxide, Katalysator, Sorbens oder Wasserstoffspeicher sein kann.

In Partikel- oder Faserform, als Legierung oder Reinmetall können die erfindungsgemäßen Fasermaterialien vorzugsweise die Metalle Eisen, Mangan, Cer, Magnesium, Calcium, Titan zumindest zeitweise in metallischer Form zum Zweck der Bildung einer Korrosionsschicht aus Wirkstoffen enthalten.

Die erfindungsgemäßen Fasermaterialien können neben den Wirkstoffen auch adhäsiv wirksame Hilfsstoffe enthalten, die die Eigenschaften dieser Fasermaterialien verbessern, z.B. die Naßfestigkeit (z.B. durch 1% Alginat-Anteil), die Wirkstoffixierung (z.B. durch 1% Chitosan-Anteil) und/oder die Fixierung der feldaktivierten Hilfsstoffe (z.B. Leicht- und Schwermaterialien).

Die mittels adhäsiv wirkender Hilfsstoffe in dem Fasermaterial gebundenen feldaktivierbaren Hilfsstoffe sind zusätzlich im Fasermaterial mit mindestens einem Wirkstoff zur Flüssigkeitsbehandlung kombiniert. In dieser Ausführungsform der Erfindung kann es sich um beliebige Wirkstoffe zur Flüssigkeitsbehandlung handeln. Beispiele dafür sind weiter oben aufgeführt oder in der DE-A-198 34 916. Bevorzugte Beispiele für derartige Wirkstoffe sind Oxide und Hydroxide von Metallen, Oxide und Hydroxide von Metalloiden, insbesondere Oxide und Hydroxide des Eisens oder Mangans, oder Hydroxide des Aluminiums oder Siliciums, ferner Huminstoffe, sowie Öl- oder Fettsäuren und ihre Salze.

Weitere Hilfsstoffe sind auch in der Flüssigkeit feldaktivierbare Stoffe. Diese Stoffe dienen der Ausrichtung und ggf. Spannung der erfindungsgemäßen Fasermaterialien und damit der Verbesserung ihrer Wirkeigenschaften.

Der Zerfall der erfindungsgemäßen Fasermaterialien in dem zu behandelnden Wasser ist dann vorteilhaft, wenn geeignete Filtervorrichtungen vorhanden sind, um Fasern und gegebenenfalls Partikel, aus dem behandelten Wasser zu entfernen. Das gilt nicht nur für die wirkstoffbeladenen Fasermaterialien, sondern auch für diejenigen, die erst am Einsatzort Wirkstoff-beschichtet werden. Letzteres kann z.B. der Fall sein, wenn die Fasern zur Grundwasserbehandlung eingesetzt werden. Im Grundwasser können sie zu Einzelfasern zerfallen, die dann z.B. durch einen Luftblasenschwarm im Wasser verteilt werden und sich dabei mit einer Eisenhydroxid-Beschichtung als Wirkstoff zu ummanteln. Der Zerfall von geformtem Fasermaterial in Einzelfasern in dem zu behandelnden Wasser hat den Vorteil, daß der Wasserbehandlungsprozeß wesentlich rascher abläuft, als mit dem geformten Fasermaterial. Besonders vorteilhaft lassen sich dabei solche Fasermaterialien zur Wasserbehandlung einsetzen, deren reaktive Wirkstoffbeladung auch nach dem Zerfall des Faserimaterials auf den Fasern verbleibt. Der Zerfall des Fasermaterials wird vorteilhaft durch mechanische Agitation, vorzugsweise mittels Dissolver in einem geeigneten Gefäß beschleunigt. Dabei zerfallen die Fasermaterialien wieder zu einem Brei. Auch in diesem Breistadium können die Fasern einer Imprägnierung und/oder Beschichtung mit Wirkstoff unterzogen werden, bevor der Brei mit dem zu behandelnden Wasser vermischt wird.

Die nachfolgende Aufzählung zeigt einige Anwendungsmöglichkeiten der erfindungsgemäßen wirkstoffbeladenen Fasermaterialien im Trinkwasser-, Getränke- und Lebensmittelsektor und zur raschen Medikament-Überführung in Getränke, auf die die Erfindung aber keineswegs beschränkt bleiben soll. Dabei werden in Aufzählung la Papiere mit unlöslichen Sorbentien beschrieben, während in Aufzählung 1b Papiere beschrieben werden, die Wirkstoffe freisetzen.

Die in Aufzählung la beschriebenen Papiere enthalten als Wirkstoff eine Sorbens-Imprägnation. Die Entnahme der Papiere aus der zu behandelnden Flüssigkeit erfolgt nach begrenzter Einwirkungsdauer.
Die in Aufzählung 1b beschriebenen Papiere enthalten eine Wirkstoff-Imprägnation. Die Papiere lösen sich entweder in der zu behandelnden Flüssigkeit auf oder ihre Entnahme erfolgt nach begrenzter Einwirkungsdauer.

### Aufzählung 1a

| Anwendungsmöglichkeit der Papiere | |
|---|---|
| - Schwermetallentfernung aus Trinkwasser | - Arsenentfernung aus Trinkwasser |
| - Selenentfernung aus Trinkwasser | - Actinidenentfernung aus Trinkwasser |
| - Nitratentfernung aus Trinkwasser | - Entfernung der Wasserhärte aus Trinkwasser |
| - Entfernung von Bitterstoffen aus Trinkwasser | - Entfernung von Chlor und seinen Verbindungen mit Sauerstoff, Stickstoff und Kohlenstoff aus Trinkwasser |

### Aufzählung 1b

| Anwendungsmöglichkeit der Papiere |
|---|
| - Freisetzung von Aromen in der Speise- und Getränkzubereitung |
| - Freisetzung von Gewürzen in der Speise- und Getränkzubereitung |
| - Freisetzung von Kohlensäure aus Hydrogencarbonat mittels Zitronensäure in der Getränkzubereitung |
| - Freisetzung von Nährstoffen in der Speise- und Getränkzubereitung |
| - Freisetzung von Anregungsmitteln in der Getränkzubereitung |
| - Freisetzung von Mineralstoffen in der Speise- und Getränkzubereitung |
| - Freisetzung von Vitaminen in der Speise- und Getränkzubereitung |
| - Freisetzung wirkstoffhaltiger Liposome in der Speise- und Getränkzubereitung |
| - Freisetzung von Medikamenten in der Getränkzubereitung |

Die Wirkstoffe können in festem, flüssigem und gasförmigem Zustand als Imprägnation und/oder Beschichtung der Fasern und/oder Partikel in oder auf den erfindungsgemäßen Fasergebilden vorliegen.

Bevorzugt wird ein Fasermaterial eingesetzt, dem ein Spannungszustand aufgeprägt worden ist.

Bevorzugt wird ein Fasermaterial eingesetzt, das einen Leicht- und/oder Schwermaterialzuschlag enthält.

Das erfindungsgemäße Fasermaterial kann bevorzugt mit mindestens einer oder mehrerer der Vorrichtungen ausgewählt aus der Gruppe bestehend aus Schwimmer, Anker, Boje und Haltevorrichtung verbunden werden.

In einer weiteren ganz besonderen Ausführungsform handelt es sich bei den Fasermaterialien um lineare oder flächige Fasergebilde, die durch den Zusatz von durch Feldkräfte aktivierbaren Partikeln und/oder Fasern derart ausgerüstet sind, daß ihnen in der behandelten Flüssigkeit durch mindestens eine der direkten oder indirekten Feldwirkungen Gravitation, Magnetismus, Elektrizität und Feststoffgitter eine mechanische Zugspannung aufgeprägt wird.

In dieser Ausführungsform kommen insbesondere linienförmige Fasergebilde wie z.B. ungezwirnte Faserbündel, Fäden, Kordeln, Stricke und Monofilamente, sowie flächenförmige Fasergebilde wie z.B. Vliese, Papiere, Stoffe, Gewebe, Filze, Gestricke und Bänder zum Einsatz. Eines der bevorzugt eingesetzten Fasergebilde ist Papier. Deshalb wird unter besonderer Berücksichtigung dieses Fasergebildes Herstellung, Wirkung und Einsatz der Fasergebilde dieser bevorzugten Ausführungsform beschrieben.

1. Erfindungsgemäße durch direkte Gravitationsfeldwirkung unter schwache mechanische Spannung gestellte sorptionsaktive Fasergebilde mit leichten und/oder schweren Partikeln als Bestandteile der inneren und/oder äußeren Substanz des Fasergebildes.
a) Eine Variante der erfindungsgemäßen Fasergebilde zur Flüssigkeitsbehandlung ist dadurch gekennzeichnet, daß die Fasergebilde als solche bei ihrer Zugabe zu der zu behandelnden Flüssigkeit nicht sedimentieren, aber auch nicht aufschwimmen.
   Das wird dadurch erreicht, daß die Fasergebilde in ihrer Substanz Partikel enthalten, deren wirksame Dichte kleiner ist als die Dichte der behandelten Flüssigkeit und Partikel enthalten, deren wirksame Dichte größer ist, als die Dichte der behandelten Flüssigkeit. Diese Partikel befinden sich in dem Fasergebilde oder dessen Oberfläche und geben dem Fasergebilde im untergetauchten Zustand eine scheinbare Dichte, die annähernd die Dichte der Flüssigkeit entspricht. Diese werden vorzugsweise bereits im Fasergebilde-Herstellungsverfahren in die Fasergebildesubstanz integriert oder danach aufgebracht. Für den Fall, daß als Fasergebilde Papier eingesetzt wird, werden sie vorzugsweise bereits dem Papierbrei zugegeben. Sie können aber auch nachträglich, z.B. an der fertigen Papierbahn mittels Bindemitteln angebracht werden. Anstelle von Partikeln können auch Fasern geeigneter Dichte oder Beschichtungen geeigneter Dichte auf Fasern, Papier oder auf sonstigen in oder auf das Papier aufgebrachten Komponenten eingesetzt werden.
   Diese Fasergebilde stehen hier unter einer schwachen mechanischen Zug-Spannung, die dadurch ausgelöst wird, daß die Gemengeteile in den Fasergebilden, die leichter als die Flüssigkeit sind, einen Auftrieb bewirken, wogegen die Gemengeteile in den Fasergebilden, die schwerer als die Flüssigkeit sind, einen Abtrieb bewirken. Diese in den Fasergebilden auf diese beiden unterschiedlichen Teilchengruppen wirkenden Kräfte verursachen eine schwache mechanische Zugspannung in den Fasergebilden, die sich praktisch nicht auf die äußere Form der Fasergebilde und ihre Ausrichtung in der Flüssigkeit auswirkt.
b) Die Verhinderung der Sedimentation der Fasergebilde wird auch dadurch vorteilhaft erreicht, indem Fasergebilde mit hohem Anteil leichter Komponenten, die die Fasergebilde für sich in der zu behandelnden Flüssigkeit aufschwimmen lassen (Leichtfasergebilde), im geeigneten Verhältnis verbunden werden mit einem Fasergebilde mit einem Anteil schwerer Komponenten, die die Fasergebilde für sich in der zu behandelnden Flüssigkeit absinken lassen (Schwerfasergebilde). Diese Variante der erfindungsgemäßen Fasergebilde haben den Vorteil gegenüber der Variante 1a), daß sie in der zu behandelnden Flüssigkeit eine dem Erd-Schwerefeld entsprechende Anordnung einnehmen, die um so stabiler wird, je größer die Differenz der scheinbaren Dichten der miteinander verbundenen Fasergebilde ist. Es wurde festgestellt, daß die Gleichrichtung der Fasergebilde überraschend den Stoffaustausch zwischen den Fasergebilden und der Flüssigkeit erleichtert.
   Es hat sich gezeigt, daß diese Variante weitere Vorteile gegenüber der Variante 1 a) hat. Da sich die Dichte der Flüssigkeit in Abhängigkeit von der Temperatur bzw. in Anwesenheit von zusätzlichen Stoffen wie organischen Substanzen und Ionen bzw. auch gering in Abhängigkeit vom Druck ändert, werden Fasergebilde hergestellt, an deren einem Ende sich Leicht-Fasergebilde und an deren anderem Ende Schwer-Fasergebilde angereichert sind. Durch Abschneiden oder anderweitiges Entfernen von Teilen der Leicht-Fasergebildeschicht bzw. der Schwer-Fasergebildeschicht kann die wirksame Dichte der Papiere jederzeit an die reale Dichte der Flüssigkeit angepaßt werden. Dadurch wird erreicht, daß die Papiere, auch bei veränderten Bedingungen, in der Schwebe bleiben. Die Verbindung der Leicht-Fasergebilde mit den Schwerfasergebilden geschieht vorzugsweise durch Falzen oder Prägen, kann aber auch nach beliebigen anderen Methoden, zB. Kleben, Heften, Nieten geschehen.
c) Die Behandlung der Flüssigkeit mit den Fasergebilden geschieht in Gefäßen bzw. Reaktoren oder auch natürlichen Gewässern mit bestimmten gegebenen Abmessungen. Die Dimensionierung der Fasergebilde wird vorteilhaft an diesen Maßen orientiert. Wird in dieser Weise vorgegangen, erübrigt sich die genaue Abstimmung des Verhältnisses zwischen Leichtfasergebilde und Schwerfasergebilde. Überwiegt der Schwerfasergebildeanteil, sinken die zusammengefügten Fasergebilde zwar zu Boden, bleiben aber noch in der Orientierung des Erdschwerefeldes; wird nun der Leichtfasergebildeanteil hinreichend lang gewählt, reicht dieser Teil noch bis an die Flüssigkeitsoberfläche, so daß auch in diesem Fall im gesamten Flüssigkeitsvolumen guter Kontakt mit den Fasergebilden besteht. Im umgekehrten Fall, nämlich daß der Leichtfasergebildeanteil dominiert, und der Schwerfaseranteil hinreichend dimensioniert ist, schwimmen zwar die Fasergebilde auf, reichen aber bei geeigneter Dimensionierung gemäß der Ausrichtung nach dem Erdschwerefeld bis zum Boden des Behandlungsgefäßes.
   Wasser enthält in der Regel gelöste Gase. Je nach Gasgehalt kann bereits bei geringfügiger Temperaturerhöhung aus der Flüssigkeit Gas freigesetzt werden. Weil die Gaslöslichkeit in Flüssigkeiten auch empfindlich vom Druck abhängt, kann auch bei Entspannung des Wassers Gasfreisetzung auftreten. Die Gasfreisetzung geschieht in der Regel am Phasengrenzraum zwischen Flüssigphase und fester Phase. Dadurch kann es von Fall zu Fall geschehen, daß die durch adhärierte Gasblasen, die sich durch Gas-Freisetzung aus polaren Flüssigphasen, insbesonders wäßrigen Phasen, gebildet haben, die aus Leicht- und Schwerfasergebilde kombinierten in den zu behandelnden Flüssigkeiten schwebenden Fasergebilde nach den Varianten 1a) und 1b) aufschwimmen lassen. Gegen solche Störungen sind die unter 1c) genannten Fasergebilde jedoch weitgehend immun.
   Die unter 1b) und 1c) genannten Fasergebilde stehen bereits unter einer stärkeren mechanischen Zug-Spannung als die unter 1a) genannten, die sich sowohl auf die äußere Form der Fasergebilde und auf ihre Ausrichtung in der Flüssigkeit auswirkt.

Als Auftriebspartikel kommen alle wasserbeständigen Partikel hinreichend geringer Größe in Frage, die eine geringe wirksame Dichte haben. Vorzugsweise werden Hohlkörper oder feste Schaumpartikel eingesetzt. Diese Partikel können aus Naturstoffen oder Kunststoff bestehen, wie z.B. aus Korkmehl und Polyolefinen; vorzugsweise werden Auftriebspartikel auf anorganischer Basis angewendet. Derartige Auftriebspartikel sind zB. Mikroglas-Hohlkugeln. Diese Partikel werden z.B. von 3M unter dem Handelsnamen Scotchlite Glass Bubbles vertrieben; sie haben scheinbare Dichten zwischen 0,1 g/cm³ und 0,7 g/cm³ bei Durchmessern zwischen 20 µm und 150 µm.

Unter dem Handelsnamen Extendospheres werden von der Heinrich Osthoff-Petrasch K.G. multicelluläre Hohlkugeln mit scheinbaren Dichten um 0,2 g/cm³ bis 0,3 g/cm³ zwischen 10 µm und 200 µm Durchmesser und monocelluläre Hohlkugeln mit scheinbaren Dichten um 0,7 g/cm³ zwischen 10 µm und 300 µm Durchmesser aus Aluminiumoxid-Siliziumdioxid-Keramik angeboten.

Als Auftriebspartikel können auch Hohlfasern oder Hohlfilamente angewendet werden, die vorzugsweise geschlossenzellig sind. Aber auch ungefüllte oder gefüllte Mikrokapseln und Nano-Hohlfilamente oder Nanokapseln können als Auftriebspartikel eingesetzt werden. Beispiele für derartige Nano-Partikel sind z.B. Liposome oder die polyhedralen, sphäroidalen und tubularen Fullerene, mikroverkapselte Flüssigkeiten oder Feststoffe. Als Kapseln können auch lösliche oder permeable Kapseln eingesetzt werden aus Materialien wie beispielsweise lösliche Gläser, Kunststoffe, Gelatine, Agar, Glukose, Stärke.

Partikel, die für die Herstellung der Schwerfasergebilde geeignet sind, sind z.B. Cellulosefasern, Schwerspatpulver, Graphitpulver, Mikroglaskugeln oder Glimmer.

Es sind mitunter Flüssigkeiten zu behandeln, die in stärkerer Bewegung sind. Dafür sind die unter 1a) bis 1c) genannten Varianten der erfindungsgemäßen Fasergebilde weniger geeignet. Hierfür eignen sich vorzugsweise die unter 2. und 3. genannten unter stärkere mechanische Spannung gestellten Fasergebilde.

2. Erfindungsgemäße im Gravitationsfeld unter beliebig starke mechanische Spannung gestellte wirkstoffhaltige Fasergebilde, die an Schwimmkörpern, Beschwerungskörpern oder Fixpunkten befestigt sind
a) Um auch stärker bewegte Flüssigkeiten mit wirkstoffhaltigen Fasergebilden zu behandeln, können die wirkstoffhaltigen Fasergebilde, die eine höhere Dichte als die der Flüssigkeit haben, oder wirkstoffhaltige Fasergebilde, deren Gewicht durch beschwerende Partikelzusätze erhöht wurde oder die auf andere Weise am Auftreiben gehindert werden, wie z.B. durch Fixieren an Haltevorrichtungen oder Anhängen von Gewichten an die in der Flüssigkeit auftreibende wirkstoffhaltige Leichtfasergebilde an Auftriebskörpern befestigt werden. Diese fixieren die wirkstoffhaltigen Fasergebilde ebenfalls in senkrechter Ausrichtung. Weniger bevorzugt ist die Möglichkeit, die Zugkraft über Umlenkrollen oder ähnliche Maßnahmen die durch die Auftriebskörper auf die daran befestigten wirkstoffhaltigen Fasergebilde einwirkt, umzulenken um diese Zugkraft auf die Fasergebilde abweichend vom Erdschwerefeld, also nicht in der Senkrechten wirken zu lassen.
   Die Auftriebskörper können frei schwimmend gewählt werden; sie können aber auch in einer geeigneten Position fixiert sein, um z.B. Abdriften zu vermeiden. Als Auftriebskörper für das wirkstoffhaltige Fasergebilde als Halter können Hohlkörper oder Körper mit geringerer Dichte als die der Flüssigkeit angewendet werden. Als Auftriebskörper können z.B. Holzklötze, Bretter, Kunststoff-Schwimmer, Kork, Glas-Hohlkugeln oder Edelstahl-Hohlteile dienen. Die Auftriebskörper als Papierhalter verhindern ebenfalls das Sedimentieren der Papiere. Dieses Verfahren hat gegenüber den im Wasser aufgrund ihrer Dichte ungehalten frei schwebenden sorptionsaktiven wirkstoffhaltigen Kombinationen aus Leicht-Fasergebilden und Schwer-Fasergebilden den Vorteil, daß zwischen Wasser und Papier höhere Relativgeschwindigkeiten auftreten können, die bei geeigneter Bewegungsführung des Wassers zu kürzeren Behandlungszeiten führen können. Je höher die Dichte der wirkstoffhaltigen Fasergebilde oder je höher das Gewicht der an ihnen befestigten Beschwerungskörpern gewählt wird, umso höhere Relativgeschwindigkeiten sind möglich.
   Anstelle einer Dichteerhöhung der an Schwimmkörpern befestigten wirkstoffhaltigen Fasergebilden selbst können nämlich vorteilhaft Beschwerungskörper angehängt werden. Als Beschwerungskörper eignen sich Teile mit höherer Dichte als die der damit behandelten Flüssigkeit, z.B. Hartholzklötze, Glaskugeln, Steine, Edelstahlteile. Selbst bei verstärkten Entgasungserscheinungen in der Flüssigkeit oder stärkerer Flüssigkeitsbewegung können die wirkstoffhaltigen Fasergebilde darin dann nicht flotieren.
b) In einer weiteren Ausführungsform der erfindungsgemäßen Fasermaterialien werden diese mit Beschwerungskörpern, an denen das wirkstoffhaltige Fasergebilde fixiert ist, am Aufschwimmen gehindert. Als solche eignen sich Leicht-Fasergebilde oder solche Fasergebilde, die mit Auftriebskörpern verbunden sind. Wenn als Auftriebskörper flexible gasgefüllte Behälter gewählt werden, kann durch gezielte Maßnahmen, die das Volumen des Gases in den Auftriebskörpern verändern, wie zB. Druck- oder Temperaturdifferenz, Belichtung, elektrolytische oder chemische Gasfreisetzung, physikalische, chemische oder elektrolytische Gasentfernung durch Sorption, Desorption, Kondensation und Reaktion, ein z.B. intervallförmiges Aufund Absteigen der wirkstoffbeladenen Fasergebilde in der Flüssigkeitssäule erzielt werden.
c) Anstelle der Befestigung an Beschwerungs- oder Schwimmkörpern kann es vorteilhaft sein, die wirkstoffbeladenen Fasergebilde an feststehenden geeigneten Vorrichtungen, die oberhalb oder unterhalb der Flüssigkeitsoberfläche liegen, zu verknüpfen, wenn sie als Leicht- oder Schwer- Fasergebilde oder mit zusätzlichen Schwimmkörpern oder Beschwerungskörpern dadurch in gespanntem Zustand in der Flüssigkeit vorliegen.
   Die unter 2a) bis 2c) genannten Fasergebilde können unterhalb ihrer Reißspannung unter beliebig starke mechanische Zug-Spannung gestellt werden, die sich sowohl auf die äußere Form der Fasergebilde als auch ihre Ausrichtung in der Flüssigkeit auswirkt und ihren Einsatz auch in relativ bewegter Flüssigkeit gestatten.

3. Erfindungsgemäße federkraftbedingt unter mechanische Spannung gestellte wirkstofthaltige Fasergebilde

Der gefundene vorteilhafte Einsatz von wirkstoffhaltigen Fasergebilden, mit dem die Sedimentation der Fasergebilde verhindert werden kann und darüber hinaus ihre optimale Verteilung in der Flüssigkeit gewährleistet werden kann, umfaßt auch die Wirkung der Federkraft. Als Federkraft wird hier nicht nur die von Metallfedern bekannte Rückstellkraft verstanden, sondern auch all jene Rückstellkräfte, die von Bimetallen ausgehen können, von temperaturbedingt auftretenden reversiblen Verformungen von Metallen und die Rückstellkräfte, die verformten gummielastischen Gegenständen innewohnen.

4. Erfindungsgemäße magnetfeldbedingt und/oder elektromagnetfeldbedingt unter mechanische Spannung gestellte wirkstoffhaltige Fasergebilde

Durch Inkorporation von ferromagnetischen Partikeln, z.B. Magnetitpulver oder ferromagnetischen Fasern in die wirkstoffhaltige Fasergebilde, lassen sich die Fasergebilde ebenfalls unter mechanische Spannung stellen, indem sie entsprechend einem hinreichend weitreichenden Magnetfeld ausgesetzt werden. Durch Veränderung der Position und/oder Stärke des Magnetfeldes können darüber hinaus die Fasergebilde unabhängig von der Flüssigkeitsbewegung unter Verbesserung des Stoffaustausches bewegen. Diese Möglichkeiten bestehen auch bei der Verknüpfung der wirkstoffhaltigen Fasergebilde mit ferromagnetischen Körpern, die sich ebenfalls in dieser Weise magnetisch manipulieren lassen.

In ähnlicher Weise lassen sich Metalle enthaltende wirkstoffhaltige Fasergebilde durch induktive Anregung ausrichten, aufspannen und auch bewegen.

Für den Zweck der optimalen Verteilung der wirkstoffhaltigen Fasergebilde ist es in der Regel hinreichend, wenn die feldinduzierte mechanische Zugspannung auf die Fasergebilde in zwei entgegengesetzten Richtungen wirkt. Es kann durchaus vorteilhaft sein, wenn auf die flächenförmigen Fasergebilde Zugspannungen aus mehr als zwei Richtungen einwirken, z.B. indem gleichzeitig die Wirkung des Gravitationsfeldes, das z.B. eine Zugspannung von oben und unten ausübt, und die indirekte Wirkung eines gedehnten Molekulargitterfeldes, das die Rückstellkraft eines horizontal wirkenden Gummizuges verursacht, auf die Fasergebildebahnen einwirken und diese in diesen unterschiedlichen Richtungen straffen.

Neben dem angestrebten Zweck der Verhinderung der Sedimentation oder Flotation der Fasergebilde ist eine weitere vorteilhafte Wirkung dieses kombinierten Zug-Spannungsfeldes ist die verbesserte Flüssigkeitspermeation durch das gedehnte Fasergebilde, eine weitere die Möglichkeit, die Anzahl der pro Flüssigkeitsvolumen einfügbaren Fasergebilde-Bahnen zu maximieren, und eine weitere vorteilhafte Wirkung ergibt sich durch die dadurch herbeigeführte gleichförmige Durchströmung der Fasergebildeanordnung.

Diese Ausführungsformen des erfindungsgemäßen Fasermaterials dienen nicht nur der Aufgabe, die Wirkstoffbeladung der Fasermaterialien in optimaler Weise auf eine schwach bewegte oder unbewegte Flüssigphase einwirken zu lassen, indem sich dadurch die notwendige Einwirkungszeit der wirkstofftragenden Fasermaterialien auf die behandelten Flüssigkeiten reduzieren läßt, sondern ist in besonderer Weise zur Anwendung in frei strömenden Medien geeignet, insbesondere in Oberflächengewässern, wie Flüssen, Strömen, künstlichen Abwasservorflutern und sonstigen künstlichen Wasserläufen.

Je nach dem beabsichtigten Zweck kann die Wirkstoffbeladung als Beschichtung auf den Fasern angeordnet sein, sie kann aber z.B. auch als Partikel, Faser und verkapselt in oder auf dem Fasergebilde fixiert sein. Dabei kann die Wirkstoffbeladung vollständig oder teilweise in der zu behandelnden Flüssigkeit löslich sein, um dort hinein gelöste und/oder ungelöste Stoffe abzugeben. Sie kann aber auch als in der Flüssigkeit unlösliche Wirkstoffbeladung vorliegen.

Dabei kann die Zusammensetzung der Fasergebilde mitsamt ihren Leicht- und/oder Schwerkörpern und der Wirkstoffbeladung auch so gestaltet sein, daß sie sich nach einer gewünschten Kontaktzeit oder unter geeigneten Reaktions-Bedingungen, wie z.B. Temperatur, pH-Wert und anderen Milieubedingungen in der Flüssigkeit, komplett oder auch nur zum Teil auflösen. Dies kann so geschehen, daß sich z.B. der Faserverband unter Erhalt der Einzelfasern auflöst. kann der Wirkstoffgehalt als solcher zB. ungelöst zurückbleiben oder auch ganz oder teilweise mit aufgelöst werden. Es können dadurch z.B. wirkstoffbeladene Liposomen freigesetzt werden.

Erfindungsgemäße Fasergebilde, die diesen Anforderungen genügen, können z.B. teilweise aus löslichen Fasern und sonstigen Komponenten bestehen. Beispiele dafür sind z.B. Kohlehydrat-Fasern wie z.B. Glukosefasern und Stärkefasern ("Glasnudeln"), Protein-Fasern, aber auch Wasserglasfasern.

Neben der reinen Wasserbehandlung können die Fasergebilde auch zur Reinigung von Lösungsmitteln und Ölen, Flüssigprodukten und zur physikalisch-chemischen Reinigung von Recycling-Produkten eingesetzt werden. Die im Rahmen der Sanierung von Altablagerungen, Altstandorten, Abwasserlagunen und sonstigen Altlasten notwendigen Reinigungsoperationen erfordern in vielen Fällen die Reinigung von wäßrigen Phasen wie Erdreichwaschwasser, z.B. aus der Boden- und Sedimentwäsche, oder Sickerwasser. Auch hier eignen sich die erfindungsgemäßen Fasergebilde für eine Reihe von Prozeßschritten.

Eine besondere Anwendung der erfindungsgemäßen Fasergebilde ist hier das Einhängen in stehende oder strömende Oberflächengewässer oder auch in große Sammeltanks zur Entfernung der Schadstofflast. Mit dieser Methode können z.B. Quecksilber und radioaktive Kontaminanten oder auch Havarieöle aus kontaminierten Oberflächengewässern beseitigt werden.

Die entsprechend stabil gestalteten Fasergebilde können z.B. auch zur In-situ-Grundwasserreinigung als rückholbare reaktive Wand in den Grundwassersrtrom eingehängt werden. Auch in den sog. "Funnel-and-Gate"-Bauwerken können die erfindungsgemäßen Fasergebilde als rückholbare reaktive Wände in den Grundwasserstrom eingehängt werden. Hierfür eignen sich zum Beispiel besonders solche Papiere oder Vliese, die unverrottbare stabile Faserkomponenten enthalten, oder die zur mechanischen Verstärkung mit zusätzlichen reißfesten Fäden oder Fadennetzwerken ausgerüstet sind.

Dazu werden die Fasergebilde, z.B. als Bahnen und in Bahnbreiten, die den Maßen des in den Grundwasseraquifer eingesenkten und von dem Grundwasser durchströmten Bauwerk angepaßt sind, in demselben zum optimalen Grundwasserkontakt durch eines oder mehrere der Verfahren Einhängen, Einsenken oder Aufspannen vorzugsweise so angeordnet, daß sie nicht zu einer Aufstauung des Grundwasserstroms führen. Wenn der Grundwasserstrom parallel zu den Bahnen verläuft, sind die Fasergebilde-Bahnen dort so angeordnet, daß sie in hinreichend dichtem Abstand, vorzugsweise im Abstand von weniger als 4 mm, im Grundwasserstrom angeordnet sind, um eine möglichst quantitative Herausnahme oder Abbau der zu entfernenden Komponenten zu gewährleisten.

Reaktive Wände erstrecken sich vorzugsweise vom Grundwasserspiegel über den gesamten Grundwasseraquifer bis an die Aquifersohle. Zu ihrer Aufnahme dienen vorzugsweise Betonbauwerke, die für den Grundwasserstrom permeabel gestaltet sind. Als Verteiler-Elemente dienen Kiesschichten von ca. 2 m Schichtdicke, die im Grundwasserzu- und - abstrom zu dem Betonbauwerk angeordnet sind.

Die reaktive Wand kann z.B. hergestellt sein aus Vliesbahnen aus gasaktivierten Aktivkohlefasern (Sorption von Lipophilen), aus gasaktivierten und Salpetersäureoxidierten Aktivkohlefasern (Sorption von Phenolen), oder aus gasaktivierten und Natriumhydroxid-Schmelze-oxidierten Aktivkohlefasern (Sorption von Schwermetallen).

Die faserhaltigen Bahnen sind vorzugsweise zusätzlich verstärkt durch Trag- und Verstärkungsfasern, da die Grundwasser-Aquifere oftmals vertikale Abmessungen von mehr als 20 m haben, die die Fasergebilde freitragend überbrücken müssen. Deshalb kann ihre Aufhängung in Rahmen, an Auftriebs- oder Beschwerungskörpern ebenfalls Vorteile bieten.

Hier kann es auch angebracht sein, wirkstofffreie faserhaltige und ggf. partikelhaltige Fasermaterialien einzubringen, wobei der Wirkstoff erst während des Einsatzes auf Fasern und ggf. Partikeln sich abscheidet. So besteht vielfach die Forderung, aus kontaminiertem Grundwasser z.B. Teeröl, Schwermetall, Aluminium und die Metalloide, Arsen oder Selen abzuscheiden. Da es sich bei den kontaminierten Grundwässern zumeist um reduzierte Aquifere handelt, werden sie zu ihrer Behandlung mit Fasermaterial vorzugsweise oxidiert.

Das kann z.B. durch Sauerstoffzufuhr über Silikonschlauchmembranen geschehen, die dicht an dem Fasermaterial angeordnet sind, oder von diesem umschlossen werden. Bei der Grundwasseroxidation an den mit Fasermaterial umschlossenen Membranschläuchen scheidet sich im Grundwasser vorhandenes Eisen als Eisen-III-hydroxid auf den Fasern ab. Dieses wiederum wirkt als Sorbens fiir Schwermetalle, Teeröle, Metalloide und Aluminium, Weniger bevorzugt ist es, den Sauerstoff als Blasenschwarm, z.B. direkt durch den Fasergebildeschlauch, hindurchzuleiten.

Anstelle von Bahnen können in den reaktiven Wänden auch Schlauch-, Faden- oder streifenförmige Fasermaterialien eingesetzt werden. Vorteilhaft werden sie als selbstaufspannende oder anderweitig mittels Vorrichtungen gespannte Fasergebilde darin angeordnet. Die bahnen-, band- oder fadenförmigen Fasergebilde können z.B. auch mittels Rollensystemen kontinuierlich oder Zeituhr-gesteuert diskontinuierlich durch die reaktive Wand bewegt werden. Das ist dann vorteilhaft, wenn sich das Fasermaterial schnell belädt, wenn die Wirkung des Fasermaterials wegen Katalysatorvergiftung nachläßt oder wenn zur Verrottung neigendes Fasermaterial eingesetzt wird.

Für die Entfernung von metallischem Quecksilber, und ionischem Quecksilber, Edelmetallen, Actiniden und Lanthaniden aus Grundwasser eignet sich huminsäurebeschichtete Cellulosefaser und vergoldete Aktivkohle.

Als Fasermaterialien eignen sich besonders solche Fasern, die nicht glatt sind. Angeätzte oder chemisch konditionierte Fasern oder Partikel können vorteilhaft eingesetzt werden. Platinmetall-Fasern und Partikel oder mit diesen Metallen beschichtete Aktivkohlefasern oder -Partikel, vorzugsweise Palladium, lassen sich durch direkte Behandlung mit Wasserstoff oder durch Schaltung als Kathode zur Reduktion anwenden; z.B. um Nitrat aus dem Wasser zu entfernen. Es ist aber auch möglich, den Wasserstoff zur katalyischen Nitratreaktion mittels Silikonmembranschlauch oder als Blasenschwarm mit dem Platinmetall in Kontakt zu bringen.

Beladene Fasermaterialien lassen sich je nach Material oder Beschichtung ggf. durch von Fall zu Fall jeweils geeignete physikalische oder chemische Methoden regenerieren: Feuchte dickschichtige Eisenhydroxidbeschichtungen können z.B. zwischen Gummiwalzen abgequetscht oder luftgetrocknet abgerüttelt bzw. abgeklopft werden. Sie können auch reduktiv chernisch entfernt werden. Beladene Fasermaterialien können aber auch getrocknet oder ungetrocknet zu Briketts gepreßt werden und als Energie- und Rohstoffträger an und für sich bekannten thermisch-metallurgischen Recyclingprozessen zugeführt werden.

Die Reinhaltung und besonders die Restauration von Fließgewässern im Rahmen von Renaturierungsprogrammen ist ein besonderes Anliegen des Umweltschutzes. Jahrzehntelange Gewässerverunreinigung hat die Sedimente mit allerlei Schadstoffen beladen, die auch dann noch das Gewässer verunreinigen, wenn sich die Schmutzeinleitungen reduziert haben.

Mit dem erfindungsgemäßen Verfahren gelingt es, auch derartige Gewässersysteme zu reinigen, ohne nachteilig mit Staustufen, Abwasserbauwerken und ähnlichen Großmaßnahmen einzugreifen. Dazu werden faserhaltige Stoffe mit den gewünschten Kollektor-Wirkstoffen in einer dem Fließgewässer angepaßten Form in das Gewässer eingebracht, die von Zeit zu Zeit, wenn ihre Kollektionskapazität erschöpft ist, ersetzt werden. Die nachfolgend beschriebenen Aufführungsformen zeigen Möglichkeiten der Gewässerrestauration mittels erfindungsgemäßer multifünktionaler Kollektoren.

Lipophil eingestellte Fasermaterialien, vorzugsweise Papiere und Vliese auf der Basis von Polyolefin-Mikrofasern oder damit hergestellte Fäden eignen sich vorzüglich dazu, die ölhaltigen Bilgenwässer, die heute vielfach ungereinigt in die Meere abgelassen werden, effektiv zu reinigen. Vorzugsweise geschieht das mit Mikrofasern enthaltenden Materialien, die in der Form von Fäden, Vliesen und Papieren eingesetzt werden. Derartige Fäden, Papiere oder Vliese können z.B. in der Form von Bahnen oder Streifen in den Bilgenwasser-Speichern bzw. -Behältern angeordnet sein. Diese entnehmen die öligen Phasen, so daß die Bilgenwässer auf hoher See mit geringerem Ölgehalt abgegeben werden können. Die erhaltenen ölgefüllten Papiere und Vliese können an Bord z.B. zwischen Gummiwalzen regeneriert werden und das erhaltene Öl zur Wiederverwendung eingesetzt werden oder die ölgefüllten Papiere und Vliese können im Hafen entsorgt werden. Nachfolgend wird eine Möglichkeit zur Herstellung der lipophilen Papiere aus Mikroolefinfasern beschrieben.

Die Sanierung extrem belasteter Fließgewässer mit multifünktionalen Wirkstoffen mit den erfindungsgemäßen Materialien kann beispielsweise wie folgt durchgeführt werden:

Ein hochgradig mit schwer abbaubaren organischen Schadstoffen belastetes Gewässer ist die Emscher zwischen Dortmund und Duisburg. Bei den Schadstoffen handelt es sich um ein- und mehrkernige Aromaten und ihre Derivate wie z.B. Phenole, Benzoat, Cyanide, Sulfid. Hinzu kommen noch viele andere organische Schadstoffe aus vielfältigen Quellen einschließlich kommunaler Abwässer. sowie Schwermetalle aus Industrie- und Grubenabwässern. Das Flußbett der Emscher selbst ist künstlich und damit ohne wesentliche natürliche Hindernisse. Der Fluß strömt einen üblen fäulnisartigen Geruch aus.

Das erfindungsgemäße Mittel zur Reinigung des Flusses besteht in dem Einsatz geeigneter Kollektor-Substanzen, die mit Degradations-Substanzen gekoppelt sind. Als Kollektor-Substanzen werden vorteilhaft hydroxylgruppenhaltige Eisen- und Manganoxide eingesetzt, weil sich überraschend herausgestellt hat, daß diese Stoffe bei der Verwendung in offenen Systemen also unter Sonnenbestrahlung zusätzlich die Degradation der sorbierten oxidierbaren Stoffe herbeiführen. Als weitere Kollektoren können vorteilhaft Ruß, Aktivkohle, Eisenoxid und Titandioxid in faserhaltigen Trägern eingesetzt werden. Allerdings ist unter Sonneneinstrahlung die Lebensdauer der ggf. eingesetzten faserhaltigen organischen Trägersubstanz eingeschränkt. Diese ist aber noch akzeptabel.

Als Träger für die Wirksubstanzen. können z.B. Baumwoll-LD-Polyethylen-Mischfaser-Fäden (60 % PE; 40 % Baumwolle) mit etwa 2,5 mm Durchmesser und einer Länge von 500 m eingesetzt werden. Um den Auftrieb der Fäden zu verbessern, können auch Hohlfasern in die Fäden integriert sein. Das für die Faser verwendete PE ist vorteilhaft UVbeständig ausgerüstet.

Zur Herstellung der im Fließgewässer eingesetzten Fasermaterialien kann z.B. wie folgt vorgegangen werden:

In einem eingehausten und gegen Wärmeabfüß isolierten Fluidbett enthaltend Scotch Lite Glasbubbles (Hersteller 3M) wird mittels Stickstoffzufuhr über eine perforierte Heizplatte ein Fluidbett erzeugt, in dem eine konstante Temperatur von 180 °C aufrecht gehalten wird. Über zwei mit Glas-Bubble-Reusen versehene Schleusenöffnungen wird der Baumwoll-LD-Polyethylen-Mischfaser-Faden mit einer konstanten Geschwindigkeit hindurchgezogen, die gerade hinreichend ist, um einige der an der Fadenperipherie in der direkten Nachbarschaft der Cellulose-Fasern liegenden PE-Fasern anzuschmelzen. Dabei kommt es zur Anhaftung von Glasbubbles an die PE-Fasern.

Die derart gewonnenen Fäden können anschließend einer Beschichtung mit den einzelnen Wirkstoffen unterzogen werden.

Hydroxylgruppenhaltige Eisen- und Manganoxide: Die Fäden können mit einer Lösung aus zweiwertigen Eisen- und Mangansalzen getränkt werden, der kurz zuvor Kaliumpermanganat-Lösung zugesetzt wurde. Die luftgetrockneten Fäden werden anschließend einer neutralisierenden Wäsche unterzogen und wiederum luftgetrocknet. Es können ohne Weiteres ca. 30 Gewichts-% und mehr Wirksubstanz bezogen auf Cellulosegewicht aufgetragen werden.

Aktivkohle plus Titandioxid: 50 Teile einer auf eine Kornfeinheit von kleiner 50 µm gemahlenen Aktivkohle (innere Oberfläche 1500 m²/g) und 100 Teile eines auf eine Kornfeinheit von kleiner 50 µm gemahlenen Titandioxids (Hombikat) können entsprechend dem oben für Glasbubbles angewendeten Verfahren im Fluidbett aufgetragen werden. Es können ohne weiteres mehr als 10 Gewichts-% Wirksubstanz bezogen auf Cellulosegewicht aufgetragen werden.

Ruß plus Titandioxid: 50 Teile eines auf eine Kornfeinheit von kleiner 50 µm gemahlenen Aktivkohle und 100 Teile eines auf eine Kornfeinheit von kleiner 50 µm gemahlenen Titandioxids (Hombikat) können entsprechend dem oben für Glasbubbles angewendeten Verfahren im Fluidbett aufgetragen werden. Es können mehr als 10 Gewichts-% Wirksubstanz bezogen auf Cellulosegewicht aufgetragen werden.

Die drei derart hergestellten Fadengruppen können in gleicher Verteilung (1/3 Eisen und Mangan; 1/3 Aktivkohle und Titan sowie 1/3 Ruß und Titan) in Bündeln zu jeweils 600 Fäden jeweils an einem Ende an einem 500-kg Stahlanker befestigt sein und in das Fließgewässser eingelegt werden. Dazu können zunächst die Stahlanker in den Fluß abgesenkt werden und dann die Fäden von einer Trommel abgewickelt werden. Die Fäden schwimmen als Schleppe überwiegend an der Oberfläche selbsstätig stromabwärts, bis sie sich auf die volle Länge von 500 m ausgebreitet haben.

Beispielsweise können 10 solcher Anker hintereinander im Flußbett angeordnet werden. Damit wären 5 km der Flußstrecke behandelt. Wir erwarten von den erfindungsgemäßen Kollektoren und Degradatoren trotz biologischer Abbaubarkeit eine gute Haltbarkeit. Weiterhin erwarten wir eine außerordentliche Steigerung der natürlichen Abbauleistung und Schwermetallbelastung.

Zwischenzeitlich eingetretene Hochwasserereignisse sollten zu keinerlei Unterbrechung oder Störungen im Reinigungsprozeß führen.

Nachfolgend wird die Sanierung eutrophierter Fließgewässer mit multifunktionalen Wirkstoffen beispielhaft beschrieben:

Fäden mit der Wirkstoffkombination Hydroxylgruppen-haltige Eisen- und Manganoxide können gemäß der obigen Beschreibung hergestellt werden. Weiterhin können Fäden nach dem Fluidbeschichtungsverfahren mit 10 Gewichts-% Titandioxid-Beladung - allerdings ohne Ruß- und Aktivkohle - ebenfalls gemäß der obigen Beschreibung hergestellt werden. Die Fäden können mehr als 500 m lang sein und zu Bündeln von jeweils 500 Fäden an Stahlankern von jeweils 500 kg Gewicht vertäut sein. Es ist aber auch möglich, die Fäden an Anker-Bojen an der Wasseroberfläche zu fixieren.

Zielmarkt dieser Wirkstoffkombination sind die stark mit Nitrat und Phosphat belasteten Gewässer im Einzugsbereich landwirtschaftlicher Aktivität. In ein derartiges Fließgewässer können auf 5 km Länge 20 der genannten Vorrichtungen eingebracht werden.

Wir erwarten, daß der Phosphatgehalt nach der Fließstrecke drastisch abnimmt und zusätzlich auch die Nitratbelastung erheblich zurückgeht.

Anstelle von Grundankern lassen sich Kollektor- und Detektorsysteme auch mit verankerten Bojen an der Gewässeroberfläche fixieren. Als Behandlungssysteme eignen sich auch Körbe, in denen verschiedene faserhaltige Detektionsmaterialien dem Abwasser oder Naturgewässer ausgesetzt werden, um seine Zusammensetzung zu ermitteln.

Ein Papier, das sich hervorragend für die erfindungsgemäßen Methode der Kollektion von lipophilen Stoffen in wäßrigen Phasen eignet, enthält Polyolefinfasern, vorzugsweise aber solche mit Filamentdurchmessern von <10 µm. Derartige Fasern, die auch Mikrofasern genannt werden, können im Blas-Spinnverfahren hergestellt werden. Ein Beispiel für die Herstellung eines solchen erfindungsgemäßen Papiers wird nachfolgend beschrieben.

### Herstellung eines Papiers mit Polyolefin-Mikrofasern

29,5 % LD-Polyethylen-Mikrofasem aus dem Blasspinnverfahren und 69,5 % Zellstoffasern werden mit 1 % Natriumalginat und calciumchloridhaltigem Wasser zu einem Brei angerührt, in den mittels eines von oben in den Brei hineinreichenden Kapillardüsensystems Luft eingedüst wird, die dafür sorgt, daß sich die schweren Cellulosefasern nicht von den leichen PE-Fasern absetzen können und im Brei gleichmäßig verteilt sind. Luft wird noch bis unmittelbar zum Zeitpunkt der Wasserabscheidung mit dem Sieb eingeblasen. Der weitere Herstellungsprozeß des PE-haltigen Papiers wird in herkömmlicher Weise durchgeführt. Das resultierende Papier hat eine gute Aufnahmefähigkeit für fettige / ölige Phasen aus dem Wasser, die die der Aktivkohle-Papiere übersteigen und sogar die von Rußpapieren übertreffen.

Einige besonders bevorzugte Varianten zur Herstellung einer auf dem Wasser schwimmenden Fadenbündelschleppe besteht darin, einzelne Fäden oder zu Bündeln zusammengefaßte Fäden durch eine Vielzahl von jeweils 2 Styropor-Schwimmkörpern, die untereinander mittels Draht oder Faden verbunden sind, als Faden- bzw- Fadenbündelträger zu verwenden. Eine geeignete andere Möglichkeit ist der Einsatz eines gasgefüllten Schlauches als Fadenseele, um den die wirkstoffhaltigen Fäden gewunden sind. Eine andere Möglichkeit ist die Beschichtung adhäsiv ausgerüsteter Fäden mit Styroporgranulat oder die Ummantelung eines Fadens oder Drahtes mit PUR-Schaum, z.B. im Extrusionsverfahren. Die derart schwimmfähig ausgerüsteten Fäden oder Drähte eignen sich wiederum als Seele für die wirkstofftragenden Fäden.

Ähnliche Formen der Anwendung der erfindungsgemäßen Fasergebilde eignen sich aber auch zur Wertstoffgewinnung aus natürlichen und künstlichen Gewässern wie z.B. der Goldgewinnung aus Cyanidlaugen, der Urangewinnung aus Meerwasser oder der Selengewinnung aus Grundwasser.

Erfindungsgemäße mit Sorbens oder Reaktivstoff beladene Fasergebilde, vorzugsweise in der Form von Vliesen, eignen sich auch zur großflächigen Einlage in kontaminiertes Erdreich. Die nach ihrer Beladung mit den Schadstoffen rückgeholten Vliese können zur Schadstoffdesorption bzw. Regeneration dann in Regenerationsbäder eingehängt werden und können danach wieder eingesetzt werden.

Die zur Getränke-, Lebensmittel-, Genußmittel- und Medikament-Zubereitung geeigneten Fasergebilde haben den besonderen Vorteil, daß die Wirksubstanz von den Fasergebilden sich sehr schnell in der Flüssigkeit verteilt. Von Fall zu Fall können hier mehrere, zumindest aber eine Substanz aus den dazu geeigneten Substanz-Gruppen vorteilhaft mit dem erfindungsgemäßen Fasergebilde als Zubereitungshilfsmittel appliziert werden. Als Faser-, Partikel- und Beschichtungs-Komponenten eignen sich hier besonders solche Fasern, die natürlicher Herkunft sind, die ungiftig sind oder die gar problemlos verspeist oder getrunken werden können. Es können auch solche Komponenten eingesetzt werden, die sich komplett auflösen.

Besonders in der Fischzucht-, Aquarienfischhaltung, und Haustierhaltung, aber auch in der Gärtnerei, Zimmerpflanzen- und Hausgartenpflege eignet sich die praktische Applikation von Medikamenten, Futtermitteln, Düngemitteln, Bioziden, Mineralstoffen und Schutzstoffen mit den erfindungsgemäßen Fasergebilden, wie die nachfolgenden Beispiele zeigen:

In der Fischzucht sowohl im Binnenland als auch im Meer werden Medikamente in der Regel mit dem Futter gegeben oder sie werden direkt in das Wasser gegeben. Futter und Medikamente gelangen dabei nicht vollständig an ihr Ziel, den Zuchtfisch, und können dadurch das Gewässer belasten. Mit dem erfindungsgemäßen Verfahren können die Medikamente von den eingehängten Fasergebilden kontinuierlich in das Wasser abgegeben werden. Nach einer anderen Methode nehmen die Fische die Medikamente mit dem auf den Fasergebilden fixierten Futter auf.

Ähnliche Probleme gibt es auch in der Muschel- und Perlenzucht, der Zucht von Krebs-, Garnelen- und sonstigen Krustentieren und auch sonstiger Wassertiere. Diese können ebenso vorteilhaft mit den erfindungsgemäßen Fasergebilden behandelt werden. So existiert in der Perlenzucht das Problem des Überwachsens der Perlmuscheln, die an Schnüren im Meerwasser aufgehängt sind mit Algen und Crustaceen. In oftmals wiederholten Abständen müssen die Algen und Crustaceen in mühevoller Handarbeit von den Schalen der Muscheln entfernt werden. Dazu müssen die Muscheln aus dem Wasser entnommen werden. Die Reinigung muß schnell und schonend vorgenommen werden, damit die Tiere die Prozedur überleben. Durch Anhängen von erfindungsgemäßen Papierblättern im Nahbereich der Muscheln, die Algizide und/oder Crusticide als Wirkstoffe enthalten, können diese Probleme überwunden werden. Gelegentlicher Ersatz der Blätter nach Wirkstoffabgabe ist ggf. erforderlich. Auch ist es möglich, die Schnüre, an denen die Muscheln fixiert sind, biozid zu imprägnieren.

Die Aquarienfischhaltung kann mit der Methode, das Futter und sonstige geeignete Mittel für die Behandlung der Fische und des Wassers mit den erfindungsgemäßen Fasergebilden zu applizieren, wesentlich vereinfacht werden. Zusätzlich können mit den Fasergebilden Wirkstoffe zur Wasserenthärtung, Wasseraufhärtung, pH-Konditionierung und Beeinflussung sonstiger Milieu-Parameter aufgegeben werden, so daß der Aquarienfreund oder der Groß-Aquarienbetreiber selbst komplizierte Halte-Bedingungen problemlos mit geringem Aufwand durch Auswahl der geeignet konditionierten Fasergebilde optimal einstellen kann.

Medikamente fiir die Haustierhaltung, z.B. die Katzenhaltung, sind oftmals schwierig zu applizieren. Als lösliche oder teillösliche Fasergebilde lassen sie sich dagegen rasch und quantitativ mit der Nahrung vermischen und werden ohne Schwierigkeiten aufgenommen.

Düngemittel, Spurenelemente, Biozide und andere Wirkstoffe für die Pflanzenzucht werden vielfach mit dem Gießwasser aufgebracht. Für die kontinuierliche Aufbringung geringer Dosen dieser Wirkstoffe ist das erfindungsgemäße Fasergebilde besonders geeignet. In die Gießkanne oder den größeren Gießwasservorrat eingebracht, lassen sich selbst schwerlösliche Wirkstoffe wie z.B. Kieselsäure oder Huminsäuren von den eingebrachten Fasergebilden in optimaler Weise an die Pflanzen bringen.

Überdies können auch die vorgenannten Sorbentien vorteilhaft mit einer Reihe dieser für den menschlichen Genuß geeigneten Komponenten kombiniert werden, um Schadstoffe oder Härtebildner aus Getränken und Speisen zu entfernen.

Die Herstellung der Fasergebilde kann so vorgenommen werden, daß Beschwerungs-Partikel, Beschwerungsbeschichtung, Auftriebs-Partikel und/oder Auftriebsbeschichtung bereits während seiner Herstellung des Fasergebildes in diesem integriert werden. So kann bereits bei der Papierherstellung Leicht- bzw. Schwermaterial dem Papierbrei zugemischt werden, zusammen mit den Wirkstoffkomponenten. Das kann aber auch nach der Fasergebilde-Produktion geschehen. Es kann aber auch erst vor Ort geschehen. So kann es vorteilhaft sein, daß zum Beispiel eine Vielzahl parallel angeordneter und an ihrem unteren Ende beschwerter oder fixierter Papierbahnen an einer geeigneten Auftriebs- oder Schwimmvorrichtung zur Reinigung eines Oberflächengewässers angeordnet wird. Sie ist somit erst bei ihrer Installation mit den erfindungsgemäßen Mitteln versehen worden. Beschwerungs- und/oder Auftriebskörper können auch mittels Adhäsivmaterial, wie z.B. beidseitig klebendem Klebeband, wie es für die Teppich- oder Bodenbelagverlegung gebräuchlich ist, an den Bahnen oder Fäden fixiert werden. Besonders bei textilen Gebilden kann auch die Anwendung von Klettbändern und ähnlichen mechanisch wirkenden Adhäsiven vorteilhaft sein.

Zur Verarbeitung spezifisch leichterer Partikel oder Fasern als Wasser in den Papierbrei oder den Faserbrei aus dem weitgehend papierähnliche Fasermaterialien oder Formlinge geformt werden sollen, kann folgendermaßen vorgegangen werden: Um zu vermeiden, daß die Fasern oder Partikel sich durch Flotieren an der Oberfläche sammeln, bzw. sich deshalb auch nicht mit ggf. vorhandenen schwereren Teilchen oder Partikeln, die ebenfalls in dem wäßrigen Dispersionsmedium vorhanden sind mischen, wird in den Brei durch ein Injektionsdüsensystem Gas, vorzugsweise Luft. eingeblasen. Diese Maßnahme, die bei der Papierfertigung bis zur Ablage des Breis auf dem Sieb vorgenommen wird, verhindert nicht nur die Flotation der leichten Bestandteile, sondern bewirkt auch die homogene Vermischung der unterschiedlich dichten Faser- und Partikelbestandteile.

Von den erfindungsgemäßen Fasermaterialien sind derartige Ausführungsformen besonders bevorzugt, bei denen die mechanische Zugspannung im Gravitationsfeld mindestens teilweise durch Auftriebspartikel und/oder Beschwerungs-Partikel hervorgerufen wird, und insbesondere diejenigen, bei denen die Auftriebspartikel und/oder Beschwerungs-Partikel innere und/oder äußere Bestandteile der Substanz der Fasergebilde sind oder mit denen die Fasergebilde verbunden sind.

In einer weiteren bevorzugten Ausführungsform der Fasergebilde wird bei diesen die mechnische Zugspannung mindestens teilweise durch Federkraft und/oder mindestens teilweise durch magnetische und/oder elektromagnetische Felder hervorgerufen.

Die vorstehend genannten Auftriebs- oder Beschwerungspartikel haben vorzugsweise eine oder mehrere der Formen Beschichtung, Partikel, Fasern, Hohlkörper, bläschen- und schaumförmige Hohlkörper und Hohlfaser.

In einer weiteren bevorzugten Ausführungsform enthalten die Fasergebilde Sorbentien und/oder lösliche Komponenten.

Eine bevorzugte Anwendung sind Fasergebilde, die Huminsäuren enthaltende Partikel enthalten, welche durch das Niederschlagen von Huminsäuren mit einem reduzierten Gehalt an wasserlöslichen Komponenten auf einem Trägermaterial hergestellt wurden.

In dieser Ausführungsform enthalten die sorptionsaktiv imprägnierten Partikel oder Fasern wasserunlösliche Huminsäuren, die sich dadurch auszeichnen, daß aus Ihnen die wasserlöslichen Huminstoffkomponenten weitgehend entfernt sind.

Die Geschmacksbeeinträchtigung und Bekömmlichkeitsbeeinträchtigung von Lebensmitteln, insbesondere Tee und Kaffee, beruht in vielen Fällen auf der hohen Wasserhärte des verwendeten Wassers, die in der Regel von gelösten Erdalkalisalzen verursacht wird. Mit der vorstehend beschriebenen Ausführungsform können auf einfache Weise die Erdalkalien aus dem Wasser entfernt werden.

Für die erfindungsgemäßen Zwecke der Enthärtung eignen sich neben Huminstoff und Ionenaustausch-Partikeln auch anionische künstliche und natürliche Polymere, wie z.B. Polyacrylsäure und ihre Alkaliderivate, Alginsäure und ihre Alkaliderivate. Kationische künstliche und natürliche Polymere, z.B. Chitosan und seine Derivate eignen sich für die Anionenentfemung. Mit derartigen Mitteln werden vorzugsweise Partikel und/oder Fasern in den Fasermaterialien beschichtet.

Mit den erfindungsgemäßen Fasermaterialien, die huminstoffhaltige Partikel enthalten, die frei von wasserlöslichen Huminstoffen sind, ist es gelungen, die Nachteile der herkömmlichen Wasserbehandlung im Haushalt auszuschalten, indem das Wasser mit huminstoffhaltigem Fasergebilde, insbesondere Papier, behandelt wird. Das erfindungsgemäße Fasermatieral zeichnet sich durch die Präsenz von ausblutungsfrei und abriebfest an den Trägerpartikeln haftendem Huminstoff aus.

Bereits in der DE-A-19834 916 wird eine Lehre mitgeteilt, mit der huminsäurebeschichtetes Papier zur Entfernung von Schwermetallen aus dem Wasser hergestellt werden kann. Nach dieser Lehre lassen sich die dort beschriebenen Papiere zur Schwermetallentfernung aus Wasser einsetzen. Es hat sich aber nun überraschend gezeigt, daß sich diese Papiere auch zum Zweck der Wasserenthärtung einsetzen lassen. Mit dem erfindungsgemäßen Fasermaterial ist es möglich, ein einwandfreies enthärtetes Wasser zu erhalten, das weder durch darin suspendierte Partikel noch durch darin gelöste dunkle Substanz verunreinigt ist. Die für das erfindungsgemäße Fasermaterial bevorzugten Partikel enthalten die Huminsäure deshalb in einer Form, die weder zum Ausbluten führt, noch zum Abrieb neigt.

Zu diesem Zweck werden spezielle Huminsäure-beschichteten Partikeln oder Fasern eingesetzt.

Zur Herstellung dieser Partikel kann eine Huminstoffquelle, vorzugsweise z.B. Torf oder Braunkohle in wäßriger alkalischer Lösung gelöst und vom Unlöslichen abgetrennt werden. Prinzipiell kann der Huminstoffals alkalische Lösung aber auch auf beliebige andere Weise gewonnen werden. Es kann auch käufliche alkalische Huminstofflösung oder aufgelöstes käufliches Natriumhuminat eingesetzt werden.

Ausgehend vorzugsweise von einer wäßrigen alkalischen Huminstofflösung wird diese auf einen Natriumhuminatgehalt zwischen 0,0001 % und 10 % eingestellt, vorzugsweise zwischen 0,001 % und 1 %, und anschließend durch Zugabe eines Fällungsmittels, vorzugsweise eines Erdalkalisalzes oder einer Säure, unter kräftigem Rühren zur Ausfällung gebracht. Die Fällung wird vorzugsweise in der Gegenwart von Alginat- oder Chitosanlösung durchgeführt. Nach der Zugabe des Fällungsmittels, das vorzugsweise langsam und in gelindem Überschuß zugefügt wird, wird filtriert und der verbleibende Filterrückstand bis zum Ablauf weitgehend ungefärbten Wassers mit möglichst salzarmem Wasser nachgewaschen. Anschließend wird der gewaschene feste Filterrückstand, sofern er mit Erdalkalisalz gefällt worden war, mit Säure behandelt zur Entfernung des Erdalkalis. Dann wird durch Zugabe von vorzugsweise Alkali oder auch Ammoniak der Huminstoff wieder in Lösung gebracht. Von dem nunmehr wieder gelösten Huminstoff, der die jetzt weitgehend erfindungsgemäß geeignete Fraktion darstellt, wird eine kleine Probe in der beschriebenen Weise probegefällt und abfiltriert. Ist das dabei erhaltene Filtrat noch immer gefärbt, wird die Fällung mit der gesamten Lösung wiederholt, abfiltriert, der Filterrückstand wiederum klargewaschen und schließlich wieder wie vorher in alkalische Lösung überführt. Wiederum wird die Probe auf Lösliches im Fällungsprodukt durchgeführt.

Wenn schließlich eine einwandfreie nicht mehr blutende Huminstoffällung vorliegt, ist diese Huminstofffraktion fiir die Herstellung der erfindungsgemäß imprägnierten und/oder beschichteten Partikel oder Fasern geeignet Sie wird in der genannten Weise vorzugsweise mit Alkali oder auch Ammoniak in den gelösten Zustand überführt. Diese Lösung wird zur Imprägnierung der Partikel oder Fasern eingesetzt. Das geschieht vorzugsweise so, daß die Partikel oder Fasern mit der Lösung getränkt werden. Vorzugsweise enthält die Tränk-Lösung nicht mehr als ein Prozent Alkalihuminat. Anschließend wird mit Säure zur Ausfällung gebracht, wobei sich der ausfallende Hüminstoff auf den Partikeln oder Fasern niederschlägt. Nach dem Auswaschen des bei der Reaktion entstandenen Salzes werden die Partikel oder Fasern getrocknet. Damit ist der Herstellungsprozeß der erfindungsgemäß einzusetzenden Partikel oder Fasern abgeschlossen.

Bevorzugt enthält das erfindungsgemäße Fasermaterial Huminsäuren enthaltende Partikel, welche durch das Niederschlagen von Huminsäuren mit einem reduzierten Gehalt an wasserlöslichen Komponenten auf einem Trägermaterial hergestellt wurden.

Dabei handelt es sich um Partikel oder Fasern, an die Huminstoff mit reduziertem Gehalt an wasserlöslichen Huminsäuren in mikropartikulärer Form gebunden ist.

Diese Partikel oder Fasern werden hergestellt, indem man:
a) Huminstoff als Huminstoffpartikel in wäßriger Partikelsuspension aus einer verdünnten Alkalihuminlösung durch Anwendung von Säure oder Erdalkali fällt, und
b) die wäßrige Partikelsuspension zusammen mit cosuspendierten Partikeln und/oder Fasern filtriert.

Die Filtration in Schritt b) erfolgt vorzugsweise unter Einsatz mindestens eines oder mehrerer der Stoffe und/oder Hilfsmittel aus den Gruppen Filtergewebe, Siebband, Filtervlies, Flockungsmittel, Entwässerungsmittel, Polysaccharide und Polysaccharidderivate.

Nach einer weniger bevorzugten Variante werden die Partikel mit Säure getränkt und dazu dann die erfindungsgemäß hergestellte Alkalihuminatlösung zugesetzt, bevor wie beschrieben weiterverfahren wird.

Ein besonders bevorzugtes Vorgehen zur Herstellung des erfindungsgemäß mit Huminstoff imprägnierten und/oder beschichteten Fasermaterials ist das folgende. Der Papierbrei wird mit der erfindungsgemäß hergestellten Alkalihuminatlösung versetzt und anschließend bis zur deutlich sauren Reaktion mit Säure versetzt. Nur die gefällte Huminsäure bleibt dabei als Imprägnierung und/oder Beschichtung an den Fasern haften. Durch Wäsche / Filtration werden lösliche Huminsäuren, Säureüberschuß und Salz aus dem Papierbrei entfernt.

Um zu einer günstigeren und leichter entwässerbaren Huminstoffällung zu gelangen, kann es vorteilhaft sein, dem Huminstoff vor oder nach der Fällung Alginat, Alginsäure, Polyacrylsäure, kationisches, anionisches oder neutrales Flockmittel zuzugeben.

Anstelle wäßriger Säuren können zum Fällen auch in gasförmigen oder in flüssigen organischen Medien verteilte Säuren eingesetzt werden,

Die erfindungsgemäß mit Huminsäuren imprägnierten oder beschichteten Partikel, besonders die Papiere, zeichnen sich dadurch aus, daß sie nicht ausbluten und abriebfest sind.

Es ist noch eine weitere einfache Verfahrensvariante zur Herstellung der huminsäurebeschichteten Partikel und/oder Fasern gefunden worden. Dabei werden Huminate ohne die oben genannten Reinigungsschritte aus Alkalihuminatlösung auf die Partikel verteilt und mittels Salzlösung oder Säure auf den Partikeln Huminate oder Huminsäure ausgeschieden. Danach werden die Huminate oder Huminsäuren enthaltenden Partikel erschöpfend mit Wasser gewaschen, bis die färbenden wasserlöslichen Bestandteile hinreichend entfernt sind. Danach wird getrocknet. Die trockenen Partikel sind, wenn sie Huminstoff in der Form von Huminsäuren enthalten, direkt fiir die erfindungsgemäße Wasserenthärtung geeignet. Im Fall, daß der auf den Partikeln befindliche Huminstoff wasserunlösliche Huminate sind, muß durch Behandlung mit Säure und anschließende nochmalige Wäsche zur Salzentfernung zu Huminsäuren umgesetzt werden.

Die niedrigmolekularen wasserlöslichen Huminsäuren, die die Färbung des damit behandelten Wassers verursachen, können auch durch Extraktion der mit ungereinigten Huminsäuren beschichteten Partikel durch polare dichte Gasphasen entfernt werden. Die für die Extraktion geeigneten Gase sind vorzugsweise Gasgemische aus einem Trägergas, wie zB. Propan, Kohlendioxid, Lachgas, Argon, Krypton, Xenon, und einer oder mehreren polaren Komponenten wie z.B. Methanol, Schwefeldioxid, Wasser, Ammoniak, Amine, Pyridin, Essigsäure.

Die für die erfindungsgemäße Wasserenthärtung vorzugsweise eingesetzte Partikelform ist Papier. Das Papier kann in der Form von Rundfiltern, Filtertüten, Faltenfiltern eingesetzt werden, durch die das zu enthärtende Wasser hindurchläuft. Das Papier kann aber auch als Schnipsel, Konfetti oder Streifen zum Einsatz gelangen, indem diese in das zu enthärtende Wasser eingestreut oder eingelegt werden. Diese Methode ist die bevorzugte. Je nach Einwirkungszeit können mehr als 90 % der Wasserhärte mit diese Methode entfernt werden. Danach werden die Papierteile mittels Teesieb oder ähnlichem aus dem Wasser entfernt. Ein besonders vorteilhaftes Papier für den erfindungsgemäßen Zweck ist ein mit Leicht- und ggf. Beschwerungskörpern angereichertes Papier, das wegen ähnlicher Dichte in der wäßrigen Flüssigkeit schweben kann.

Neben dem Huminstoff eignet sich für die erfindungsgemäßen Zwecke der Kationen- und Anionenentfernung, wie z.B. der Enthärtung neben Huminstoff und Ionenaustausch-Partikeln auch die Alginsäure und ihre Alkaliderivate, das Chitosan und seine Salze und die Polyacrylsäure und ihre Alkaliderivate, mit denen Partikeln und/oder Fasern in den Fasermaterialien beschichtet sein können. Andererseits können auch die Bestandteile der Fasermaterialien oder die Fasergebilde selbst, vorzugsweise Cellulosefasern, durch chemische Modifikation mit Kationen- und/oder Anionen-sorbierenden Substituenten, vorzugsweise Carboxylsäure-Funktionen und/oder Amin-Funktionen enthaltende Substituenten, als "Wirkstoffbeschichtung" ausgerüstet werden.

Eine einfache Anwendung der Partikel nach dem erfindungsgemäßen Verfahren zur Ionenentfernung kann auch mit dem weiter unten beschriebenen Verfahren des Reintauchens durchgeführt werden.

Zusätzlich haben die mit kationischen und/oder anionischen Funktionen ausgerüsteten Fasern oder mit Polymeren belegten Fasern und/oder Partikel die vorteilhafte Eigenschaft, kationisch geladene oder anionisch geladene unerwünschte Elemente aus der zweiten bis vierzehnten Elementgruppe des Periodensystems einschließlich Lanthaniden und Actiniden zu eliminieren.

Zur Entfernung von Kationen einerseits oder Anionen andererseits aus dem zu behandelnden Wasser ist es für den Umsatz förderlich, wenn der pH-Wert der Lösung im annähernd neutralen Zustand verbleibt. Durch Behandlung mit z.B. Chitosan zur Entfernung von Anionen kann sich der pH-Wert in den alkalischen Bereich verschieben. Durch Behandlung mit z.B. Alginsäure zur Entfernung von Kationen kann sich der pH-Wert in den sauren Bereich verschieben. Um das zu vermeiden, kann saures oder alkalisches Reagens zugesetzt werden. Das geschieht vorzugsweise ebenfalls mittels Fasenmaterialien, die derartige Substanzen in ihrem Wirkstoffdepot enthalten. Als alkalisch reagierende Wirkstoffe kommen hier in Frage z.B. Chitosan, Carbonate und sekundäre Phosphate von Erdalkalien und Alkalien, Erdalkalihydroxide. Als sauer reagierende Wirkstoffe kommen hier in Frage z.B. Alginsäure, organische Säuren, primäre Phosphate von Erdalkalien und Alkalien.

Neben den fällungstechnisch hergestellten Komponenten können die erfindungsgemäßen Partikel und/oder Fasern im Verbund mit herkömmlichen Sorbenspartikeln und/oder -fasern kombiniert werden, z.B. Goldfolie, Aktivkohlepartikel, Aktivkohlefasern, Aluminiumhydroxid. Auch hierfur eignet sich hervorragend die Papierform als Träger für diese Stoffe.

Die Erfindung betrifft auch ein Verfahren zur Herstellung des oben definierten Fasermaterials enthaltend das Merkmal a) gemäß Ansprüchen 1 und 2 umfassend die Maßnahmen:
i) Herstellung eines überwiegend faserhaltigen wäßrigen Breis aus mindestens einer Faserkomponente, die mit mindestens einem Wirkstoff beschichtet und/oder imprägniert ist oder nach der Herstellung des überwiegend faserhaltigen wäßrigen Breis mit mindestens einem Wirkstoff beschichtet und/oder imprägniert wird, oder die keinen Wirkstoff aufweist, aber im überwiegend faserhaltigen wäßrigen Brei zusammen mit mindestens einem Wirkstoff in Partikelform und/oder mit Wirkstoff beschichteten oder imprägnierten Partikeln vorliegt,
ii) Mischung des nach Schritt i) erhaltenen überwiegend faserhaltigen wäßrigen Breis mit mindestens einem weiteren überwiegend faserhaltigen wäßrigen Brei aus mindestens einer weiteren Faserkomponente, die entweder keinen Wirkstoff oder eine von dem ersten Faserbrei abweichende Menge des gleichen Wirkstoffes oder einen von dem ersten Faserbrei abweichenden Wirkstoff aufweisen, und
iii) Herstellung des Fasermaterials aus dieser Mischung überwiegend faserhaltiger wäßriger Breie in an sich bekannter Weise.

Eine bevorzugte Ausführungsform des erfindungsgemäßen Verfahrens zur Herstellung des Fasermaterials enthaltend mindestens eines der Merkmale c) und/oder d) nach Anspruch 1 umfaßt die Maßnahme:
viii) der Herstellung eines überwiegend faserhaltigen wäßrigen Breis aus mindestens einer Faserkomponente, die mit mindestens einem adhäsiv wirkenden Hilfsstoff imprägniert ist oder die keinen Hilfsstoff aufweist, aber im überwiegend faserhaltigen wäßrigen Brei zusammen mit mindestens einem adhäsiv wirkenden Hilfsstoff in Lösung und/oder mit adhäsiv wirkendem Hilfsstoff beschichteten oder imprägnierten Partikeln vorliegt, wobei mindesten eine Hilfsstoffkomponente Wirkstoffeigenschaften hat.

Die Erfindung betrifft auch die Verwendung der Fasermaterialien gemäß Anspruch 33.

Bevorzugte Wirkstoffe für die erfindungsgemäßen faserhaltigen Materialien sind natürliche und chemisch modifizierte Polysaccharide und ihre salzartigen Verbindungen. Die folgenden genannten Substanz-Beispiele sind für den erfindungsgemäßen Zweck geeignet:
- Naturstoffe, ihre chemischen Modifikationen und salzartige Verbindungen davon
- Huminstoffe und ihre salzartigen Verbindungen
- Polysaccharide und ihre salzartigen Verbindungen; darunter
- Pektinsubstanzen und ihre salzartigen Verbindungen
- Pektinsäuren und ihre salzartigen Verbindungen
- Protopektine und ihre salzartigen Verbindungen
- Hemicellulosen und Cellulosen und ihre salzartigen Verbindungen
- Laminarane und ihre salzartigen Verbindungen
- Lichenane und ihre salzartigen Verbindungen
- Pustulane und ihre salzartigen Verbindungen
- Amylosen und ihre salzartigen Verbindungen
- Amylopektine und ihre salzartigen Verbindungen
- Glykogene und ihre salzartigen Verbindungen
- Dextrane und ihre salzartigen Verbindungen
- Pullulane und ihre salzartigen Verbindungen
- Nigerane und ihre salzartigen Verbindungen
- Isolichenane und ihre salzartigen Verbindungen
- Cyclodextrine und ihre salzartigen Verbindungen
- Chitine und ihre salzartigen Verbindungen
- Chitosane und ihre salzartigen Verbindungen
- Dextrane und ihre salzartigen Verbindungen
- Inuline und ihre salzartigen Verbindungen
- Levane und ihre salzartigen Verbindungen .
- Xanthane und ihre salzartigen Verbindungen
- Porphyrane und ihre salzartigen Verbindungen
- Phleine und ihre salzartigen Verbindungen
- Agarosen und ihre salzartigen Verbindungen
- Carrageenane und ihre salzartigen Verbindungen
- Arabinane und ihre salzartigen Verbindungen
- Xylane und ihre salzartigen Verbindungen
- Alginsäuren und ihre salzartigen Verbindungen
- Polyuronide und ihre salzartigen Verbindungen
- Homopolysaccharide und ihre salzartigen Verbindungen
- Galactane und ihre salzartigen Verbindungen
- Heteropolysaccharide und ihre salzartigen Verbindungen
- Glucane und ihre salzartigen Verbindungen
- Glucuronane und ihre salzartigen Verbindungen
- Galactomannane und ihre salzartigen Verbindungen
- Glykanoxylane und ihre salzartigen Verbindungen
- Arabinoxylane und ihre salzartigen Verbindungen
- Glucomannane und ihre salzartigen Verbindungen
- Xyloglykane und ihre salzartigen Verbindungen
- Arabinogalaktane und ihre salzartigen Verbindungen
- Glykanoglykuronane und ihre salzartigen Verbindungen
- Tragacanthsäuren und ihre salzartigen Verbindungen
- Mannane und ihre salzartigen Verbindungen
- Fructane und ihre salzartigen Verbindungen
- Arabinoxylane und ihre salzartigen Verbindungen
- Glykane und ihre salzartigen Verbindungen
- Isoglykane und ihre salzartigen Verbindungen
- Proteoglykane und ihre salzartigen Verbindungen
- Glykoproteine und ihre salzartigen Verbindungen
- Lipopolysaccharide und ihre salzartigen Verbindungen
- Heteropolysaccharide und ihre salzartigen Verbindungen
- saure Mucopolysaccharide und ihre salzartigen Verbindungen
- Hyaluronsäuren und ihre salzartigen Verbindungen
- Peptideoglykane und ihre salzartigen Verbindungen
- Teichonsäuren und ihre salzartigen Verbindungen
- Lipopolysaccharide und ihre salzartigen Verbindungen
- Kapsel-Polysaccharide und ihre salzartigen Verbindungen.

Durch chemische Modifikation dieser Naturstoffe lassen sich die gewünschten Eigenschaften der erfindungsgemäßen Papiere optimieren.

So kann die Fähigkeit dieser Substanzen zur Ionenbindung von Kationen und/oder Anionen wesentlich gesteigert werden durch die chemisch-synthetische Installation geeigneter Funktionen. Geeignete Funktionen sind zum Beispiel die Carboxylsäuren, die Carboxylate, die Amine und die Ammoniumsalze, die Alkylamine und die Alkylamoniumsalze, die Sulfonsäuren und die Sulfonate, die Phosphonsäuren und die Phosphonate, die Phosphorsäureester und die Salze der Phosphorsäureester, die Thiole und die Thiolate, die Thiocarboxylsäuren und die Thiocarboxylate, die Dithiocarboxylsäuren und die Dithiocarboxylate, die Thiocarbamate und die Dithiocarbamate, die Dimercaptotriazine, die Iminodiacetate, die Kronenether, die Aza- und Thiahomologen der Kronenether, die Bipyridine, die Cryptand-, Spherand- und Podandfunktionen, Siderophor-Funktionen, Cyclodextrine, Cryptophane.

So kann die Fähigkeit dieser Substanzen zur Bindung von organischen Molekülen wesentlich gesteigert werden durch die chemisch-synthetische Installation geeigneter Clathratbildner.

Geeignete Funktionen sind zum Beispiel die Cryptophane, Trimesinsäurederivate, Triphenylmethanderivate, Cyclotriveratrylenderivate, Trioxa-, Triaza- und Trithia-Cyclotriveratrylenderivate, Perhydrotriphenylenderivate, Cyclophosphazenderivate, Hexasubstituierte Benzole, Diacetylenderivate.

Die Anknüpfung schaltbarer Funktionen, die die Entfernung der in den Fasermaterialien gebundenen Ionen oder Moleküle erleichtert, kann in vielen Anwendungsfällen vorteilhaft sein. So kann z.B. die Bindung von Ionen und neutralen Molekülen durch die oxidative Spaltung von Disulfid-Brücken in Kronenethern oder durch die photolytische Doppelbindungsisomerisation von Azobenzol-Funktionen in Azodextrinen, in Azophan-, Azokronen-, und Azocryptandenderivaten gesteuert werden.

Die Naturstoffe, insbesonders die Polysaccharide bieten viele präparative Möglichkeiten zur jeweils geeigneten Funktionalisierung der Wirkstoffe. Die Funktionalisierung kann sehr vorteilhaft vorgenommen werden, indem bereits mit der Precursor-Wirksubstanz beschichtete oder imprägnierte Fasern und/oder Partikel den Derivatisierungsreaktionen unterworfen werden.

Beispiele für chemisch modifizierte bzw. derivatisierte Polysaccharide und ihre salzartigen Verbindungen sind z.B.
- O-Carboxymethyl-Cellulose
- Alkylaminoalkylether der Polysaccharide
- Aminoalkylether der Polysaccharide
- O-(2-(Diethylaminoethyl)-Cellulose
- Epichlorhydrin-Triethanolamin-Cellulose
- O-(2-(Diethylaminoethyl)-Derivate quervernetzter Dextrane
- Reaktionsprodukte vonPolysaccharid-Iminokohlensäurediestern mit Aminen
- an modifizierten Polysachariden immobilisierte Enzyme
- Ether und Thioether von Polysacchariden mit Merkaptoderivaten des Triazins
- Ether und Thioether von Polysacchariden mit Aminoderivaten des Triazins
- Ether und Thioether von Polysacchariden mit Carboxylsäurederivaten des Triazins
- Ether und Thioether von Polysacchariden mit Carboxylatderivaten des Triazins

Die am Beispiel der Polysacharide gezeigte Funktionalisierung der Wirkstoffe kann auch für den erfindungsgemäßen Zweck mit anderen Naturstoffen vorgenommen werden. Sie ist aber ohne Weiteres in dieser Form auch an synthetischen Precursorwirkstoffen möglich, um die erfindungsgemäßen Multikomponenten-Wirkstoffe zu erzielen.

Weitere natürliche Wirkstoffbeispiele sind:
- Polynucleotide und ihre salzartigen Verbindungen
- Nucleinsäuren und ihre salzartigen Verbindungen
- Lignine, ihre Abbauprodukte und ihre salzartigen Verbindungen
- Ligninsulfonsäuren und ihre salzartigen Verbindungen
- Gerbstoffe und ihre salzartigen Verbindungen.

Die Herstellung der erfindungsgemäßen Fasermaterialien geschieht aus, faserhaltiger Suspension, die vorzugsweise die Konsistenz eines Breies hat, wie er auch für die Papierherstellung geeignet ist. Dieser wird durch teilweise Entwässerung soweit eingedickt, daß er formbar wird und kann durch Brikettierung oder Extrusion in Briketts oder Nudeln umgeformt werden, die nach Trocknung bereits einsatzfähig für ihren Bestimmungszweck sein können. Ohne Vorentwässerung kann der faserhaltige Brei auch mit einer Rillenwalze auf eine saugfähige Unterlage gepreßt werden, wobei sich ebenfalls nudelförmige Formlinge bilden lassen.

In einer bevorzugten Ausführungsform des erfindungsgemäßen Verfahrens zur Herstellung der Fasergebilde hat jeweils von dem gesamten Faser- und/oder Partikelbestandteil dieser Teile mindestens ein Anteil der als wirkstoffbeschichtete und/oder wirkstoffimprägnierte Fasern und/oder wirkstoffbeschichtete und/oder wirkstoffimprägnierte Partikel vorliegenden Anteile seine Wirkstoffbeschichtung und/oder Wirkstoffimprägnation in der Folge mindestens einer chemischen und/oder physikalischen Reaktion in der Gegenwart eines sie umgebenden Fluids erhalten, von der die anderen als Fasern und/oder Partikel vorhandenen Anteile nicht und/oder nicht in gleicher Weise betroffen werden, indem dies durch mindestens eine der Maßnahmen herbeigeführt wird, nämlich
- durch Separation der derart mit Wirkstoff zu beschichtenden Fasern und/oder mit Wirkstoff zu beschichtenden Partikeln während der chemischen und/oder physikalischen Reaktion von den nicht derart mit Wirkstoff zu beschichtenden Fasern und/oder mit Wirkstoff zu beschichtenden Partikeln und/oder
- durch unterschiedliche Stoffwahl fiir die Substanz, aus der die Fasern und/oder Partikel zusammengesetzt sind und Auswahl geeigneter reaktiver Stoffe für die Zusammensetzung der mit Wirkstoff zu beschichtenden Fasern und/oder mit Wirkstoff zu beschichtenden Partikeln während der chemischen und/oder physikalischen Reaktion.

In einer weiteren bevorzugten Variante des Verfahrens zur Herstellung der erfindungsgemäßen Fasergebilde bestehen die mit Wirkstoffen beladenen Papiere, Fasermaterialien und/oder faserhaltigen Partikeln aus mindestens einer der Komponenten aus den Gruppen der mit mindestens einem Wirkstoff beladenen Papiere, Fasermaterialien, faserhaltigen Partikeln, deren Produktions-Vorstufen, Fasersuspensionen, entwässerten Fasern oder deren Vorstufen, deren Wirkstoffbeladung in getrennten Prozeßstufen vorgenommen wurde und Partikeln oder Fasern, deren Substanz überwiegend oder vollständig aus Wirkstoff bestehen.

Eine weitere Variante des Verfahrens zur Herstellung der erfindungsgemäßen Fasermaterialien ist dadurch gekennzeichnet, daß die Papiere, Fasermaterialien und faserhaltigen Formkörper
- durch Mischung von mindestens zwei wirkstoffbeladenen Faserkomponenten
- durch Mischung von mindestens einer wirkstoffbeladenen und mindestens einer nicht-wirkstoffbeladenen Faserkomponente
- durch Mischung mindestens einer wirkstoffbeladenen Faserkomponente und mindestens einer wirkstoffbeladenen Partikelkomponente
- durch Mischung mindestens einer wirkstoffbeladenen Faserkomponente und mindestens einer nicht-wirkstoffbeladenen Partikelkomponente
- durch Mischung mindestens einer nicht-wirkstoffbeladenen Faserkomponente und mindestens einer wirkstoffbeladenen Partikelkomponente
hergestellt werden und wobei die Faserkomponente und/oder Partikelkomponente auch vollständig aus Wirkstoff bestehen kann.

Eine weitere bevorzugte Variante des Verfahrens zur Herstellung von erfindungsgemäßen faserhaltigen Formkörpern ist dadurch gekennzeichnet, daß zur Herstellung der faserhaltigen Formkörper wirkstoffbeladene Papiere und/oder Fasermaterialien und/oder nicht-wirkstoffbeladene Papiere und/oder Fasermaterialien gemahlen und/oder gebrochen und nachfolgend zu einen neuen Körper geformt werden.

Eine bevorzugte Variante des Verfahrens zur Herstellung von erfindungsgemäßen Fasergebilden enthaltend Fasermaterial ist, dadurch gekennzeichnet, daß das Fasermaterial mit Gebrauchsvorrichtungen, beispielsweise mit einer Halterung für das Fasermaterial, verbunden ist und/oder in diese eingebettet ist. Weitere Beispiele solcher Gebrauchsvorrichtungen sind in der DE-Patentanmeldung mit dem Aktenzeichen 198 55 646.2 offenbart.

Die nach dem erfindungsgemäßen Verfahren erhaltenen Fasermaterialien, wie Papiere oder faserhaltigen Formkörper, können zwar bei oberflächlicher Betrachtung einen außerordentlich homogenen Eindruck machen, der sich kaum von jenem unterscheidet, die die nach herkömmlichem Verfahren wirkstoffbeschichteten Faserstoffe machen. Mindestens bei vergrößernder Betrachtung ist der Unterschied zu erkennen, nämlich daß bei dem erfindungsgemäßen Fasermaterial unbehandelte (= imprägnierte und/oder beschichtete) und/oder anders behandelte Fasern und/oder Partikel neben den behandelten Fasern und/oder Partikeln liegen. Weiterhin ist erkennbar, daß die Komponenten mit gleicher Beschichtungskonditionierung im statistischen Mittel gleiche Abstände voneinander haben und damit in einer definiert inhomogenen Verteilung in den erfindungsgemäßen Fasermaterialien vorliegen.

Die folgende Beschreibung zeigt einige Varianten der Herstellungs- und Einsatzmöglichkeiten der erfindungsgemäßen Fasermaterialien.

Für Einsatzzwecke in der Abwassertechnik, zur Grauwasserbehandlung, im Sektor Badewasser- und Grubenwassertechnik eignen sich als wesentliche Fasergrundlage hervorragend die altpapierstämmige Cellulosefaser. Mögliche Kontaminanten, die aus den Altpapierfasern freigesetzt werden können, z.B. polycyclische Aromaten, Schwermetalle und halogenorganische Komponenten können durch geeignete Einstellung der Wirkstoffinhalte in den unter Einsatz der Altpapierfasern hergestellten Fasermaterialien praktisch komplett zurückhalten werden. Deshalb können Papiere auf dieser Grundlage auch ohne Weiteres für die Zwecke der Tierhaltung, z.B. als Medikamententräger, angewendet werden.

Es ist bekannt, daß eine Reihe von Metallen und Metallegierungen als Korrosionsprodukt reaktive, katalytisch aktive und photokatalytisch aktive Oxidschichten bilden können. Es hat sich gezeigt, daß derartige metallische Komponenten in der Form von Partikeln und/oder Fasern als Komponente in die Fasermaterialien integrierbar sind und unter geeigneten Bedingungen dann die erfindungsgemäßen Fasermaterialien ergeben. Unter dem Einfluß von Sauerstoff und hinreichender Feuchte und besonders dann, wenn korrosionsfördernde Salze zugegen sind, lassen sich die z.B. in die Papiere integrierten feinen Eisenpartikel komplett in Rost überführen, der überraschenderweise sehr gut an dem Papier haftet. Dieser Rost hat sehr gute Sorptionseigenschaften die mindestens denen der gefällten Eisenhydroxide vergleichbar sind. Auch in diesen Fällen sind die Rostpartien als Wirkstoflbeschichtungen nicht gleichmäßig über die gesamte Papiersubstanz in gleicher Konzentration verteilt, sondern rund um die Lage der ehemals vorhandenen Metallpartikel oder Metallfasern angereichert.

Ähnliches gilt z.B. auch für Eisen-Manganlegierungen, Eisen-Cer-Legierungen oder Eisen-Titan-Legierungen, die. ebenfalls hochaktive und auch photolytisch aktive Korrosionsprodukte als Wirkstoffbeschichtungen der erfindungsgemäßen Fasermaterialien ergeben.

Metallpartikel können vorteilhaft auch dazu eingesetzt werden, gleichmäßig dosierte geringe Spurenelement-Mengen freizusetzen. So gelingt z.B. mit der erfindungsgemäßen Kombination aus Alginsäurehaltigem Fasermaterial und Magnesium-Kalium-Silicium-Legierungs-Partikeln, die ebenfalls in dem Fasermaterial vorliegen, dem damit behandelten Wasser einen konstanten geringen Gehalt von Kieselsäure, Kalium und Magnesium im Austausch gegen Calcium aus dem Wasser zu vermitteln, ohne das Wasser in den alkalischen Bereich zu überführen.

Die erfindungsgemäßen Fasermaterialien, insbesondere die gespannten Fasermaterialien, lassen sich beispielsweise in folgenden Anwendungen einsetzen: Lebensmittelzubereitung, Genußmittelzubereitung, Getränkeherstellung, Wasserenthärtung, Trinkwasserreinigung, Flußwasserreinigung, Binnenseewasserreinigung, Meerwasserreinigung, Grundwasserreinigung, Grubenwasserreinigung, Abwasserreinigung, Badewasserreinigung, Brauchwasserreinigung, Deponiewasserreinigung, Oberflächenwasserreinigung, Havarieölbeseitigung aus Oberflächengewässern, industrielle Reinigungsprozesse, insbesondere in der chemischen Industrie, in der Genuß- und Lebensmittel-Industrie sowie in der Metall-Industrie, Reinigungsprozesse zur Sanierung und Sicherung von Altlasten und Altablagerungen, Reinigungsprozesse zur Sanierung und Sicherung von Altstandorten, Reinigungsprozesse zur Erdreich- und Sedimentreinigung, Rohstoffgewinnung, Fischzucht, Muschel- und Perlenzucht, Zucht von Krebs-, Garnelen- und anderen Krustentieren, Haustierhaltung, Aquarienfischhaltung, Tierzucht und Tiermast, Zimmerpflanzenhaltung, Gärtnerei, Landwirtschaft und Gewinnung von Grundstoffen, Metallen, Metalloiden und Edelmetallen. Die Erfindung betrifft auch die Verwendung der Fasermaterialien für diese Einsatzgebiete.

Die nachfolgend aufgezählten Substanzen werden vorzugsweise in der Form von Partikeln bei der Herstellung der Fasermaterialien eingesetzt. Wenn es sich hierbei um Partikel handelt werden diese vorzugsweise auf mit Adhäsivwirkstoff vorbehandelten Fasern und/oder Partikeln appliziert. Adhäsivwirkstoffe können sein z.B. quellfähige Polymere wie z.B. Flockmittel, Alginate, Chitosan, Alginsäure, Carboxymethylcellulose, Acrylsäure, oder auch Wachse, Harze und Öle. Letztere können aus organischen Lösungen auf die Faser und/oder Partikeln appliziert werden. Nach der Anheftung der gewünschten Partikel an den gequollenen Polymeren können diese durch geeignete Maßnahmen, wie z.B. Trocknen, Säurebehandlung, Erdalkalisalzbehandlung, Eisensalzbehandlung, Ammoniakbehandlung, Lösungsmittelbehandlung, Behandlung mit überkritischen Gasen, in eine geschrumpfte und/oder wenig quellfähige Phase umgewandelt werden. Die Partikel können aber auch für die nachträgliche Beschichtung der Fasermaterialien, also nachdem sie z.B. als Papier oder Formkörper geformt worden sind, eingesetzt werden. Dabei handelt es sich z.B. um zur Ionenaufnahme fähige Fest-Harze, zur Ionenaufnahme fähige anorganische Stoffe, zur Aufnahme von Metallen und Metalloiden und ihren Verbindungen fähige anorganische Stoffe, zur Havarieölaufnahme aus Wasser fähige lipophile Stoffe, Aktivkohle, zur Mercaptidbildung fähige organische Stoffe, Aktiv-Kohlenstoff-Partikel, Aktiv-Kohlenstoff-Fasern, Erdalkali-Alginat-Fasern oder -Partikel, Chitosanpartikel, Alginsäurepartikel, Polyacrylsäurepartikel, mit Stickstoff angereicherte Aktivkohlenstoffe, mit Carboxylatgruppen angereicherte Aktivkohlenstoffe, mit Carboxylsäuregruppen angereicherte Aktivkohlenstoffe, mit Sulfonatgruppen angereicherte Aktivkohlenstoffe, mit Sulfonsäuregruppen angereicherte Aktivkohlenstoffe, Zeolithe, metallisches Zink, Schichtsilikate, Lebensmittel, Gewürze, Tiernahrungsmittel und Fischfutter.

Die nachfolgend aufgezählten Substanzen werden vorzugsweise zur Imprägnierung und/oder Beschichtung bei der Herstellung der Fasermaterialien eingesetzt: zur Ionenaufnahme fähige Flüssig-Harze, Huminstoffe, zur Ionenaufnahme fähige anorganische Stoffe, zur Aufnahme von Metallen und Metalloiden und ihren Verbindungen fähige anorganische Stoffe, zur Amalgambildung fähige Metalle, zur Bildung von Komplexen mit anorganischen Stoffen fähige organische Stoffe, schwerlösliche Hydroxide, Fulleren-Kohlenstoffe und ihre Derivate, Metallhydride mit legierungsartig gebundenem Wasserstoff, Hydride aus der Gruppe der Platinmetalle, mit Carboxylatgruppen angereicherte Öle, Wachse oder Harze, mit Carboxylsäuregruppen angereicherte Öle, Wachse oder Harze, überwiegend aliphatische hochsiedende Öle, immobilisierte Enzyme und lösliche bzw. solubilisierbare Enzyme, Biozide, Lebensmittelzusatzstoffe, Aromen, Anregungsmittel, essentielle Mineralstotle, organische Säuren, Vitamine, Liposomen, Medikamente, Glukose, Enzyme, Hydrogencarbonat, Carbonat, biotechnologische Produkte, monomere, oligomere und polymere Kohlehydrate und ihre Derivate, Zeolithe, Agar, Gelatine, Proteine, Wasserglas, wasserlösliche Silikate, Biozide, Düngemittel und lösliche Huminsäuren.

Natürlich können auch mit allen anderen der genannten Substanzen nachträgliche Beschichtungen der Fasermaterialien vorgenommen werden.

In der nachfolgenden Tabelle 1 werden jeweils Beispiele passender Wirkstoffümgebungen gezeigt, mit der die unerwünschte. Freisetzung oder Ausblutung der betreffenden Stoffe sicher unterbunden werden kann.

**Tabelle 1:**

| | | |
|---|---|---|
| Beispiele für Wirkstoffumgebung (a), mit der die Ausblutung oder Freisetzung von Schadstoffen oder unerwünschten Stoffen aus Wirkstoffen (b) unterbunden werden kann | | |

| Wirkstoff (b) | Freigesetzter Schadstoff Aus Wirkstoff (b) | Wirkstoffumgebung (a) die die freigesetzten Schadstoffe aus (b) bindet |
|---|---|---|
| Aluminiumhydroxid | Aluminiumhydroxid | Eisen-III-hydroxid |
| Aluminiumhydroxid | Aluminiumhydroxid | Mangan-III-/-IV-hydroxide |
| Aluminiumhydroxid | Aluminiumhydroxid | Huminsäure |
| Aluminiumhydroxid | Aluminiumhydroxid | Erdalkalihuminat |
| Aluminiumhydroxid | Aluminiumhydroxid | langkettige Carboxylsäure |
| Aluminiumhydroxid | Aluminiumhydroxid | langkettiges Carboxylat |
| Aluminiumhydroxid | Aluminiumhydroxid | Alginsäuren |
| Aluminiumhydroxid | Aluminiumhydroxid | Alginate |
| Aktivkohle | Polycyclische Aromaten | Mikroporöse Polyolefin-Partikel |
| langkettige Carboxylsäure | langkettige Carboxylsäure | Aktivkohle |
| langkettige Carboxylsäure | langkettige Carboxylsäure | Eisen-III-hydroxid |
| langkettige Carboxylsäure | langkettige Carboxylsäure | Chitosan |
| langkettiges Carboxylat | langkettiges Carboxylat | Huminsäure / Aktivkohle |
| langkettiges Carboxylat | langkettiges Carboxylat | Eisen-III-hydroxid |
| langkettiges Carboxylat | langkettiges Carboxylat | Chitosan |
| Huminsäure | niedermol. Huminsäuren | Eisen-III-hydroxid |
| Huminsäure | niedermol. Huminsäuren | Aktivkohle |
| Huminsäure | niedermol. Huminsäuren | Chitosan |
| Huminsäure | niedermol. Huminsäuren | Chitosansalze |
| Erdalkalihuminat | niedermolekuare Huminate | Eisen-III-hydroxid |
| Erdalkalihuminat | niedermolekuare Huminate | Chitosan |
| Kat. Ionenaustauscher-Harze | toxische Stickstoff-Organika | Huminsäure |
| Kat. Ionenaustauscherharze | toxische Stickstoff-Organika | Alginsäuren |
| Alkalisalze von Trimercaptotriazin-Polymeren zur Schwermetallsorption | toxische Mercaptide | Eisen-III-hydroxide Mangan-III/IV-hydroxide, Huminstoffe |

Die nachfolgenden Beispiele beschreiben die Erfindung ohne diese zu begrenzen.

### Beispiel 1

Altpapier aus Zeitungspapier wurde mit einem Dispergiergerät in Wasser zu einem homogenen Brei angerührt, der mit Huminsäuredispersion versetzt wurde, die durch die Ausfällung von Huminsäure durch Schwefelsäure aus einer alginathaltigen braunkohlestämmigen Alkalihuminatlösung erhalten wurde. Die erhaltene Faser-Partikeldispersion, bestehend aus etwa 20 % Huminsäure, 1 % Alginsäure und 70 % Cellulosefasern wurde nach der Vermischung noch etwa 20 min. langsam durchgerührt und anschließend beiseite gestellt,

In einem zweiten Ansatz wurde eine Cellulosefaserdispersion in der gleichen Art aus Altpapier hergestellt. Dieser Dispersion wurde eine 10 %ige Eisen-III-chloridlösung hinzugefügt, 10 Minuten durchgerührt und dann mit der stöchiometrischen Menge Natriumhydroxid zu Eisen-III-hydroxid gefällt. Die erhaltene Faser-Partikeldispersion, bestehend aus etwa 30 % Eisen-III-hydroxid und 70 % Cellulosefasern wurde nach der Vermischung noch etwa 20 min. langsam durchgerührt.

Danach wurden die beiden Dispersionen vorsichtig unter langsamem Durchrühren vermischt und durch Filtration, Wasserwäsche, Abpressen und Trocknen zur Entfernung von Wasser und Salzen unter Erzeugung von Papierblättern mit dem Blattbildner und Formkörpern mit der Rillenwalze verarbeitet.

Das getrocknete Papier und aus diesem hergestellte Formkörper enthielten etwa 15 % Eisen-III-hydroxid, 0,5 % Alginsäure und 15 % Huminsäure. Es zeigte sich wesentlich wirksamer zur Wasserenthärtung als ein Papier mit gleicher Zusammensetzung, das aus einem Papierbrei hergestellt worden war, der zuerst mit Huminsäure / Alginsäure beschichtet worden war und anschließend mit Eisen-III-hydroxid überschichtet worden war.

### Beispiel 2 Herstellung Wirkstoff-imprägnierten Fasermaterials fiir multifunktionelle Anwendungen

4 g gebleichte Zellstoff-Langfaser wurden zusammen mit 0,04 g Natrium-Alginat in 400 ml Wasser dispergiert. Anschließend wurden zu der Dispersion 1 g Torf-stämmige gasaktivierte Aktivkohle mit einem mittleren Teilchendurchmesser von 10 µm zugegeben und mittels Dispergiergerät in der Faserdispersion gleichmäßig verteilt. Anschließend wurde mit 25-prozentiger Salzsäure unter Dispergieren gefällt. Die gelierte Dispersion wurde über Kunstfasergewebefilter abgenutscht und neutral gewaschen. Zu dieser Faserdispersion wurden 4 g einer gemäß Beispiel 1 (S.57) hergestellten Eisen-III-hyroxid-Faser-Dispersion gegeben und unter Rühren miteinander vermischt. Anschließend wurde das Gemisch abgenutscht, gewaschen und bei 90 °C getrocknet. Das erhaltene Papier war naßfest und die eingearbeitete Aktivkohle war abriebfest am Papier fixiert. Das Papier eignet sich zum Abbau von Chlor und seinen Oxidationsprodukten aus gechlortem oder mit Chlordioxid behandelten Wasser, zur Entfernung von lipophilen Stoffen, Aluminium, Metalloiden und Schwermetallen.

### Beispiel 3 Herstellung Wirkstoff-imprägnierten Fasermaterials fiir multifunktionelle Anwendungen

4 g gebleichte Zellstoff-Langfaser wurden zusammen mit 0,04 g Natrium-Alginat in 400 ml Wasser dispergiert. Anschließend wurden zu der Dispersion 1 g Alginsäurepulver, 1 g Torf-stämmige gasaktivierte Aktivkohle mit einem mittleren Teilchendurchmesser von 10 µm und 1 g Scotch-Lite-Glasbubbles K 25 zugegeben und mittels Dispergiergerät in der Faserdispersion gleichmäßig verteilt. Anschließend wurde mit 25-prozentiger Salzsäure unter Dispergieren gefällt. Die gelierte Dispersion wurde über Kunstfasergewebefilter abgenutscht und neutral gewaschen. Zu dieser Faserdispersion wurden 4 g einer gemäß Beispiel 1 (S.57) hergestellten Eisen-III-hyroxid-Faser-Dispersion gegeben und unter Rühren miteinander vermischt. Anschließend wurde das Gemisch abgenutscht, gewaschen und bei 90 °C getrocknet. Das erhaltene Leicht-Papier war in Wasser unsinkbar und naßfest. Die eingearbeitete Alginsäure war abriebfest am Papier fixiert. Das Papier eignet sich zum Abbau von Chlor und seinen Oxidationsprodukten aus gechlortem oder mit Chlordioxid behandelten Wasser, zur Entfernung von lipophilen Stoffen, zur Bindung von Erdalkalien, Aluminium, Metalloiden und Schwermetallen.

### Beispiel 4 Herstellung Wirkstoff-imprägnierten Fasermaterials für multifunktionelle Anwendungen

4 g gebleichte Zellstoff-Langfaser wurden zusammen mit 1 g Chitosan und 1 g Schwerspat, Korngröße kleiner 500 µm in 400 ml Wasser dispergiert. Anschließend wurde zu der Dispersion 25-prozentige Salzsäure bis zur sauren Reaktion zugegeben und mittels Dispergiergerät in der Faserdispersion gleichmäßig verteilt. Anschließend wurde mit 10-prozentiger Natronlauge unter Dispergieren gefällt. Die gelierte Dispersion wurde über Kunstfasergewebefilter abgenutscht und neutral gewaschen. Zu dieser Faserdispersion wurden 4 g einer gemäß Beispiel 1 (S.57) hergestellten Eisen-III-hyroxid-Faser-Dispersion gegeben und unter Rühren miteinander vermischt. Anschließend wurde das Gemisch abgenutscht, gewaschen und bei 90 °C getrocknet. Das erhaltene naßfeste Papier hatte pergamentähnliches Aussehen und war von wesentlich höherer Reißfestigkeit als das normale Cellulosefaser-Papier. Das naßfeste Schwer-Papier sinkt spontan in Wasser zu Boden und eignet sich zur Bindung von Anionen, Aluminium, Metalloiden und Schwermetallen. Die chitosanhaltigen Papiere sind von hoher Dauerfestigkeit und unterliegen nicht dem Säurebildner-bedingten Alterungsprozeß herkömmlicher Papiere.

Wie in einer nachfolgenden Untersuchung festgestellt wurde, ist es ohne Weiteres möglich, aus Chitosan und Zellstoffasern, vorzugsweise Zellstoff-Langfasern, ohne weitere Zusätze hervorragende Pergament-ähnliche Papiere herzustellen.

### Beispiel 5 Herstellung Wirkstoff-imprägnierten Papiers für multifunktionelle Anwendungen, das sich in Wasser selbsttätig spannt

Die gemäß Beispiel 3 und Beispiel 4 hergestellten Faserbreie wurden gemeinsam über Kunstfasergewebefilter abgenutscht und zwar derart, daß die Aufgabe der Faserbreie auf die durch ein dünnes Blech getrennten Flächen des auf die Absaugvorrichtung aufgelegten Kunstfasergewebefilters geschah. Direkt nach Aufgabe der Faserbreie wurde das Trennblech entfernt und der Faserbrei an der ehemaligen Trennungslinie durch wellenförmige Hin- und Herbewegung eines einfachen Staborgans bewegt. Dann wurde abgesaugt, gewaschen und bei 90 °C getrocknet. Die Trennungslinie ist so angeordnet, daß etwa 1/3 des Blattes aus Schwerpapier bestehen und etwa 2/3 des Blattes aus Leichtpapier bestehen. Blätter und aus diesem Papier erzeugte Abschnitte spannen sich im Wasser selbsttätig auf.

### Beispiel 6: Anwendungsbeispiel für wirkstoffimprägniertes Fasermaterial fiir multifunktionelle Anwendungen

Ein wirkstoffimprägniertes Fasermaterial mit zwei Wirkstoffkomponenten, mit dem neben Chlor auch organische Schadstoffe, Schwermetalle sowie Metalloide wie z.B. Arsen aus dem Wasser entfernt werden, wurde wie folgt hergestellt:

50 g eines Cellulose-Faserbreis wurde gemäß Beispiel 1 mit, 2,5 g Eisenhydroxid imprägniert. Dieser Faserbrei wurden mit 50 g faserförmiger Aktivkohle vermischt. Auf einem Blattbildner wurde ein faserhaltiger Formkörper in Form eines runden Papiers hergestellt.

Für die Untersuchung der Chlor-Reduktion wurde zu 250 ml eines Schwimmbadwassers mit einem Gesamt-Chlorgehalt von 2,8 mg/l 0,3 g dieses Papiers zugesetzt, ungerührt stehengelassen und stündlich der Gesamt-Chlorgehalt bestimmt. Folgende Ergebnisse wurden erzielt.

| Zeit (h) | Cl₂-Gesamtlt (mg/l) | Zeit (h) | Cl₂-Gesamtlt (mg/l) |
|---|---|---|---|
| 0 | 2,8 | 3 | 0,5 |
| 1 | 1,4 | 4 | 0,3 |
| 2 | 0,9 | 5 | 0,15 |

Die Abnahme des Chlorgehaltes folgte, einer Exponentialfunktion. Nach 5 h betrug die Chlor-Reduktion 95%.

Die hygienische Prüfung dieses Papiers, durchgeführt bei 20 °C und 37 °C ergab nach 2 h Einwirkungszeit einen Wert von 2 KBE/ml bzw. 0 KBE/ml und nach 4 Stunden einen Wert von 1 KBE/ml bzw. 6 KBE/ml; zum Vergleich: die Grenzwerte liegen für Wasserwerke bei 100 KBE/ml und für Einzelversorger (Hausbrunnen) bei 1000 KBE/ml. Die Hygieneprüfung wurde mit normalem Leitungswasser unter den im Haushalt üblichen nicht-sterilen Bedingungen, unsterile Lagerung und Anfassen der Papiere, durchgeführt. Eine Verkeimung innerhalb von 4 Stunden, der geplanten Einwirkungszeit der Filter bei der Wasserreinigung, war nicht festzustellen.

## Patentansprüche

1. Geformtes und nassfestes Fasermaterial enthaltend einen Faseranteil und gegebenenfalls einen Partikelanteil und enthaltend
- einen Anteil von einem oder mehreren Wirkstoffen zur Flüssigkeitsbehandlung, und gegebenenfalls enthaltend
- einen Anteil von einem oder mehreren in der Flüssigkeit feldaktivierbaren Hilfsstoffen,
wobei mindestens ein Wirkstoff in Form einer Beschichtung und/oder Imprägnierung zumindest eines Teils der das Fasermaterial bildenden Fasern und/oder Partikeln vorliegt und wobei der Wirkstoffinhalt mindestens das Merkmal a) aufweist und wobei der oder die gegebenenfalls vorliegende(n) Hilfsstoff(e) mindestens eines der Merkmale c) und/oder d) aufweist
a) daß mindestens ein Wirkstoff in der Form einer Beschichtung und/oder Imprägnierung in definiert inhomogener Verteilung in dem Fasermaterial derart angeordnet ist, daß der Wirkstoff in einem vorbestimmten Anteil der das Fasermaterial bildenden Fasern und/oder Partikeln in einer vorbestimmten Menge vorliegt und daß der Wirkstoff in einem weiteren vorbestimmten Anteil der das Fasermaterial bildenden Fasern und/oder Partikeln nicht oder in einer vom ersten vorbestimmten Anteil der das Fasermaterial bildenden Fasern und/oder Partikeln abweichenden Menge vorhanden ist;
c) daß feldaktivierbare Hilfsstoffe mittels adhäsiv wirkender Hilfsstoffe in und/oder an dem Fasermaterial gebunden sind und zusätzlich das Fasermaterial mindestens einen Wirkstoff zur Flüssigkeitsbehandlung enthält; und
d) daß feldaktivierbare Hilfsstoffe durch mindestens eine der Feldwirkungen Graviationsfeld, Fliehkraftfeld, Magnetfeld und elektrisches Feld in der Flüssigkeit aktivierbar sind,
unter dem Vorbehalt, dass wenn das Fasermaterial ein Papier ist, nur einlagige Papiere gemeint sind.

2. Geformtes Fasermaterial, dessen reaktive Wirkstoffbeladung nach dem Zerfall des Fasermaterials in Einzelfasern und in Wasser auf der Faser verbleibt, enthaltend einen Faseranteil und gegebenenfalls einen Partikelanteil und enthaltend
- einen Anteil von einem oder mehreren Wirkstoffen zur Flüssigkeitsbehandlung, und enthaltend
- einen Anteil von einem oder mehreren quellfähigen Polymeren als adhäsiv wirkenden Hilfsstoffen und gegebenenfalls enthaltend
- einen Anteil von einem oder mehreren in der Flüssigkeit feldaktivierbaren Hilfsstoffen,
wobei mindestens ein Wirkstoff in Form einer Beschichtung und/oder Imprägnierung zumindest eines Teils der das Fasermaterial bildenden Fasern und/oder Partikeln vorliegt und wobei der Wirkstoffinhalt das Merkmal a) aufweist und wobei der oder die gegebenenfalls vorliegende(n) Hilfsstoff(e) mindestens eines der Merkmale c) und/oder d) aufweist,
a) dass mindestens ein Wirkstoff in der Form einer Beschichtung und/oder Imprägnierung in definiert inhomogener Verteilung in dem Fasermaterial derart angeordnet ist, dass der Wirkstoff in einem vorbestimmten Anteil der das Fasermaterial bildenden Fasern und/oder Partikeln in einer vorbestimmten Menge vorliegt und daß der Wirkstoff in einem weiteren vorbestimmten Anteil der das Fasermaterial bildenden Fasern und/oder Partikeln nicht oder in einer vom ersten vorbestimmten Anteil der das Fasermaterial bildenden Fasern und/oder Partikeln abweichenden Menge vorhanden ist;
c) daß feldaktivierbare Hilfsstoffe mittels adhäsiv wirkender Hilfsstoffe in und/oder an dem Fasermaterial gebunden sind und zusätzlich das Fasermaterial mindestens einen Wirkstoff zur Flüssigkeitsbehandlung enthält; und
d) daß feldaktivierbare Hilfsstoffe durch mindestens eine der Feldwirkungen Graviationsfeld, Fliehkraftfeld, Magnetfeld und elektrisches Feld in der Flüssigkeit aktivierbar sind.

3. Fasermaterial nach Anspruch 2, **dadurch gekennzeichnet, daß** der adhäsiv wirkende Hilfsstoff ausgewählt wird aus der Gruppe bestehend aus Flockmitteln, Alginaten, Chitosan, Alginsäure und Carboxymethylcellulose.

4. Fasermaterial nach einem der Ansprüche 1 oder 2, **dadurch gekennzeichnet, daß** mindestens ein Wirkstoff zur Flüssigkeitsbehandlung in Form einer Beschichtung und/oder Imprägnierung zumindestens eines Teils der das Fasermaterial bildenden Fasern vorliegt und zusätzlich in Form von Partikeln vorliegt.

5. Fasermaterial nach einem der Ansprüche 1 oder 2, **dadurch gekennzeichnet, daß** der oder die Wirkstoff(e) zur Flüssigkeitsbehandlung ausgewählt wird aus der Gruppe bestehend aus den zur lonenaufnahme fähigen festen organischen Stoffen, zur lonenaufnahme fähigen flüssigen oder gelförmigen organischen Stoffen, Huminstoffen, zur lonenaufnahme fähigen anorganischen Stoffen, zur Aufnahme von Metallen und Metalloiden und ihren Verbindungen fähigen anorganischen Stoffen, zur Havarieölaufnahme aus Wasser fähigen lipophilen Stoffen, Aktivkohle, zur Amalgambildung fähigen Metallen, zur Disulfidbildung fähigen Stoffen, zur Mercaptidbildung fähigen Stoffen, zur Bildung von Komplexen mit anorganischen Stoffen fähigen organischen Stoffen, schwerlöslichen Hydroxiden, Aktiv-Kohlenstoff-Partikeln, Aktiv-Kohlenstoff-Fasern. mit Stickstoff angereicherten Aktivkohlenstoffen, mit Stickstoff und Schwermetallen angereicherten Aktivkohlenstoffen, mit Carboxylatgruppen angereicherten Aktivkohlenstoffen, mit Carboxylsäuregruppen angereicherten Aktivkohlenstoffen, mit Sulfonatgruppen angereicherten Aktivkohlenstoffen, mit Sulfonsäuregruppen angereicherten Aktivkohlenstoffen, Fulleren-Kohlenstoffen und ihren Derivaten, Zeolithen, Metallhydriden mit legierungsartig gebundenem Wasserstoff, metallischem Zink, Hydriden aus der Gruppe der Platinmetalle, mit Carboxylatgruppen angereicherten Ölen, Wachsen oder Harzen, mit Carboxylsäuregruppen angereicherten Ölen, Wachsen oder Harzen, überwiegend aliphatischen hochsiedenden Ölen, immobilisierten Enzymen, Schichtsilikaten oder deren Kombinationen, und zur Bindung dispergierter Schwebstoffe fähiger Flockungsmittel.

6. Fasermaterial nach einem der Ansprüche 2 bis 5, **dadurch gekennzeichnet, daß** der oder die Wirkstoff(e) zur Flüssigkeitsbehandlung so ausgewählt wird, daß dieser auf dem Fasermaterial verbleibt und Stoffe aus der zu behandelnden Flüssigkeit bindet, und insbesondere ausgewählt wird aus der Gruppe bestehend aus Alginsäuren und ihren Salzen, Chitosanen und ihren Salzen, polymeren Kohlehydraten und deren Derivaten, Polyacrylsäuren, polymeren Aminen und deren Salzen, organischen Flockungsmitteln, Huminstoffen, insbesondere den Huminstoffen, aus denen durch eines oder mehrere Verfahren der Fällung, Flockung, Filtration die wasserlösliche Huminstofffraktion abgetrennt wurde, Oxiden und Hydroxiden der Schwermetalle Hafnium, Niob, Cer, Wolfram, Molybdän und Germanium, Enzymen, Proteinen, Zeolithen, Agar, Gelatine, anionischen Gelier- und Verdickungsmitteln, kationischen Gelier- und Verdickungsmitteln, Carbonaten oder Kombinationen dieser Wirkstoffe.

7. Fasermaterial nach einem der Ansprüche 1 bis 6, **dadurch gekennzeichnet, daß** der Wirkstoff eine oder mehrere der Substanzen ausgewählt aus der Gruppe bestehend aus Kunststoff, Metall, Keramik, Kohlenstoff, Cellulose, Glas, Bor, Siliciumcarbid, der schwerlöslichen oder unlöslichen Oxide und/oder Mischoxide oder deren Kombinationen enthält.

8. Fasermaterial nach einem der Ansprüche 1 bis 7, **dadurch gekennzeichnet, daß** der Wirkstoff als Bestandteil mindestens ein Element enthält, das a) eine hohe Neigung zur Bildung von Komplexen hat und/oder b) dessen Oxide und/oder Mischoxide sich einfach durch Hydrolyse und/oder Oxidation in der Form hochporöser Substanz mit ausgedehnter innerer und äußerer Fest-Fluid-Phasengrenzfläche bilden lassen.

9. Fasermaterial nach einem der Ansprüche 1 bis 8, **dadurch gekennzeichnet, daß** der Wirkstoff eine oder mehrere der Substanzen ausgewählt aus der Gruppe bestehend aus Oxiden und Hydroxiden des Zirkons, Titans, Hafniums, Niobs, Tantals, Zinns, Cers, Siliciums, Aluminiums, Eisens, Mangans, Molybdäns, Wolframs, Germaniums, oder deren Kombinationen enthält.

10. Fasermaterial nach einem der Ansprüche 1 bis 9, **dadurch gekennzeichnet, daß** es sich um Papiere oder um faserhaltige Formkörper von beliebiger Form handelt.

11. Fasermaterial nach einem der Ansprüche 1 bis 10, **dadurch gekennzeichnet, daß** dem Fasermaterial ein Spannungszustand aufgeprägt worden ist.

12. Fasermaterial nach einem der Ansprüche 1 bis 9, **dadurch gekennzeichnet. daß** das Fasermaterial einen Leicht- und/oder Schwermaterial-Zuschlag enthält.

13. Fasermaterial nach einem der Ansprüche 1 bis 10, **dadurch gekennzeichnet, daß** das Fasermaterial mit mindestens einer oder mehreren der Vorrichtungen ausgewählt aus der Gruppe bestehend aus Schwimmer, Anker, Boje und Haltevorrichtung verbunden ist und/oder mit mindestens einer Spannvorrichtung verbunden ist, mittels derer dem Fasermaterial durch mechanische Zugwirkung, insbesondere durch Federzug oder Gummizug, ein Spannungszustand aufgeprägt ist.

14. Fasermaterial nach einem der Ansprüche 1 bis 11, **dadurch gekennzeichnet, daß** es sich um lineare oder flächige Fasergebilde handelt, die durch den Zusatz von durch Feldwirkungen aktivierbaren Partikeln und/oder Fasern derart ausgerüstet sind, daß ihnen in der behandelten Flüssigkeit durch mindestens eine der direkten oder indirekten Feldwirkungen Gravitation, Magnetismus, Elektrizität und Feststoffgitter eine mechanische Zugspannung aufgeprägt wird.

15. Fasergebilde nach Anspruch 14, **dadurch gekennzeichnet, daß** die mechanische Zugspannung im Gravitationsfeld mindestens teilweise durch Auftriebspartikel und/oder Beschwerungs-Partikel hervorgerufen wird.

16. Fasergebilde nach Anspruch 15, **dadurch gekennzeichnet, daß** die Auftriebspartikel und/oder Beschwerungs-Partikel innere und/oder äußere Bestandteile der Substanz der Fasergebilde sind oder mit denen das Fasergebilde verbunden ist.

17. Fasergebilde nach Anspruch 14, **dadurch gekennzeichnet, daß** die mechanische Zugspannung mindestens teilweise durch Federkraft und/oder mindestens teilweise durch magnetische und/oder elektromagnetische Felder hervorgerufen wird.

18. Fasergebilde nach einem der Ansprüche 14 bis 16, **dadurch gekennzeichnet, daß** die Auftriebs- oder Beschwerungspartikel eine oder mehrere der Formen Beschichtung, Partikel, Fasern, Hohlkörper, bläschenund schaumförmige Hohlkörper und Hohlfaser haben.

19. Fasergebilde nach einem der Ansprüche 1 bis 18, **dadurch gekennzeichnet, daß** das Fasergebilde Sorbentien enthält.

20. Fasermaterial nach einem der Ansprüche 1 bis 19, **dadurch gekennzeichnet, daß** das Fasermaterial Huminsäuren enthaltende Partikel enthält, welche durch das Niederschlagen von Huminsäuren mit einem reduzierten Gehalt an wasserlöslichen Komponenten auf einem Trägermaterial hergestellt wurden.

21. Verfahren zur Herstellung des Fasermaterials nach Ansprüchen 1 und 2 umfassend die Maßnahmen:
i) Herstellung eines überwiegend faserhaltigen wäßrigen Breis aus mindestens einer Faserkomponente, die mit mindestens einem Wirkstoff beschichtet und/oder imprägniert ist oder nach der Herstellung des überwiegend faserhaltigen wäßrigen Breis mit mindestens einem Wirkstoff beschichtet und/oder imprägniert wird, oder die keinen Wirkstoff aufweist, aber im überwiegend faserhaltigen wäßrigen Brei zusammen mit mindestens einem Wirkstoff in Partikelform und/oder mit Wirkstoff beschichteten oder imprägnierten Partikeln vorliegt,
ii) Mischung des nach Schritt i) erhaltenen überwiegend faserhaltigen wäßrigen Breis mit mindestens einem weiteren überwiegend faserhaltigen wäßrigen Brei aus mindestens einer weiteren Faserkomponente, die entweder keinen Wirkstoff oder eine von dem ersten Faserbrei abweichende Menge des gleichen Wirkstoffes oder einen von dem ersten Faserbrei abweichenden Wirkstoff aufweisen, und
iii) Herstellung des Fasermaterials aus dieser Mischung überwiegend faserhaltiger wäßriger Breie in an sich bekannter Weise.

22. Verfahren nach Anspruch 21, **dadurch gekennzeichnet, daß** der gemäß Schritt ii) zugemischte überwiegend faserhaltige wäßrige Brei einen Wirkstoff in Form von Partikeln aufweist, die auf den Fasern fixiert sind, wobei der Wirkstoff gleich oder unterschiedlich zum Wirkstoff ist, der sich auf den Fasern des überwiegend wäßrigen Breis befindet, der nach Schritt i) vorgelegt wird.

23. Verfahren nach einem der Ansprüche 21 bis 22 zur Herstellung des Fasermaterials enthaltend mindestens eines der Merkmale c) und/oder d) nach Anspruch 1 umfassend die Maßnahme:
Herstellung eines überwiegend faserhaltigen wäßrigen Breis aus mindestens einer Faserkomponente, die mit mindestens einem adhäsiv wirkenden Hilfsstoff imprägniert ist oder die keinen Hilfsstoff aufweist, aber im überwiegend faserhaltigen wäßrigen Brei zusammen mit mindestens einem adhäsiv wirkenden Hilfsstoff in Lösung und/oder mit adhäsiv wirkendem Hilfsstoff beschichteten oder imprägnierten Partikeln vorliegt, wobei mindestens eine Hilfsstoffkomponente Wirkstoffeigenschaften haben kann.

24. Verfahren nach Anspruch 23, **dadurch gekennzeichnet, daß** der gemäß Schritt ii) zugemischte überwiegend faserhaltige wäßrige Brei einen Wirkstoff in Form von Partikeln aufweist, die auf den Fasern fixiert sind, wobei der Wirkstoff gleich oder unterschiedlich zum Wirkstoff ist, der sich auf den Fasern des überwiegend wäßrigen Breis befindet, der nach Schritt i) vorgelegt wird.

25. Verfahren nach einem der Ansprüche 21 bis 24, **dadurch gekennzeichnet, daß** der gemäß Schritt ii) zugemischte überwiegend faserhaltige wäßrige Brei Partikel enthält, die Oxide und/oder Hydroxide des Zirkons, Titans, Hafniums, Niobs, Tantals, Zinns, Cers, Siliciums, Aluminiums, Eisens, Mangans, Molybdäns, Wolframs oder Germaniums oder deren Kombinationen sind und daß der Wirkstoff, mit dem die Fasern des überwiegend wäßrigen und nach Schritt i) vorgelegten Breis beschichtet und/oder imprägniert sind, ausgewählt wird aus der Gruppe bestehend aus den zur lonenaufnahme fähigen Fest-Harzen, zur lonenaufnahme fähigen Flüssig-Harzen, Huminstoffen, zur lonenaufnahme fähigen anorganischen Stoffen, zur Aufnahme von Metallen und Metalloiden und ihren Verbindungen fähigen anorganischen Stoffen, zur Havarieöl-aufnahme aus Wasser fähigen lipophilen Stoffen, Aktivkohle, zur Amalgam-bildung fähigen Metallen, zur Disulfidbildung fähigen Stoffen, zur Mercaptid-bildung fähigen Stoffen, zur Bildung von Komplexen mit anorganischen Stoffen fähigen organischen Stoffen, schwerlöslichen Hydroxiden, Aktiv-Kohlenstoff-Partikeln, Aktiv-Kohlenstoff-Fasern, mit Stickstoff angereicherten Aktivkohlen-stoffen, mit Carboxylatgruppen angereicherten Aktivkohlen-stoffen, mit Carboxylsäuregruppen angereicherten Aktivkohlenstoffen, mit Sulfonatgruppen angereicherten Aktivkohlenstoffen, mit Sulfonsäuregruppen angereicherten Aktivkohlenstoffen, Fulleren-Kohlenstoffen und ihren Derivaten, Zeolithen, Metallhydriden mit legierungsartig gebundenem Wasserstoff, metallischem Zink, Hydriden aus der Gruppe der Platinmetalle, mit Carboxylatgruppen angereicherten Ölen, Wachsen oder Harzen, mit Carboxylsäuregruppen angereicherten Ölen, Wachsen oder Harzen, überwiegend aliphatischen hochsiedenden Ölen, immobilisierten Enzymen, Schichtsilikaten oder deren Kombinationen.

26. Verfahren nach einem der Ansprüche 21 bis 24 zur Herstellung der Fasergebilde nach Anspruch 12, **dadurch gekennzeichnet, daß** diesen Fasergebilden entweder auf der Stufe der Herstellung der Faserbreie oder nach der Herstellung der Fasergebilde Partikel und/oder Fasern zugesetzt werden, deren wirksame Dichte kleiner ist als die Dichte der behandelten Flüssigkeit, und daß diesen Fasergebilden entweder auf der Stufe der Herstellung der Faserbreie oder nach der Herstellung der Fasergebilde Partikel und/oder Fasern zugesetzt werden, deren wirksame Dichte größer ist als die Dichte der behandelten Flüssigkeit, wobei die scheinbaren Dichten der Partikel und/oder Fasern so ausgewählt werden, daß das Fasergebilde im untergetauchten Zustand eine scheinbare Dichte aufweist, die annähernd der Dichte der zu behandelnden Flüssigkeit entspricht.

27. Verfahren nach einem der Ansprüche 21 bis 24 zur Herstellung der Fasergebilde nach Anspruch 12, **dadurch gekennzeichnet, daß** Fasergebilde mit einem Anteil leichter Komponenten, die die Fasergebilde für sich in der zu behandelnden Flüssigkeit aufschwimmen lassen (Leichtfasergebilde), mit einem Fasergebilde mit einem Anteil schwerer Komponenten, die die Fasergebilde für sich in der zu behandelnden Flüssigkeit absinken lassen (Schwerfasergebilde) in an sich bekannter Weise verbunden werden.

28. Verfahren nach einem der Ansprüche 21 bis 24 zur Herstellung der Fasergebilde nach Anspruch 1, **dadurch gekennzeichnet, daß** jeweils von dem gesamten Faser- und/oder Partikelbestandteil dieser Teile mindestens ein Anteil der als wirkstoffbeschichtete und/oder wirkstoffimprägnierte Fasern und/oder wirkstoffbeschichtete und/oder wirkstoff-imprägnierte Partikel vorliegenden Anteile seine Wirkstoffbeschichtung und/oder Wirkstoffimprägnation in der Folge mindestens einer chemischen und/oder physikalischen Reaktion in der Gegenwart eines sie umgebenden Fluids erhalten hat, von der die anderen als Fasern und/oder Partikel vorhandenen Anteile nicht und/oder nicht in gleicher Weise betroffen werden, indem dies durch mindestens eine der Maßnahmen herbeigeführt wird, nämlich
- durch Separation der derart mit Wirkstoff zu beschichtenden Fasern und/oder mit Wirkstoff zu beschichtenden Partikeln während der chemischen und/oder physikalischen Reaktion von den nicht derart mit Wirkstoff zu beschichtenden Fasern und/oder mit Wirkstoff zu beschichtenden Partikeln und/oder
- durch unterschiedliche Stoffwahl für die Substanz, aus der die Fasern und/oder Partikel zusammengesetzt sind und Auswahl geeigneter reaktiver Stoffe für die Zusammensetzung der mit Wirkstoff zu beschichtenden Fasern und/oder mit Wirkstoff zu beschichtenden Partikeln während der chemischen und/oder physikalischen Reaktion.

29. Verfahren nach einem der Ansprüche 21 bis 24 zur Herstellung der Fasergebilde nach Anspruch 1, **dadurch gekennzeichnet, daß** die mit Wirkstoffen beladenen Papiere, Fasermaterialien und/oder faserhaltigen Partikeln aus mindestens einer der Komponenten aus den Gruppen der mit mindestens einem Wirkstoff beladenen Papiere, Fasermaterialien, faserhaltigen Partikeln, deren Produktions-Vorstufen, Fasersuspensionen, entwässerten Fasern, deren Vorstufen bestehen, deren Wirkstoffbeladung in getrennten Prozeßstufen vorgenommen wurde und Partikeln oder Fasern, deren Substanz überwiegend oder vollständig aus Wirkstoff bestehen.

30. Verfahren zur Herstellung von Fasermaterialien nach einem der Ansprüche 21 bis 29, **dadurch gekennzeichnet, daß** die Papiere, Fasermaterialien und faserhaltigen Formkörper gemäß einem der Ansprüche 1 bis 20
- durch Mischung von mindestens zwei wirkstoffbeladenen Faserkomponenten
- durch Mischung von mindestens einer wirkstoffbeladenen und mindestens einer nicht-wirkstoffbeladenen Faserkomponente
- durch Mischung mindestens einer wirkstoffbeladenen Faserkomponente und mindestens einer wirkstoffbeladenen Partikelkomponente
- durch Mischung mindestens einer wirkstoffbeladenen Faserkomponente und mindestens einer nicht-wirkstoffbeladenen Partikel komponente
- durch Mischung mindestens einer nicht-wirkstoffbeladenen Faserkomponente und mindestens einer wirkstoffbeladenen Partikelkomponente
hergestellt werden und wobei die Faserkomponente und/oder Partikelkomponente auch vollständig aus Wirkstoff bestehen kann.

31. Verfahren zur Herstellung von faserhaltigen Formkörpem nach Anspruch 10, **dadurch gekennzeichnet, daß** zur Herstellung der faserhaltigen Formkörper wirkstoffbeladene Papiere und/oder Fasermaterialien und/oder nicht-wirkstoffbeladene Papiere und/oder Fasermaterialien gemahlen und/oder gebrochen und nachfolgend zu einen neuen Körper geformt werden.

32. Verfahren zur Herstellung von Fasergebilden enthaltend Fasermaterial nach einem der Ansprüche 1 bis 20, **dadurch gekennzeichnet, daß** das Fasermaterial mit Gebrauchsvorrichtungen verbunden ist und/oder in diese eingebettet ist.

33. Verwendung der Fasermaterialien nach einem der Ansprüche 1 bis 20 in der Lebensmittelzubereitung, Genußmittelzubereitung, Getränkeherstellung, Wasserenthärtung, Wasserreinigung, insbesondere der Trinkwasser-, Grundwasser-, Grubenwasser-, Abwasser-, Badewasser-, Brauchwasser-, Deponiewasser- und Oberflächenwasserreinigung, Havarieölbeseitigung aus Oberflächengewässern, industriellen Reinigungsprozessen, insbesondere in der chemischen Industrie, in der Genuß- und Lebensmittel-Industrie, in der Metall-Industrie, zur Sanierung und Sicherung von Altlasten und Altablagerungen, zur Sanierung und Sicherung von Altstandorten, zur Erdreich- und Sedimentreinigung, in der Rohstoffgewinnung, Tierzucht, insbesondere der Zucht von Fischen, Muscheln und Perlen, Krebsen, Garnelen und anderen Krustentieren, in der Haustier- und Zimmerpflanzenhaltung, insbesondere der Aquarienfischhaltung, in der Tierzucht und Tiermast, Gärtnerei, Landwirtschaft und Gewinnung von Grundstoffen, Metallen, Metalloiden und Edelmetallen, oder zur Reinigung oder der Verbesserung der Bekömmlichkeit oder des Geschmacks von Wasser, Getränken oder Nahrungsmitteln.

## Claims

1. Shaped and wet-strength fibrous material containing a proportion of fibers and, as the case may be, a proportion of particles, and containing
- a proportion of one or more active substances for the treatment of liquids, and, as the case may be, containing
- a proportion of one or more auxiliary materials which are field-activatable in the liquid,
with at least one active substance being present in form of a coating and/or impregnation layer of at least a part of the fibers and/or particles composing the fibrous material, and with the content of active substances having at least the feature described in a), and with the auxiliary material(s), if such is (are) present, having at least one of the features described in c) and/or d),
a) that at least one active substance in form of a coating and/or impregnation layer is distributed in a defined inhomogeneous manner in the fibrous material in such a way that the active substance in a predefined proportion of fibers and/or particles composing the fibrous material is present in a predefined quantity, and that the active substance in another predefined proportion of fibers and/or particles composing the fibrous material is not present or present in a quantity which differs from that in the first predefined proportion of fibers and/or particles composing the fibrous material;
c) that field-activatable auxiliary materials are bonded in and/or to the fibrous material by means of auxiliary agents having adhesive effect, and with, in addition, the fibrous material containing at least one active substance for the treatment of liquids; and
d) that field-activatable auxiliary materials are activatable in the liquid by at least one of the field effects gravitation field, centrifugal force field, magnetic field and electric field,
with the reservation that, where the fibrous material is a paper, that is in any case a single-layer paper.

2. Shaped fibrous material whose reactive load of active substances remains on the fiber after the decomposition of the fibrous material into individual fibers and water, containing a proportion of fibers and, as the case may be, a proportion of particles, and containing
- a proportion of one or more active substances for the treatment of liquids, and containing
- a proportion of one or more swellable polymers as auxiliary agents with adhesive effect, and, as the case may be, containing
- a proportion of one or more auxiliary materials which are field-activatable in the liquid,
with at least one active substance being present in form of a coating and/or impregnation layer of at least a part of the fibers and/or particles composing the fibrous material, and with the content of active substances having the feature described in a), and with the auxiliary material(s), if such is (are) present, having at least one of the features described in c) and/or d),
a) that at least one active substance in form of a coating and/or impregnation layer is distributed in a defined inhomogeneous manner in the fibrous material in such a way that the active substance in a predefined proportion of fibers and/or particles composing the fibrous material is present in a predefined quantity, and that the active substance in another predefined proportion of fibers and/or particles composing the fibrous material is not present or present in a quantity which differs from that in the first predefined proportion of fibers and/or particles composing the fibrous material;
c) that field-activatable auxiliary materials are bonded in and/or to the fibrous material by means of auxiliary agents having adhesive effect, and with, in addition, the fibrous material containing at least one active substance for the treatment of liquids; and
d) that field-activatable auxiliary materials are activatable in the liquid by at least one of the field effects gravitation field, centrifugal force field, magnetic field and electric field.

3. Fibrous material as defined in claim 2, wherein the auxiliary agent having adhesive effect is selected from a group comprising flocculants, alginates, chitosan, alginic acid and carboxymethylcellulose.

4. Fibrous material as defined in claim 1 or claim 2, wherein at least one active substance for the treatment of liquids is present in form of a coating and/or impregnation of at least a part of the fibers composing the fibrous material and, in addition, is present in form of particles.

5. Fibrous material as defined in claim 1 or claim 2, wherein the active substance(s) for the treatment of liquids is selected from a group comprising the solid organic substances capable of ion absorption, liquid or gel-like substances capable of ion absorption, humic substances, anorganic substances capable of ion absorption, anorganic substances capable of absorbing metals and metalloids and their compounds, lipophilic substances capable of removing oil spills resulting from averages, activated carbon, metals capable of forming amalgam, substances capable of forming disulfides, substances capable of forming mercaptides, organic substances capable of forming complexes with anorganic substances, hydroxides of low solubility, activated carbon particles, activated carbon fibers, activated carbons enriched with nitrogen, activated carbons enriched with nitrogen and heavy metals, activated carbons enriched with carboxylate groups, activated carbons enriched with carboxylic acid groups, activated carbons enriched with sulphonate groups, activated carbons enriched with sulphonic acid groups, fulleren carbons and their derivates, zeolites, metal hydrides which chemically bond hydrogen to inter-metallic alloys, metallic zinc, hydrides from platinum group metals, oils, waxes or resins enriched with carboxylate groups, oils, waxes or resins enriched with carboxylic acid groups, mostly aliphatic high-boiling oils, immobilized enzymes, layer silicates or their combinations, and flocculants capable of bonding dispersed suspended solids.

6. Fibrous material as defined in anyone of claims 2 to 5, wherein the or each active substance serving for the treatment of liquids is selected in a way that it remains on the fibrous material and bonds substances contained in the liquid to be treated, and is especially selected from the group comprising alginic acids and their salts, chitosans and their salts, polymeric carbohydrates and their derivates, polyacrylic acids, polymeric amines and their salts, organic flocculants, humic substances, in particular humic substances whose water-soluble fraction has been separated by one or more of the procedures precipitation, flocculation and filtration, oxides and hydroxides of the heavy metals hafnium, niobium, cerium, tungsten, molybdenum and germanium, enzymes, proteins, zeolites, agar, gelatin, anionic gelatinizing and thickening agents, cationic gelatinizing and thickening agents, carbonates or combinations of these active substances.

7. Fibrous material as defined in anyone of claims 1 to 6, wherein the active substance contains one ore more substances selected from the group comprising plastics, metals, ceramics, carbons, cellulose, glass, boron, silicon carbide, oxides and/or mixed oxides of low or no solubility or their combinations.

8. Fibrous material as defined in anyone of claims 1 to 7, wherein the active substance contains at least one component with a) high tendency of complex formation and/or b) whose oxides and/or mixed oxides can be easily generated as a result of hydrolysis and/or oxidation in form of a highly porous substance with a large inner and outer solid-fluid-phase boundary.

9. Fibrous material as defined in anyone of claims 1 to 8, wherein the active substance comprises one or more of the substances selected from the group comprising oxides and hydroxides of zirconium, titanium, hafnium, niobium, tantalum, tin, cerium, silicon, aluminium, iron, manganese, molybdenum, tungsten, germanium, or their combinations.

10. Fibrous material as defined in anyone of claims 1 to 9, wherein the fibrous material is a paper or a fiber-containing body of any shape.

11. Fibrous material as defined in anyone of claims 1 to 10, wherein the fibrous material has been put under tension.

12. Fibrous material as defined in anyone of claims 1 to 9, wherein the fibrous material is provided with a loading of additional light and/or heavy materials.

13. Fibrous material as defined in anyone of claims 1 to 10, wherein the fibrous material is fixed to at least one or more devices selected from the group comprising float, anchor, buoy and holder and/or is fixed to at least one tensioning device which imposes tension on the fibrous material by mechanical traction, in particular through spring or rubber cord action.

14. Fibrous material as defined in anyone of claims 1 to 11, wherein the fibrous material is a linear or plane fibrous product finished with particles and/or fibers activatable by field effects so that in the treated liquid, they are put under mechanical tension by at least one of the direct or indirect field effects gravitation, magnetism, electricity and solid elements lattice.

15. Fibrous products as defined in claim 14, wherein the mechanical tension in a gravitation field is at least partly created by buoyancy particles and/or settling particles.

16. Fibrous products as defined in claim 15, wherein the buoyancy particles and/or settling particles are internal and/or external components of the fibrous product substance or fixed to the fibrous products.

17. Fibrous products as defined in claim 14, wherein the mechanical tension is at least partly created by spring force and/or at least partly created by magnetic and/or electromagnetic fields.

18. Fibrous products as defined in anyone of claims 14 to 16, wherein the buoyancy particles or settling particles have one or more of the forms coating, particles, fibers, hollow bodies, bubble- and foam-like hollow bodies and hollow fibers.

19. Fibrous products as defined in anyone of claims 1 to 18, wherein the fibrous products contain sorbents.

20. Fibrous material as defined in anyone of claims 1 to 19, wherein the fibrous material contains particles comprising humic acids, with the particles being produced by precipitation of humic acids having a reduced content of water-soluble components on a carrier material.

21. Process for the production of fibrous material as defined in claim 1 and claim 2, comprising the following procedures:
i) production of a mainly fiber-containing aqueous pulp comprising at least one fiber component which is coated and/or impregnated with at least one active substance, or will be coated and/or impregnated after the production of the mainly fiber-containing aqueous pulp having at least one active substance, or which does not include any active substance but is present in the mainly fiber-containing aqueous pulp together with at least one active substance by way of particles and/or of particles coated and/or impregnated with active substances,
ii) mixing of the mainly fiber-containing aqueous pulp obtained according to step i) with at least one further mainly fiber-containing aqueous pulp composed of at least one further fiber component having no active substance, or having the same active substance as the first fiber pulp but in another quantity, or having an active substance different from that of the first fiber pulp, and
iii) production of fibrous material from that mixture of mainly fiber-containing aqueous pulps utilizing a method known per se.

22. Process as defined in claim 21, wherein the mainly fiber-containing aqueous pulp added to the mixture according to step ii) comprises an active substance in form of particles fixed onto the fibers, with the active substance being identical with or different from the active substance present on the fibers of the mainly aqueous pulp as per step i).

23. Process as defined in claim 21 or claim 22 for the production of fibrous material having at least one of the features c) and/or d) as defined in claim 1, comprising the following procedure:
production of a mainly fiber-containing aqueous pulp comprising at least one fiber component which is impregnated with at least one auxiliary agent having adhesive effect or which does not include any auxiliary agent but is present in the mainly fiber-containing aqueous pulp together with at least one dissolved auxiliary agent having adhesive effect and/or with particles coated or impregnated with an auxiliary agent having adhesive effect, with the option that at least one auxiliary agent component has active substance effects.

24. Process as defined in claim 23, wherein the mainly fiber-containing aqueous pulp added to the mixture in compliance with step ii) comprises an active substance in form of particles fixed onto the fibers, with the active substance being identical with or different from the active substance present on the fibers of the mainly aqueous pulp as per step i).

25. Process as defined in any one of claims 21 to 24, wherein the mainly fiber-containing aqueous pulp added to the mixture in according to step ii) comprises particles being oxides and/or hydroxides of zirconium, titanium, hafnium, niobium, tantalum, tin, cerium, silicon, aluminium, iron, manganese, molybdenum, tungsten or germanium or their combinations, and wherein the active substance with which the fibers of the mainly aqueous pulp as per step i) are coated and/or impregnated is selected from the group comprising solid resins capable of ion absorption, liquid resins capable of ion absorption, humic substances, anorganic substances capable of ion absorption, anorganic substances capable of absorbing metals and metalloids and their compounds, lipophilic substances capable of removing oil spills resulting from averages, activated carbon, metals capable of forming amalgam, substances capable of forming disulphides, substances capable of forming mercaptides, organic substances capable of forming complexes with anorganic substances, hydroxides of low solubility, activated carbon particles, activated carbon fibers, activated carbons enriched with nitrogen, activated carbons enriched with carboxylate groups, activated carbons enriched with carboxylic acid groups, activated carbons enriched with sulphonate groups, activated carbons enriched with sulphonic acid groups, fulleren carbons and their derivates, zeolites, metal hydrides which chemically bond hydrogen to inter-metallic alloys, metallic zinc, hydrides from platinum group metals, oils, waxes or resins enriched with carboxylate groups, oils, waxes or resins enriched with carboxylic acid groups, mostly aliphatic high-boiling oils, immobilized enzymes, layer silicates, or their combinations.

26. Process as defined in any one of claims 21 to 24 for the production of fibrous products as defined in claim 12, wherein particles and/or fibers having a lower effective density than the treated liquid are added to these fibrous products, either during the production stage of the fiber pulps or after the production of the fibrous products, and wherein particles and/or fibers having a higher effective density than the treated liquid are added to these fibrous products, either during the production stage of the fiber pulps or after the production of the fibrous products, with the apparent densities of the particles and/or fibers being selected in such a way that the fibrous products, when immersed in the liquid, have an apparent density which is roughly equal to the density of the liquid to be treated.

27. Process as defined in any one of claims 21 to 24 for the production of fibrous products as defined in claim 12, wherein fibrous products containing a proportion of light components which are responsible for the floating of the fibrous products in the liquid to be treated (light fibrous products) are bonded in a manner known per se to a fibrous product containing a proportion of heavy components causing the sinking of the fibrous products in the liquid to be treated (heavy fibrous products).

28. Process as defined in any one of claims 21 to 24 for the production of fibrous products as defined in claim 1, wherein of the entire fiber and/or particle content of these fibrous products, at least one proportion present in form of fibers which are coated and/or impregnated with active substances and/or in form of particles which are coated and/or impregnated with active substances, has received its active substance coating and/or impregnation as a result of at least one chemical and/or physical reaction in the presence of an ambient fluid, said reaction not affecting or not in the same way affecting the other fiber and/or particle proportions, and wherein at least one of the following procedures is utilized, namely
- separation during the chemical and/or physical reaction of the fibers thus to be coated with active substances and/or of the particles to be coated with active substances from the fibers not thus to be coated with active substances and/or particles not to be coated with active substances and/or
- selection of different materials for the substance the fibers and/or particles are composed of, and selection of suitable reactive materials for the composition of the fibers to be coated with active substances and/or the particles to be coated with active substances during the chemical and/or physical reaction.

29. Process as defined in any one of claims 21 to 24 for the production of fibrous products as defined in claim 1, wherein the papers, fibrous materials and/or fiber-containing particles loaded with active substances comprise at least one of the components from the groups of papers, fibrous materials, fiber-containing particles, the pre-stages thereof, fiber suspensions, dehydrated fibers, the pre-stages thereof, loaded with at least one active substance as a result of separated process steps, and particles or fibers consisting mainly or fully of active substances.

30. Process for the production of fibrous materials as defined in any one of claims 21 to 29, wherein the papers, fibrous materials and fiber-containing shaped bodies, as defined in any one of claims 1 to 20 are produced
- by mixing at least two fiber components containing active substances,
- by mixing at least one fiber component containing active substances with at least one fiber component not containing active substances,
- by mixing at least one fiber component containing active substances and at least one particle component containing active substances
- by mixing at least one fiber component containing active substances and at least one particle component not containing active substances
- by mixing at least one fiber component not containing active substances and at least one particle component containing active substances,
and wherein the fiber component and/or particle component may fully consist of active substances.

31. Process for the production of fiber-containing shaped bodies as defined in claim 10, wherein the production of the fiber-containing shaped bodies is done by refining and/or breaking papers and/or fibrous materials containing active substances and/or papers and/or fibrous materials not containing active substances, and by subsequently shaping them to form a new body.

32. Process for the production of fibrous products containing fibrous material as defined in anyone of claims 1 to 20, wherein the fibrous material is fixed to and/or embedded in commodity goods.

33. Use of fibrous materials as defined in any one of claims 1 to 20 in the food production, preparation of luxury foods, production of beverages, water softening, water purification, in particular purification of drinking water, ground water, pit water, waste water, bath water, service water, dumpsite water and surface water, removal of average oil from surface waters, industrial cleaning processes, in particular in the chemical industry, in the luxury foods and food industries, in the metalworking industry, for the remediation and securing of contaminated sites and hazardous waste sites, for the remediation and securing of abandoned landfills, for the decontamination of soils and sediments, in the exploitation of raw materials, for animal breeding, in particular fish farming, shell and pearl cultivation, crab cultivation, cultivation of shrimps and other crustaceans, for keeping domestic animals and indoor plants, in particular keeping aquarium fish, for animal breeding and animal fattening, horticulture, agriculture and exploitation of basic materials, metals, metalloids and precious metals, or for the purification or the better digestibility or taste of water, beverages or food.

## Revendications

1. Matériau fibreux modelé et résistant à l'état humide, contenant une proportion de fibres et éventuellement une proportion de particules, et contenant
- une proportion d'une ou plusieurs substances actives pour le traitement de liquides, et éventuellement contenant
- une proportion d'une ou plusieurs matières auxiliaires activables dans le liquide par les effets des champs,
au moins une substance active étant présente sous forme d'une couverture et/ou une couche d'imprégnation d'au moins une partie des fibres et/ou particules constituant le matériau fibreux, et la teneur en substances actives ayant au moins la propriété décrite au point a) et la (les) matière(s) auxiliaire(s) éventuellement présente(s) ayant au moins une des propriétés décrites au point c) et/ou point d),
a) qu'au moins une substance active étant présente sous forme d'une couverture et/ou une couche d'imprégnation est disposée de manière non-homogène définie dans le matériau fibreux de telle sorte que, dans une proportion prédéfinie des fibres et/ou particules constituant le matériau fibreux, la substance active est présente en quantité prédéfinie, et que, dans une autre proportion prédéfinie des fibres et/ou particules constituant le matériau fibreux, la substance active n'est pas présente ou bien présente en une quantité qui diffère de celle de la première proportion prédéfinie des fibres et/ou particules constituant le matériau fibreux;
c) que des matières auxiliaires activables par les effets des champs sont fixées à l'aide de matières auxiliaires capables de former des fixations dans le matériau fibreux et/ou au matériau fibreux, et le matériau fibreux contenant en plus au moins une substance active pour le traitement de liquides; et
d) que des matières auxiliaires activables par les effets des champs sont activables dans le liquide à l'aide d'au moins un des effets des champs de type champ de gravitation, champ de force centrifuge, champ magnétique et champ électrique,
à condition que, pour le matériau fibreux étant un papier, il s'agisse en tout cas de papiers à une couche.

2. Matériau fibreux modelé dont la charge réactive en substances actives reste sur les fibres après la décomposition du matériau fibreux en fibres individuelles et eau, contenant une proportion de fibres et éventuellement une proportion de particules, et contenant
- une proportion d'une ou plusieurs substances actives pour le traitement de liquides, et contenant
- une proportion d'une ou plusieurs polymères susceptibles de gonfler en tant que matières auxiliaires capables de former des fixations, et éventuellement contenant
- une proportion d'une ou plusieurs matières auxiliaires activables dans le liquide par les effets des champs,
au moins une substance active étant présente sous forme d'une couverture et/ou une couche d'imprégnation d'au moins une partie des fibres et/ou particules constituant le matériau fibreux, et la teneur en substances actives ayant la propriété décrite au point a) et la (les) substance(s) active(s) éventuellement présente(s) ayant au moins une des propriétés décrites au point c) et/ou d),
a) qu'au moins une substance active étant présente sous forme d'une couverture et/ou une couche d'imprégnation est disposée de manière non-homogène définie dans le matériau fibreux de telle sorte que, dans une proportion prédéfinie des fibres et/ou particules constituant le matériau fibreux, la substance active est présente en quantité prédéfinie, et que, dans une autre proportion prédéfinie des fibres et/ou particules constituant le matériau fibreux, la substance active n'est pas présente ou bien présente en une quantité qui diffère de celle de la première proportion prédéfinie des fibres et/ou particules constituant le matériau fibreux;
c) que des matières auxiliaires activables par les effets des champs sont fixées à l'aide de matières auxiliaires capables de former des fixations dans le matériau fibreux et/ou au matériau fibreux, et le matériau fibreux contenant en plus au moins une substance active pour le traitement de liquides; et
d) que des matières auxiliaires activables par les effets des champs sont activables dans le liquide à l'aide d'au moins un des effets des champs de type champ de gravitation, champ de force centrifuge, champ magnétique et champ électrique.

3. Matériau fibreux selon la revendication 2, **caractérisé par le fait que** la matière auxiliaire capable de former des fixations est sélectionnée du groupe comprenant les floculants, les alginates, chitosane, acide alginique et cellulose carboxyméthylique.

4. Matériau fibreux selon la revendication 1 ou 2, **caractérisé par le fait qu'**au moins une substance active pour le traitement de liquides est présente sous forme d'une couverture et/ou une couche d'imprégnation d'au moins une partie des fibres constituant le matériau fibreux, et en plus, est présente sous forme de particules.

5. Matériau fibreux selon la revendication 1 ou 2, **caractérisé par le fait que** la (les) substance(s) active(s) est (sont) sélectionnée(s) du groupe comprenant les matières organiques solides capables de capter des ions, les matières organiques sous forme de liquide ou gel capables de capter des ions, les substances humiques, les matières anorganiques capables de capter des ions, les matières anorganiques capables de capter des métaux et des métalloïdes et leurs composés, les matières lipophiles capables d'absorber des huiles déversées dans l'eau à la suite des avaries, charbon actif, les métaux capables de former des amalgames, les matières capables de former des sulfures, les matières capables de former des mercaptides, les matières organiques capables de former des complexes avec des matières anorganiques, les hydroxydes peu solubles, les particules de carbone activé, les fibres de carbone activé, les carbones activés enrichis en azote, les carbones activés enrichis en azote et métaux lourds, les carbones activés enrichis en groupes carboxylates, les carbones activés enrichis en groupes d'acide carboxylique, les carbones activés enrichis en groupes sulfonates, les carbones activés enrichis en groupes d'acide sulfonique, les carbones activés fullerènes et leurs dérivés, les zéolithes, les hydrures métalliques capables de stocker l'hydrogène, zinc métallique, les hydrures du groupe des platinoïdes, les huiles, cires ou résines enrichies en groupes carboxylates, les huiles, cires ou résines enrichies en groupes d'acide carboxylique, les huiles principalement aliphatiques à point d'ébullition élevé, les enzymes immobilisées, les phyllosilicates ou leurs combinaisons et les floculants capables d'agglutiner des matières suspendues dispersées.

6. Matériau fibreux selon une des revendications 2 à 5, **caractérisé par le fait que** la (les) substance(s) active(s) pour le traitement de liquides est sélectionnée(s) de telle sorte qu'elle reste sur le matériau fibreux et agglutine des matières présentes dans le liquide à traiter, et qu'elle est notamment sélectionnée du groupe comprenant les acides alginiques et leurs sels, les chitosanes et leurs sels, les glucides polymères et leurs dérivés, les acides polyacryliques, les amines polymères et leurs sels, les floculants organiques, les substances humiques, notamment les substances humiques dont la fraction soluble dans l'eau a été séparée par un ou plusieurs des procédés tels que la précipitation, la floculation et la filtration, les oxydes et hydroxydes des métaux lourds de type hafnium, niobium, cérium, tungstène, molybdène et germanium, les enzymes, les protéines, les zéolithes, agar, gélatine, les gélifiants et épaississants anioniques, les gélifiants et épaississants cationiques, les carbonates ou les combinaisons de ces substances actives.

7. Matériau fibreux selon une des revendications 1 à 6, **caractérisé par le fait que** la substance active contient une ou plusieurs des substances sélectionnée(s) du groupe comprenant les matières plastiques, les métaux, les céramiques, carbone, cellulose, verre, bore, carbure de silicium, les oxydes peu ou non solubles et/ou les oxydes mixtes ou leurs combinaisons.

8. Matériau fibreux selon une des revendications 1 à 7, **caractérisé par le fait que** la substance active contient au moins un composant qui a) est très susceptible de former des complexes et/ou b) dont les oxydes et/ou les oxydes mixtes peuvent être générés de manière simple par hydrolyse et/ou oxydation sous forme d'une substance très poreuse avec une ample interface interne et externe entre les phases solide et fluide.

9. Matériau fibreux selon une des revendications 1 à 8, **caractérisé par le fait que** la substance active contient une ou plusieurs substances sélectionnée(s) du groupe comprenant des oxydes et hydroxydes du zirkon, du titane, du hafnium, du niobium, du tantale, d'étain, du cérium, du silicium, d'aluminium, du fer, du manganèse, du molybdène, du tungstène, du germanium ou leurs combinaisons.

10. Matériau fibreux selon une des revendications 1 à 9, **caractérisé par le fait qu'**il s'agit de papiers ou de corps modelés fibreux de forme quelconque.

11. Matériau fibreux selon une des revendications 1 à 10, **caractérisé par le fait que** le matériau fibreux est mis sous tension.

12. Matériau fibreux selon une des revendications 1 à 9, **caractérisé par le fait que** le matériau fibreux contient un agrégat de matériaux légers et/ou de matériaux lourds.

13. Matériau fibreux selon une des revendications 1 à 10, **caractérisé par le fait que** le matériau fibreux est attaché à au moins un ou plusieurs des dispositifs sélectionnés du groupe contenant flotteur, ancre, bouée et dispositif de retenue, et/ou qu'il est attaché à au moins un dispositif tendeur dont la force mécanique de traction, notamment par effet de ressort ou d'élastique, permet de mettre le matériau fibreux sous tension.

14. Matériau fibreux selon une des revendications 1 à 11, **caractérisé par le fait qu'**il s'agit de structures fibreuses linéaires ou planes munies de particules et/ou fibres activables par les effet des champs de sorte qu'au moins un des effets directs ou indirects de type gravitation, magnétisme, électricité et réseau de matières solides dans le liquide traité les met sous tension mécanique.

15. Structures fibreuses selon la revendication 14, **caractérisées par le fait que** la force mécanique de traction dans le champ de gravitation et causée, au moins en partie, par la flottation de particules et/ou la sédimentation de particules.

16. Structures fibreuses selon la revendication 15, **caractérisées par le fait que** les particules flottantes et/ou les particules déposées sont des composants internes et/ou externes de la substance des structures fibreuses ou que lesdites particules sont fixées aux structures fibreuses.

17. Structures fibreuses selon la revendication 14, **caractérisées par le fait que** la force mécanique de traction et causée, au moins en partie, par force de ressort et/ou causée, au moins en partie, par des champs magnétiques et/ou électromagnétiques.

18. Structures fibreuses selon une des revendications 14 à 16, **caractérisées par le fait que** les particules flottantes ou déposées ont une ou plusieurs des formes de type couverture, particules, fibres, corps creux, corps creux sous forme de bulles et de mousse et fibres creuses.

19. Structures fibreuses selon une des revendications 1 à 18, **caractérisées par le fait que** les structures fibreuses contiennent des sorbants.

20. Matériau fibreux selon une des revendications 1 à 19, **caractérisé par le fait que** le matériau fibreux contient des acides humiques contenant des particules générées par la précipitation des acides humiques d'une teneur réduite en composants solubles dans l'eau sur un matériau porteur.

21. Procédé pour la fabrication de matériau fibreux selon les revendications 1 et 2, comprenant les procédures suivantes :
i) fabriquer une pâte principalement fibreuse et aqueuse à partir d'au moins un composant sous forme de fibres qui est couvert et/ou imprégné d'au moins une substance active, ou qui sera couvert et/ou imprégné, après la fabrication de la pâte principalement fibreuse et aqueuse, d'au moins une substance active, ou qui ne contient pas de substance active mais, en revanche, est présente dans la pâte principalement fibreuse et aqueuse avec au moins une substance active sous forme de particules et/ou des particules couvertes ou imprégnées d'une substance active,
ii) mélanger la pâte principalement fibreuse et aqueuse obtenue conformément au point i) avec au moins une autre pâte principalement fibreuse et aqueuse produite à partir d'au moins un autre composant sous forme de fibres qui ne contient pas de substance active, ou qui contient la même substance active comme la première pâte de fibres mais dans une quantité différente, ou bien qui contient une substance active différente de celle de la première pâte de fibres, et
iii) fabriquer le matériau fibreux à partir de ce mélange de pâtes principalement fibreuses et aqueuses selon les techniques usuelles.

22. Procédé selon la revendication 21, **caractérisé par le fait que** la pâte principalement fibreuse et aqueuse ajoutée au mélange conformément au point ii) contient une substance active sous forme de particules fixées sur les fibres, ladite substance active étant identique à ou différente de la substance active qui se trouve sur les fibres de la pâte principalement aqueuse décrite au point i).

23. Procédé selon la revendication 21 ou 22 pour la fabrication du matériau fibreux contenant au moins une des propriétés décrite au point c) et/ou point d) selon la revendication 1, comprenant la procédure suivante :
fabrication d'une pâte principalement fibreuse et aqueuse à partir d'au moins un composant sous forme de fibres qui est imprégné d'une matière auxiliaire capable de former des fixations ou qui ne contient pas de matière auxiliaire mais qui, en revanche, est présent dans la pâte principalement fibreuse et aqueuse avec au moins une matière auxiliaire capable de former des fixations dissoutes et/ou des particules couvertes ou imprégnées d'une matière auxiliaire capable de former des fixations, avec au moins un composant sous forme de matière auxiliaire pouvant avoir ou non des propriétés d'une substance active.

24. Procédé selon la revendication 23, **caractérisé par le fait que** la pâte principalement fibreuse et aqueuse ajoutée au mélange conformément au point ii) contient une substance active sous forme de particules fixées sur les fibres, ladite substance active étant identique à ou différente de la substance active qui se trouve sur les fibres de la pâte principalement aqueuse décrite au point i).

25. Procédé selon une des revendications 21 à 24, **caractérisé par le fait que** la pâte principalement fibreuse et aqueuse ajoutée au mélange conformément au point ii) contient des particules sous forme d' oxydes et/ou d'hydroxydes du zirkon, du titane, du hafnium, du niobium, du tantale, d'étain, du cérium, du silicium, d'aluminium, du fer, du manganèse, du molybdène, du tungstène ou du germanium ou leurs combinaisons, et que la substance active avec laquelle les fibres de la pâte principalement aqueuse sont couvertes et/ou imprégnées sont sélectionnées du groupe comprenant les résines solides capables de capter des ions, les résines liquides capables de capter des ions, les matières humiques, les matières anorganiques capables de capter des ions, les matières anorganiques capables de capter des métaux et des métalloïdes et leurs composés, les matières lipophiles capables d'absorber des huiles déversées dans l'eau à la suite d'une avarie, charbon actif, les métaux capables de former des amalgames, les matières capables de former des sulfures, les matières capables de former des mercaptides, les matières organiques capables de former des complexes avec des matières anorganiques, les hydroxydes peu solubles, les particules de carbone activé, les fibres de carbone activé, les carbones activés enrichis en azote, les carbones activés enrichis en groupes carboxylates, les carbones activés enrichis en groupes d'acide carboxylique, les carbones activés enrichis en groupes sulfonates, les carbones activés enrichis en groupes d'acide sulfonique, des carbones activés fullerènes et leurs dérivés, les zéolithes, les hydrures métalliques capables de stocker l'hydrogène, zinc métallique, les hydrures du groupe des platinoïdes, les huiles, cires ou résines enrichies en groupes carboxylates, les huiles, cires ou résines enrichies en groupes d'acide carboxylique, les huiles principalement aliphatiques à point d'ébullition élevé, les enzymes immobilisées, les phyllosilicates ou leurs combinaisons.

26. Procédé selon une des revendications 21 à 24 pour la fabrication de structures fibreuses selon la revendication 12, **caractérisé par le fait que**, soit pendant la fabrication des pâtes de fibres, soit après la fabrication des structures fibreuses, des particules et/ou des fibres sont ajoutées à ces structures fibreuses dont la densité effective est plus basse que celle du liquide traité, et que, soit pendant la fabrication des pâtes de fibres, soit après la fabrication des structures fibreuses, des particules et/ou des fibres sont ajoutées à ces structures fibreuses dont la densité effective et plus élevée que celle du liquide traité, les densités apparentes des particules et/ou fibres étant sélectionnées de sorte que la structure fibreuse immergée dans le liquide a une densité apparente qui correspond approximativement à celle du liquide à traiter.

27. Procédé selon une des revendications 21 à 24 pour la fabrication de structures fibreuses selon la revendication 12, **caractérisé par le fait que** des structures fibreuses avec une proportion de composants légers responsables de la flottation des structures fibreuses dans le liquide à traiter (structures fibreuses légères) et des structures fibreuses avec une proportion de composants lourds responsables de la sédimentation des structures fibreuses dans le liquide à traiter (structures fibreuses lourdes) sont jointes selon les techniques usuelles.

28. Procédé selon une des revendications 21 à 24 pour la fabrication de structures fibreuses selon la revendication 1, **caractérisé par le fait qu'**au moins une proportion des fibres couvertes et/ou imprégnées de substances actives et/ou des particules couvertes et/ou imprégnées de substances actives du total des fibres et/ou particules présentes dans lesdites structures fibreuses a été couverte de la substance active et/ou imprégnée de la substance active à la suite d'une réaction chimique et/ou physique pendant laquelle elles étaient entourées d'un fluide, ladite réaction n'ayant pas d'influence sur les autres proportions étant présentes sous forme de fibres et/ou particules et/ou ayant une influence différente, tout cela étant le résultat d'au moins une des procédures suivantes, à savoir
- la séparation pendant la réaction chimique et/ou physique des fibres et/ou des particules à couvrir de la substance active de cette manière des fibres et/ou des particules n'étant pas à couvrir de la substance active selon la méthode décrite et/ou
- par sélection de matières différentes pour la substance composant les fibres et/ou particules, et sélection de matières réactives adéquates pour la composition des fibres à couvrir de substances actives et/ou des particules à couvrir de substances actives pendant la réaction chimique et/ou physique.

29. Procédé selon une des revendications 21 à 24 pour la fabrication de structures fibreuses selon la revendication 1, **caractérisé par le fait que** les papiers, matériaux fibreux et/ou particules fibreuses contenant des substances actives consistent d'au moins un des composants des groupes des papiers, des matériaux fibreux, des particules fibreuses, desdites particules fibreuses dans leur état préalable, des suspensions de fibres, des fibres déshydratées, desdites fibres déshydratées dans leur état préalable qui contiennent au moins une substance active, leur charge en substances actives étant le résultat d'étapes de procédé séparées, et consistent des particules ou fibres d'une substance qui se compose principalement ou complètement de substances actives.

30. Procédé pour la fabrication de matériaux fibreux selon une des revendications 21 à 29, **caractérisé par le fait que** les papiers, les matériaux fibreux et les corps modelés fibreux sont fabriqués selon une des revendications 1 à 20
- en mélangeant au moins deux composants sous forme de fibres contenant des substances actives
- en mélangeant au moins un composant sous forme de fibres contenant des substances actives avec au moins un composant sous forme de fibres ne contenant pas de substances actives
- en mélangeant au moins un composant sous forme de fibres contenant des substances actives avec au moins un composant sous forme de particules contenant des substances actives
- en mélangeant au moins un composant sous forme de fibres contenant des substances actives avec au moins un composant sous forme de particules ne contenant pas de substances actives
- en mélangeant au moins un composant sous forme de fibres ne contenant pas de substances actives avec au moins un composant sous forme de particules contenant des substances actives,
le composant sous forme de fibres et/ou le composant sous forme de particules pouvant consister complètement ou non d'une substance active.

31. Procédé pour la fabrication de corps modelés fibreux selon la revendication 10, **caractérisé par le fait que**, pour fabriquer lesdites corps modelés fibreux, des papiers et/ou des matériaux fibreux contenant des substances actives et/ou des papiers et/ou des matériaux fibreux ne contenant pas de substances actives sont triturés et/ou concassés et finalement modelés pour obtenir de nouveaux corps.

32. Procédé pour la fabrication de structures fibreuses contenant matériau fibreux selon une des revendications 1 à 20, **caractérisé par le fait que** le matériau fibreux est attaché à et/ou incorporé dans des moyens d'utilité.

33. Utilisation des matériaux fibreux selon une des revendications 1 à 20 dans la production de denrées alimentaires, la production de produits stimulants, la production de boissons, l'adoucissement de l'eau, la purification de l'eau, notamment la purification de l'eau potable, des eaux souterraines, des eaux de mines, des eaux usées, des eaux de bain, des eaux industrielles, des eaux venant de dépôts de déchets et des eaux de surface, l'évacuation des huiles déversées dans les eaux de surface suite à des avaries, les procédés de nettoyage dans l'industrie, notamment dans l'industrie chimique, l'industrie de produits stimulants et de denrées, dans l'industrie métallurgique, pour l'assainissement et la surveillance des sites contaminés et des dépôts de déchets dangereux, pour l'assainissement et la surveillance des sites pollués, pour la décontamination des sols et des sédiments, dans l'exploitation de matières premières, l'élevage d'animaux, notamment la pisciculture, la conchyliculture et l'élevage de perles, d'écrevisses, de crevettes et d'autres crustacés, dans l'élevage d'animaux domestiques et la culture de plantes d'appartement, notamment l'élevage de poissons d'aquarium, dans l'élevage et l'engraissement d'animaux, l'horticulture, l'agriculture et l'exploitation de substances de base, métaux, métalloïdes et métaux précieux, ou pour la purification ou l'amélioration de la digestibilité ou du goût d'eaux, de boissons ou de denrées alimentaires.
